(19) Europäisches Patentamt
European Patent Office
Office européen des brevets

(11) **EP 2 897 811 B1**

(12) **EUROPÄISCHE PATENTSCHRIFT**

(45) Veröffentlichungstag und Bekanntmachung des Hinweises auf die Patenterteilung:
**30.05.2018 Patentblatt 2018/22**

(21) Anmeldenummer: **13759484.2**

(22) Anmeldetag: **03.09.2013**

(51) Int Cl.:
*B42D 25/23* (2014.01)     *B42D 25/29* (2014.01)
*B42D 25/328* (2014.01)     *B42D 25/00* (2014.01)
*G02B 5/18* (2006.01)

(86) Internationale Anmeldenummer:
**PCT/EP2013/068170**

(87) Internationale Veröffentlichungsnummer:
**WO 2014/033318 (06.03.2014 Gazette 2014/10)**

(54) **SICHERHEITSELEMENT SOWIE SICHERHEITSDOKUMENT**

SECURITY ELEMENT AND SECURITY DOCUMENT

ÉLÉMENT DE SÉCURITÉ ET DOCUMENT DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2012 DE 102012108170**

(43) Veröffentlichungstag der Anmeldung:
**29.07.2015 Patentblatt 2015/31**

(73) Patentinhaber:
• **OVD Kinegram AG**
  **6301 Zug (CH)**
• **Bundesdruckerei GmbH**
  **10969 Berlin (DE)**

(72) Erfinder:
• **FISCHER, Jörg**
  **13053 Berlin (DE)**
• **KULIKOVSKA, Olga**
  **14165 Berlin (DE)**

• **LEOPOLD, André**
  **10119 Berlin (DE)**
• **MADER, Sebastian**
  **6340 Baar (CH)**
• **TOMPKIN, Wayne Robert**
  **CH-5400 Baden (CH)**
• **WALTER, Harald**
  **CH-8810 Horgen (CH)**

(74) Vertreter: **Louis Pöhlau Lohrentz**
**Patentanwälte**
**Postfach 30 55**
**90014 Nürnberg (DE)**

(56) Entgegenhaltungen:
**EP-A2- 0 075 674      WO-A1-02/091041**
**WO-A2-2006/029857      WO-A2-2006/056089**
**WO-A2-2006/061171      DE-A1-102008 024 147**
**DE-B3-102009 048 870**

EP 2 897 811 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Sicherheitselement sowie ein Sicherheitsdokument mit einem Sicherheitselement.

Es ist bekannt, Banknoten mit Wasserzeichen oder Sicherheitsfäden auszustatten. Diese Sicherheitselemente stellen ein im Durchlicht erkennbares Sicherheitsmerkmal bereit. Zur Überprüfung dieser Sicherheitsmerkmale wird die Banknote zwischen einer Lichtquelle, beispielsweise eine künstliche Lichtquelle wie einer Neonröhre oder Glühbirne oder einer natürliche Lichtquelle, wie beispielsweise der Sonne, und dem Betrachter angeordnet und das Erscheinungsbild der Banknote bei einer derartigen Durchlichtbetrachtung überprüft. Bei dieser Betrachtungsweise wird durch die Veränderung der Transmissivität des Sicherheitsdokuments in dem mit dem Wasserzeichen bzw. Sicherheitsfaden belegten Bereich das durch die Banknote transmittierte Licht in unterschiedlichen Bereichen der Banknote unterschiedlich abgeschwächt, sodass ein entsprechender Kontrast für den menschlichen Betrachter als Sicherheitsmerkmal erkennbar wird.

Der Erfindung liegt nun die Aufgabenstellung zugrunde, ein Sicherheitselement bzw. Sicherheitsdokument mit erhöhter Fälschungssicherheit und/oder leichterer Verifizierbarkeit anzugeben.

WO 2006/056089 A2 beschreibt ein Sicherheitsdokument mit einer Lichtquelle und einer Lichtverarbeitungsvorrichtung.

WO 2006/061171 A2 beschreibt ein optisch variables Element mit elektrisch aktiver Schicht.

WO 2006/029857 A2 beschreibt ein Sicherheitsdokument mit elektrisch gesteuertem Anzeigenelement.

DE 10 2009 048870 B3 beschreibt ein Sicherheitselement zur Echtheitserkennung.

Diese Aufgabe wird gelöst durch ein Sicherheitselement nach Anspruch 1.

Das Sicherheitselement wird beispielsweise in einem Verfahren hergestellt, bei welchem ein erstes Teilelement bereitgestellt wird, welches ein oder mehrere Licht emittierende Elemente aufweist, die bei Aktivierung Licht abstrahlen und insbesondere jeweils von einem selbst leuchtenden elektrisch betriebenen Anzeigenelement gebildet sind, bei dem ein zweites Teilelement bereitgestellt wird, welches ein oder mehrere transmissive Beugungsstrukturen aufweist, und bei dem das erste Teilelement und das zweite Teilelement derart zueinander angeordnet werden, dass zumindest ein Teil des von den aktivierten ein oder mehreren Licht emittierenden Elementen abgestrahlten Lichts durch zumindest einen Teilbereich der transmissiven Beugungsstruktur transmittiert.

Ein solches Sicherheitselement zeichnet sich durch eine hohe Fälschungssicherheit, eine leichte und schnelle Erkennbarkeit des Sicherheitsmerkmals und durch ein ansprechendes optisches Erscheinungsbild aus.

Vorzugsweise weist das Sicherheitselement ein zumindest bereichsweise transparentes Substrat auf, in dem die ein oder mehreren transmissiven Beugungsstrukturen ausgebildet sein. Das Substrat ist vorzugsweise oberhalb der ein oder mehreren Licht emittierenden Elemente angeordnet.

Unter einem transparenten Substrat wird hierbei ein ein- oder mehrschichtiger Körper verstanden, der im ersten Bereich zumindest bereichsweise für das von den ein oder mehreren Licht emittierenden Elementen abgestrahlte Licht durchlässig ist und insbesondere bei zumindest einem Kippwinkel eine Transmissivität für zumindest eine Wellenlänge aus dem Wellenlängenbereich von 460 nm bis 660 nm von mehr als 20%, insbesondere mehr als 50% aufweist. Bevorzugt ist bei zumindest einem Kippwinkel im Wellenlängenbereich von 460 nm bis 660 nm die Transmissivität mehr als 50% und weiter bevorzugt in mindestens der Hälfte des Wellenlängenbereichs von 460 nm bis 660 nm mehr als 80%. Die ein oder mehreren Licht emittierenden Elemente strahlen vorzugsweise bei Aktivierung Licht einer Farbe, mehrfarbiges Licht oder weißes Licht ab. Die Licht emittierenden Elemente können hierbei in zwei oder mehrere Gruppen von Licht emittierenden Elementen eingeteilt sein, welche ein Echtfarbenbild realisieren. Insbesondere können derartige Gruppen von Licht emittierenden Elementen als Aktiv-Matrix (AM) oder Passiv-Matrix (PM) Display ausgelegt sein. So kann es vorgesehen sein, dass eine Gruppe von Licht emittierenden Elementen bei Aktivierung rotes Licht emittiert, eine weitere Gruppe von Licht emittierenden Elementen bei Aktivierung grünes Licht emittiert und eine weitere Gruppe von Licht emittierenden Elementen bei Aktivierung blaues Licht emittiert und durch additive Farbmischung des von Licht emittierenden Elementen unterschiedlicher Gruppen ausgesendetes Lichts die entsprechende Echtfarbe des entsprechenden Echtfarbenbilds generiert wird. Insbesondere bei derartiger Ausgestaltung der Licht emittierenden Elemente ist es vorteilhaft, wenn das transparente Substrat über den gesamten Wellenlängenbereich der eingesetzten Licht emittierenden Elemente eine Transmissivität von mehr als 20%, insbesondere von mehr als 50% aufweist, und so beispielsweise über den gesamten Wellenlängenbereich von 460 nm bis 660 nm die vorgenannte Transparenz aufweist. Falls die ein oder mehrere Licht emittierenden Elemente lediglich Licht eines begrenzten Wellenlängenbereichs aussenden, ist es möglich, dass das transparente Substrat die vorgenannte Transmissivität lediglich in diesem Wellenlängenbereich, insbesondere in dem Wellenlängenbereich einer einzelnen Farbe besitzt.

Vorzugsweise sind die transmissiven Beugungsstrukturen so ausgestaltet, dass sie die farbige Erscheinung, die spektrale Zusammensetzung, den Helligkeitskontrast, die Verteilung der Abstrahlwinkel und/oder die Strahlformung von ein oder mehreren der Licht emittierenden Elementen beim Kippen und/oder Drehen des Sicherheitselements ändern. Beispielsweise können auch Durchlichteffekte in Nullter Ordnung mit Durchlichteffekten in Erster Ordnung oder höherer Ordnung kombiniert werden.

Somit sind ein oder mehrere der transmissiven Beugungsstrukturen beispielsweise so ausgestaltet, dass die mit ihnen belegten Teilbereiche des ersten Bereichs, welche in Überlappung mit einem der Licht emittierenden Elemente angeordnet sind, bei Aktivierung ein oder mehrerer der Licht emittierenden Elemente, beim Verkippen und/oder Verdrehen des Sicherheitselements einen für den menschlichen Betrachter erkennbaren Farbveränderungseffekt als optisches Sicherheitsmerkmal zeigen.

Unter Transmittierung durch einen Teilbereich der ein oder mehreren transparenten Beugungsstrukturen wird hierbei verstanden, dass das Licht durch zumindest einen Teil der mit den ein oder mehreren transmissiven Beugungsstrukturen belegten Bereiche transmittiert, und damit durch zumindest einen Teil der transmissiven Beugungsstrukturen transmittiert und bei der Transmission insbesondere entsprechend von zumindest einem Teil der transmissiven Beugungsstruktur beeinflusst wird.

Das Sicherheitselement weist vorzugsweise bei senkrechter Betrachtung in diesem Teilbereich ein farbneutrales und/oder kontrastneutrales Verhalten auf und zeigt beim Verkippen und/oder Verdrehen einen oder mehrere der oben beschriebenen Effekte. Alternativ ist es auch möglich, dass durch die ein oder mehreren transmissiven Beugungsstrukturen auch der umgedrehte Effekt generiert wird, d. h. das Sicherheitselement ist bei gekippter oder verdrehter Betrachtung farbneutral und/oder kontrastneutral und zeigt bei senkrechter Betrachtung einen oder mehrere der oben beschriebenen Effekte.

Eine weitere Ausgestaltungsform sieht vor, dass die transmissiven Beugungsstrukturen immer einen oder mehrere der oben beschriebenen Effekte zeigt, aber dass die Effekte bei gekippter Betrachtung oder verdrehter Betrachtung sich von den Effekten bei senkrechter Betrachtung unterscheiden.

Die transmissiven Beugungsstrukturen werden vorzugsweise aus einer oder mehrerer der folgenden Klassen von transmissiven Beugungsstrukturen ausgewählt:

Eine erste Klasse von transmissiven Beugungsstrukturen weist als Beugungsstruktur eine Reliefstruktur auf, welche vorzugsweise ein durch die Parameter Reliefform, Relieftiefe, Gitterperiode und Azimutwinkel definiertes Gitter ist, wobei die Relieftiefe der Reliefstruktur mehr als 200 nm, insbesondere mehr als 300 nm und weiter bevorzugt mehr als 400 nm beträgt und/oder die Relieftiefe der Reliefstruktur kleiner als 1700 nm, insbesondere kleiner als 1200 nm, bevorzugt kleiner als 1000 nm beträgt. Weiter weist die Reliefstruktur vorzugsweise eine Gitterperiode zwischen 500 nm und 1500 nm auf, insbesondere zwischen 600 und 1400 nm auf.

Vorzugsweise handelt es sich bei der Reliefstruktur um ein Beugungsgitter, welches im Bereich der jeweiligen Reliefstruktur bezüglich der Parameter Reliefform, Relieftiefe, Gitterperiode und Azimutwinkel konstant ist. Es ist jedoch auch möglich, dass ein oder mehrere dieser Parameter innerhalb des Bereichs variiert ist, in dem die Reliefstruktur vorgesehen ist.

Die Strukturelemente der Reliefstruktur können eine sinusförmige, dreieckige rechteckige, symmetrische oder asymmetrische, Reliefform besitzen.

Die Reliefstruktur wird hierbei vorzugsweise so gewählt, dass das durch die Reliefstruktur in der nullten Ordnung transmittierte Licht in dem Wellenlängenbereich von 460 bis 660 nm oder zumindest in dem Wellenlängenbereich des Lichts, welches bei Aktivierung von ein oder mehreren der Licht emittierenden Elemente abgestrahlt wird, weitgehend nicht in seinem Farbspektrum verändert wird und der Transmissionsgrad des in der nullten Ordnung im Bereich der Reliefstruktur transmittierte Licht durch die oberhalb der ein oder mehreren Licht emittierenden Elemente angeordneten Schichten des Sicherheitselements größer als 30%, insbesondere größer als 50% ist.

Vorzugsweise ist die Reliefstruktur hierbei in eine Oberfläche eines transparenten Substrats abgeformt, insbesondere in die Oberfläche der Oberseite des Sicherheitselements abgeformt.

Weiter ist es alternativ auch möglich, die transmissive Beugungsstruktur als eine zwischen zwei transparenten Schichten des Sicherheitselements abgeformte Reliefstruktur auszubilden. Vorzugsweise unterscheidet sich hierbei der Brechungsindex dieser Schichten um mindestens 0,1 und besonders bevorzugt um mindestens 0,2.

Weiter ist es vorteilhaft, wenn eine der zwei transparenten Schichten eine polymere Schicht, insbesondere eine Replizierlackschicht, und die andere der zwei transparenten Schichten eine poröse Schicht ist, wobei die Poren der porösen Schicht insbesondere mit Luft gefüllt sind. Bei der porösen Schicht kann es sich um eine offenporige oder geschlossenporige Schicht handeln. Durch die mikroporöse Ausformung der Schicht ist es hierbei möglich, eine Schicht bereitzustellen, deren Brechungsindex kleiner als 1,3 ist und insbesondere nahe dem Brechungsindex von Luft liegt.

Vorzugsweise liegt hierbei die Schichtdicke der porösen Schicht zwischen 2 und 50 $\mu$m, bevorzugt zwischen 2 und 20 $\mu$m.

Gemäß einer weiteren bevorzugten Ausführungsform sind die zwei transparenten Schichten zwei unterschiedliche Schichten ausgewählt aus: polymere Schicht, insbesondere Replizierlackschicht, HRI (HRI = High Refraction Index) oder LRI (LRI = Low Refraction Index) - Schicht, welche insbesondere eine Schichtdicke zwischen 50 und 300 nm, insbesondere 75 und 150 nm und bevorzugt zwischen 75 und 125 nm aufweist, und metallische Schicht, insbesondere einer Schichtdicke im Bereich von 2 nm bis 20 nm. Als HRI-Schicht werden bevorzugt Schichten bestehend aus einem transparenten hochbrechenden Material wie $TiO_2$ ZnS, $ZrO_2$ oder $Si_3N_4$ eingesetzt. Als niedrigbrechende, transparente Materialien für eine LRI-Schicht werden vorzugsweise $MgF_2$ oder $SiO_2$ verwendet.

Ist die Reliefstruktur in die Oberfläche der Oberseite des Sicherheitselements abgeformt oder in eine Grenzfläche zwischen einer transparenten Schicht und der oben beschriebenen porösen Schicht abgeformt, so beträgt die Relieftiefe vorzugsweise zwischen 900 nm und 1500 nm, weiter bevorzugt zwischen 900 und 1200 nm. In den sonstigen Fällen beträgt die Relieftiefe bevorzugt zwischen 300 und 700 nm, weiter bevorzugt zwischen 400 nm und 700 nm.

Die Replizierlackschicht besteht vorzugsweise aus einer thermoplastischen oder UV-härtbaren Lackschicht.

Die transmissiven Beugungsstrukturen einer zweiten Klasse von transmissiven Beugungsstrukturen sind wie folgt ausgebildet: Die transmissive Beugungsstruktur wird von einer Vielzahl von Elementen gebildet, wobei die Elemente jeweils zumindest eine im Wesentlichen parallel zu einer Grundebene angeordnete Elementfläche aufweisen, die Elemente in Bezug auf zumindest eine parallel zur Grundebene verlaufende erste Richtung gegeneinander versetzt angeordnet sind und die Elementflächen benachbarter Elemente in einer senkrecht zur Grundebene stehenden Richtung gemäß einer von der zumindest einen ersten Richtung abhängigen Variationsfunktion beabstandet sind mit einem ersten Abstand oder einem Vielfachen des ersten Abstands. Die Variationsfunktion ist vorzugsweise eine periodische Funktion. Weiter sind vorzugsweise in jeder Periode der Variationsfunktion die Elementflächen zumindest zweier in der zumindest einen ersten Richtung aufeinander folgender Elemente voneinander mit dem ersten Abstand beabstandet. Die Periode ist hierbei vorzugsweise kleiner als 3 $\mu$m, insbesondere 2 $\mu$m, und größer als 750 nm, insbesondere 1 $\mu$m gewählt. Vorzugsweise umfasst jede Periode 3 bis 10, insbesondere 3 bis 6 aufeinanderfolgende Elemente. Vorzugsweise beträgt der erste Abstand zwischen 50 und 500 nm, insbesondere zwischen 100 und 300 nm.

Es hat sich gezeigt, dass mittels derartiger Strukturen eine besonders starke Änderung des Farbspektrums des durch die transmissive Beugungsstruktur transmittierten Lichts erzielt werden kann. Durch die Periode und die Variationsfunktion wird hierbei der Kippwinkelbereich eingestellt, in welchem durch die transmissive Beugungsstruktur eine Veränderung des Farbspektrums bewirkt wird. Durch die Parameter erster Abstand und Periode wird der Spektralbereich festgelegt, in welchem durch die transmissive Beugungsstruktur eine Veränderung des Farbspektrums des von ein oder mehreren der Licht emittierenden Elemente abgestrahlten Lichts bewirkt wird.

Das Sicherheitselement kann hierbei eine transparente Schicht aufweisen, in welcher die Elemente eingebettet sind. Die Elemente selbst werden hierbei von einem Material gebildet, welches sich vom Material der transparenten Schicht unterscheidet, sich insbesondere im Brechungsindex um mehr als 0,1 unterscheidet. Weiter ist es auch möglich, dass die Elemente von Teilbereichen einer transparenten Schicht des Sicherheitselements gebildet sind und die Elementflächen zumindest einen Teilbereich einer Oberfläche dieser Schicht ausbilden und somit ein in dieser Schicht ausgebildetes Oberflächenrelief definieren.

Als Variationsfunktion werden vorzugsweise symmetrische treppenförmige Funktionen eingesetzt, welche beispielsweise eine Abfolge von Stufenpyramiden beschreiben. Es ist jedoch weiter auch vorteilhaft, als Variationsfunktion eine innerhalb einer Periode asymmetrische Funktion einzusetzen.

Eine dritte Klasse von transmissiven Beugungsstrukturen wird von speziellen durch die Parameter Reliefform, Relieftiefe, Gitterperiode und Azimutwinkel definierten Beugungsgitter nullter Ordnung gebildet. Diese Beugungsgitter nullter Ordnung zeichnen sich dadurch aus, dass sie vor allem die direkte Transmission, d.h. die Transmission in nullter Ordnung, verändern. Insbesondere verändern sie das Farbspektrum des direkt transmittierten Lichts beim Verkippen und/oder Verdrehen des Sicherheitselements. Diese Beugungsgitter weisen insbesondere eine Relieftiefe zwischen 100 nm und 500 nm, bevorzugt zwischen 300 nm und 500 nm und eine Gitterperiode zwischen 250 nm und 700 nm, bevorzugt zwischen 300 nm und 600 nm auf. Die Reliefstruktur des Beugungsgitters ist hierbei vorzugsweise zwischen einer transparenten Schicht und einer transparenten Wellenleiterschicht, insbesondere HRI-Schicht (HRI = High Refraction Index) abgeformt. Die Dicke der HRI-Schicht beträgt hierbei typischerweise 50 nm bis 250 nm, vorzugsweise zwischen 80 und 250 nm, insbesondere zwischen 100 und 220 nm. Diese HRI-Schicht ist deutlich dicker als die HRI-Dicke, die typischerweise für Diffraktionsgitter in Reflexion verwendet wird. Der Dickenunterschied ist ca. ein Faktor zwei bis drei Die HRI-Schicht fungiert als Wellenleiter, in welchen das Beugungsgitter Licht ein- und wieder auskoppelt. Die Parameter des Beugungsgitters sowie die Dicke der HRI-Schicht, die Brechungsindizes der verschiedenen Materialien und der Beleuchtungs- und Azimutwinkel bestimmen die Resonanzbedingung des nullter Ordnung Beugungsgitters und damit das transmittierte Farbspektrum. Beugungsgitter nullter Ordnung werden teils auch als resonante Gitter oder geführter-mode resonante Filter bezeichnet.

Eine vierte Klasse von transmissiven Beugungsstrukturen wird von diffraktiven strahlformenden Strukturen gebildet. Diese transmissiven Beugungsstrukturen werden vorzugsweise von einem Volumenhologramm, einer Blaze-Struktur, einer diffraktiven Linse oder einem Feld von diffraktiven Linsen, insbesondere einer Fresnel-Linsenstruktur oder einem Feld von Fresnel-Linsenstrukturen, oder von diffraktiven Strukturen oder einem Feld von diffraktiven Strukturen gebildet, welche linsenähnlich strahlformende Eigenschaften besitzen. Unter einem Feld von Strukturen wird hierbei eine Vielzahl von Strukturen verstanden, welche gemäß einem ein- oder zweidimensionalen Raster angeordnet sind.

Vorzugsweise wird das Sicherheitselement hierbei so ausgestaltet, insbesondere durch entsprechende Ausgestaltung der transmissiven Beugungsstrukturen wie oben beschrieben, dass der folgende Effekt generiert wird: Wenn die ein oder mehreren Licht emittierenden Elemente nicht aktiviert sind, so ist kein Motiv erkennbar. Wenn die ein oder mehreren Licht emittierenden Elemente oder ein Teil der Licht emittierenden Elemente aktiviert wird, dann ist für den menschlichen Betrachter das von diesen emittierte Licht bei senkrechter Betrachtung sichtbar, wobei die mit den ein oder mehreren transmissiven Beugungsstrukturen belegten Bereiche ggf. eine geringfügig geringere Helligkeit als die umgebenden Bereiche aufweisen können. Wenn das Sicherheitselement aus der senkrechten Betrachtungsrichtung um einen bestimmten vorgegebenen Winkel gekippt wird, dann wird ein Motiv sichtbar, beispielsweise ein hell leuchtendes "OK" gegen einen geringer hell rot leuchtenden Hintergrund. Bei der Drehung des Sicherheitselements in der vom Sicherheitselement aufgespannten Ebene kann sich dann weiter auch der Kontrast ändern, beispielsweise der Hintergrund heller als das Motiv erscheinen.

Vorzugsweise sind jedem Licht emittierenden Element eine dieser transmissiven Beugungsstrukturen zugeordnet, welches die Abstrahlcharakteristik des jeweiligen Licht emittierenden Elements modifiziert. Dies ist besonders von Vorteil, wenn die Licht emittierenden Elemente eine pixelierte leuchtende Fläche ausbilden und jedes dieser Pixel als Lambertscher Strahler betrachtet werden kann. In diesem Fall kann die Abstrahlcharakteristik einzelner Pixel mittels zugeordneter transmissiver Beugungsstrukturen modifiziert werden, wozu die transmissiven Beugungsstrukturen mit den Pixeln räumlich korreliert werden.

Bevorzugt weist so der erste Bereich ein oder mehrere Zonen auf, welche bevorzugt gemäß einem ein- oder zweidimensionalen Raster angeordnet sind, wobei in jeder der Zonen eines der Licht emittierenden Elemente angeordnet ist, sowie in jeder der Zonen mindestens eine der transmissiven Beugungsstrukturen angeordnet ist. So können die transmissiven Beugungsstrukturen in einem Raster über die Fläche eines Displays aus einer Vielzahl von Licht emittierenden Elementen verteilt sein, wobei dieses Raster mit dem Pixelraster des Displays korreliert. Das Display kann z.B. ein Aktiv-Matrix (AM) oder Passiv-Matrix (PM) Display sein.

Vorzugsweise weist das Sicherheitselement weiter eine Steuereinrichtung auf, welche die ein oder mehreren Licht emittierenden Elemente ansteuert. Die ein oder mehreren Licht emittierenden Elemente können so beispielsweise ein einfarbiges oder mehrfarbiges Display ausbilden, beispielsweise ein RGB-Display ausbilden. Die Steuereinrichtung ist vorzugsweise hierbei so ausgestaltet, dass sie die ein oder mehreren Licht emittierenden Elemente zur Generierung ein oder mehrerer unterschiedlicher Motive ansteuert, beispielsweise jeweils mehrere der ein oder mehreren Licht emittierenden Elemente beispielsweise zur Generierung eines gelben Sterns, eines grünen Quadrats oder eines roten Kreises ansteuert. Die Steuereinrichtung kann hierbei die ein oder mehreren Licht emittierenden Elemente derart ansteuern, dass diese Motive gleichzeitig oder aufeinander abfolgend erscheinen. Durch die wie oben beschriebene Korrelation des Rasters, gemäß dem die Licht emittierenden Elemente angeordnet sind, bzw. des Pixelrasters des Displays, mit den Zonen, insbesondere den jeweils in der Zone vorgesehenen transmissiven Beugungsstrukturen, können für unterschiedliche dieser ein oder mehreren Licht emittierenden Elementen unterschiedliche der oben beschriebenen optisch variablen Effekte bereitgestellt werden.

Vorzugsweise werden die transmissiven Beugungsstrukturen hierbei von einfachen Liniengittern ausgebildet. Je nach Ausrichtung der Gitterlinien der Liniengitter wird der Abstrahlwinkel mindestens in einer Richtung/Ebene geändert. Je nach Position und Winkel der Verteilungsraster der diffraktiven Bereiche können unterschiedliche Winkelverteilungen der Abstrahlung realisiert werden. Durch die Variation der Ausrichtung der Gitterlinien können hierbei linsenähnliche Effekte erzeugt werden.

Vorzugsweise umfassen so ein oder mehrere der in den Zonen angeordneten transmissiven Beugungsstrukturen eine Reliefstruktur mit einer Vielzahl von im Wesentlichen parallel zueinander angeordneten Gitterlinien, wobei diese Gitterlinien in einem zentralen Bereich der jeweiligen Zone, vorzugsweise in einem Abstrahlbereich des der Zone zugeordneten Licht emittierenden Elements, vorgesehen sind, und in einem Randbereich der Zone, insbesondere in einem Bereich der Zone, in dem das zugeordnete Licht emittierende Element kein Licht abstrahlt, nicht vorgesehen sind, oder umgekehrt.

Vorzugsweise wird hierbei die Orientierung der Gitterlinien in Teilbereichen der Zonen unterschiedlich gewählt und/oder von Zone zu Zone unterschiedlich gewählt.

Durch eine derartige Ausgestaltung und Anordnung der transmissiven Beugungsstrukturen werden interessante, linsenähnlich strahlformende Effekte generiert, welche beispielsweise von "normalen" Linsen nicht nachgeahmt werden können, wodurch zusätzliche Sicherheitsmerkmale bereitgestellt werden können und/oder die Erkennbarkeit der von dem Sicherheitselement bereitgestellten Sicherheitsmerkmale weiter verbessert werden kann. Ferner weisen die strahlformenden transmissiven Beugungsstrukturen eine viel geringere Tiefe als "normale" refraktiv wirkende Linsen oder auch refraktiv wirkende Mikrolinsen auf, weshalb sie einfacher in Sicherheitsdokumente integriert werden können.

Gemäß eines weiteren bevorzugten Ausführungsbeispiels sind ein oder mehrere in den Zonen angeordnete transmissive Beugungsstrukturen als Reliefstrukturen einer diffraktiven Linse, insbesondere einer Fresnel-Linse, oder eines Kreisgitters ausgeformt. Hierdurch ist es möglich, die Abstrahlcharakteristik der Licht emittierenden Elemente zu verändern und diese insbesondere für oberhalb dieser transmissiven Beugungsstrukturen angeordneten weiteren transmissiven Beugungsstrukturen zu optimieren.

Gemäß eines bevorzugten Ausführungsbeispiels sind transmissive Beugungsstrukturen nicht nur nebeneinander, sondern übereinander liegend angeordnet, bezogen auf eine senkrecht auf der von der Rückseite des Sicherheitselements aufgespannten Ebene stehende Richtung. Besonders vorteilhaft ist hierbei, wenn strahlformende Beugungsstrukturen, insbesondere transmissive Beugungsstrukturen der oben beschriebenen vierten Klasse von Beugungsstrukturen und Effekt generierende transmissive Beugungsstrukturen, insbesondere Beugungsstrukturen der ersten, zweiten und/oder dritten Klasse von Beugungsstrukturen übereinander liegend angeordnet sind, bezogen auf eine senkrecht auf der von der Rückseite des Sicherheitselements aufgespannten Ebene stehende Richtung.

Bei den oben beschriebenen Ausführungsformen wird hierbei insbesondere der Vorteil erzielt, dass die Fälschungssicherheit des Sicherheitselements deutlich erhöht wird. So ist es beispielsweise erforderlich, die Beabstandung und Anordnung der Licht emittierenden Elemente sowie die optische Charakteristik und Anordnung der ein oder mehreren transmissiven Beugungsstrukturen entsprechend aufeinander abzustimmen, um den gewünschten optischen Effekt zu erzielen. Bereits bei geringen Abweichungen kann sich hierbei für den menschlichen Betrachter ein deutlich abweichender Betrachtungseindruck ergeben, sodass Fälschungsversuche unmittelbar erkennbar werden.

Gemäß eines bevorzugten Ausführungsbeispiels der Erfindung sind ein oder mehrere ein oder mehrere Motive ausbildende Musterbereiche mit ein oder mehreren der transmissiven Beugungsstrukturen insbesondere vollflächig belegt. Weiter ist ein die ein oder mehreren Musterbereiche vorzugsweise umschließender Hintergrundbereich nicht mit den ein oder mehreren transmissiven Beugungsstrukturen belegt. Sowohl in dem Hintergrundbereich als auch in dem Musterbereich sind ein oder mehrere der ein oder mehreren Licht emittierenden Elemente vorgesehen. Vorzugsweise bedecken so die transmissiven Beugungsstrukturen lediglich einen, in Form von ein oder mehreren Motiven ausgeformten musterförmigen Teilbereich des von den ein oder mehreren Licht emittierenden Elemente beleuchteten Bereichs. In einer ersten Betrachtungssituation ist so für den Betrachter als Sicherheitsmerkmal lediglich die Flächenausformung und/oder Farbgebung dieser beleuchteten Flächen sichtbar. Verkippt oder verdreht der Betrachter das Sicherheitselement, so wird ein Kontrast zwischen Hintergrundbereichen und Musterbereichen sichtbar.

Vorzugsweise sind die ein oder mehreren transmissiven Beugungsstrukturen so ausgelegt, dass, wenn die ein oder mehreren Licht emittierenden Elemente deaktiviert sind, dieser Effekt nicht generiert wird und insbesondere ein inverser Effekt generiert wird, d.h. bei senkrechter Betrachtung beispielsweise die Musterbereiche und damit die ein oder mehreren Motive erkennbar sind, und bei Verkippen oder Verdrehen die Musterbereiche und damit die ein oder mehreren Motive nicht mehr sichtbar sind.

Gemäß einem weiteren bevorzugten Ausführungsbeispiel der Erfindung sind in dem ersten Bereich zwei oder mehr unterschiedliche transmissive Beugungsstrukturen angeordnet.

Vorzugsweise sind diese unterschiedlichen transmissiven Beugungsstrukturen hierbei so ausgelegt, dass sie beim Verkippen und/oder Verdrehen des Sicherheitselements unterschiedliche Farbänderungs- und/oder Helligkeitsänderungseffekte zeigen, sich insbesondere in Bezug auf den Kippwinkel, unter dem eine Farbe generiert wird, oder in Bezug auf den Farbwert, der unter einem bestimmten Kippwinkel generiert wird, unterscheiden. Besonders vorteilhaft ist es auch hier, mehrere Licht emittierende Elemente vorzusehen, welche zur Generierung unterschiedlicher Bilder eingesetzt werden können. So ist es beispielsweise möglich, Licht emittierende Elemente zu verwenden, welche Licht unterschiedlicher Grundfarben bei Aktivierung abstrahlen, beispielsweise rotes, grünes und blaues Licht emittierende Elemente vorzusehen. Hierdurch kann dann beispielsweise der Effekt generiert werden, dass drei unterschiedliche Bilder unter drei unterschiedlichen Winkeln sichtbar sind, und ähnliche Effekte.

Durch die Verwendung von zwei oder mehr unterschiedlichen transmissiven Beugungsstrukturen lassen sich, insbesondere auch in Kombination mit einer vollflächig oder bereichsweise überlappenden Anordnung einer oder mehrerer der Licht emittierenden Elemente, eine Vielzahl einprägsamer und überraschender Sicherheitsmerkmale realisieren, wie auch im Folgenden beschrieben.

Gemäß der Erfindung weist der erste Bereich ein oder mehrere erste Zonen auf, die mit einer ersten der transmissiven Beugungsstrukturen belegt sind, und ein oder mehrere zweiten Zonen auf, die mit einer zweiten der transmissiven Beugungsstrukturen belegt sind. Die ersten transmissiven Beugungsstrukturen unterscheiden sich hierbei von den zweiten transmissiven Beugungsstrukturen. Die erste Zone oder die ersten Zonen sind hierbei jeweils vorzugsweise vollflächig mit der ersten Beugungsstruktur belegt. Die zweite Zone oder die zweiten Zonen sind hierbei jeweils vorzugsweise vollflächig mit der zweiten transmissiven Beugungsstruktur belegt.

Weiter ist es auch möglich, dass der erste Bereich neben den ein oder mehreren ersten und zweiten Zonen noch weitere Zonen aufweist, die mit weiteren der ein oder mehreren transmissiven Beugungsstrukturen belegt sind, die sich von der ersten und zweiten Beugungsstruktur unterscheiden. Vorzugsweise weist der erste Bereich so noch ein oder mehrere dritte Zonen und/oder ein oder mehrere vierte Zonen auf, wobei die dritten Zonen mit einer dritten der ein oder mehreren transmissiven Beugungsstrukturen bzw. die vierten Zonen mit einer vierten der ein oder mehreren transmissiven Beugungsstrukturen belegt sind. Die erste, zweite, dritte und ggf. vierte transmissive Beugungsstruktur unterscheiden sich hierbei jeweils wechselseitig voneinander.

Die erste und die zweite transmissive Beugungsstruktur unterscheiden sich vorzugsweise durch ein oder mehrere ihrer Strukturparameter und/oder durch ihren Aufbau voneinander. Hier hat es sich bewährt, dass die erste und zweite Beugungsstruktur sich beispielsweise in ihrer Reliefform, ihrem Azimutwinkel und/oder ihrer Gitterperiode voneinander unterscheiden. Unter Reliefform wird hierbei die Formgebung der Strukturelemente verstanden, aus denen die transmissive Beugungsstruktur gebildet wird. Hierbei können die ersten und zweiten transmissiven Beugungsstrukturen beispielsweise unterschiedliche symmetrische Reliefformen aufweisen, beispielsweise die erste Beugungsstruktur eine sinusförmige Reliefform und die zweite transmissive Beugungsstruktur eine rechteckförmige Reliefform aufweisen. Weiter ist es auch möglich, dass die erste Beugungsstruktur eine asymmetrische Reliefform und die zweite Beugungsstruktur eine symmetrische Reliefform oder umgekehrt aufweisen oder sich die erste oder zweite Beugungsstruktur in Bezug auf die Asymmetrie der Reliefform unterscheidet.

Weiter ist es vorteilhaft, wenn die erste und zweite transmissive Beugungsstruktur von unterschiedlichen Arten von transmissiven Beugungsstrukturen gebildet sind. Unter unterschiedlichen Arten von transmissiven Beugungsstrukturen werden hierbei Beugungsstrukturen verstanden, welche über einen unterschiedlichen Schichtaufbau verfügen und/oder welche aus unterschiedlichen der oben beschriebenen Klassen von transmissiven Beugungsstrukturen ausgewählt sind, beispielsweise eine Kombination der oben beschriebenen ersten Klasse von transmissiven Beugungsstrukturen und der oben beschriebenen zweiten, dritten oder vierten Klasse von transmissiven Beugungsstrukturen.

Weiter ist es vorteilhaft, wenn sich die erste und die zweite transmissive Beugungsstruktur in dem bei Aktivierung der ein oder mehreren Licht emittierenden Elemente für den menschlichen Betrachter erkennbaren Effekten unterscheiden und sich insbesondere in ein oder mehrere der folgenden Parameter unterscheiden: Änderung des Farbspektrums des transmittierten Lichts in ungekipptem Zustand, Änderung des Farbspektrums des transmittierten Lichts in gekipptem Zustand, Kippwinkel oder Kippwinkelbereich, in dem das Farbspektrum verändert wird, Transmissivität in ungekipptem Zustand, Transmissivität in gekipptem Zustand, Ausrichtung der Kippachse für die Erzielung dieser Effekte. Hierdurch ist es möglich, interessante optisch variable Effekte zu generieren: So zeigt sich beispielsweise für den Betrachter zunächst ein Bild, welches mit einer Anordnung aktivierter Licht emittierender Elemente korreliert ist. Weiter erscheinen helle und sich ggf. bewegende Bilder unter anderem Betrachtungswinkel, die sich weiter bei Änderung des Betrachtungswinkels oder der Betrachtungsbedingungen verändern.

Die ein oder mehreren ersten und ein oder mehreren zweiten Zonen können hierbei voneinander beabstandet oder benachbart zueinander im ersten Bereich des Sicherheitselements angeordnet sein.

Bzgl. der Anordnung des ersten Bereichs, der Teilbereiche des ersten Bereichs und der Zonen wird hierbei von einer Betrachtung des Sicherheitselements in Draufsicht ausgegangen.

Es hat sich bewährt, dass benachbarte erste und zweite Zonen weniger als 10 $\mu$m, bevorzugt weniger als 1 $\mu$m voneinander beabstandet sind.

Gemäß eines bevorzugten Ausführungsbeispiels der Erfindung weisen die ersten und zweiten Zonen jeweils laterale Abmessungen von mehr als 300 $\mu$m auf. Vorzugsweise weist die erste und die zweite Zone eine Breite und eine Länge von jeweils mehr als 500 $\mu$m, vorzugsweise von mehr als 2000 $\mu$m auf. Die ersten und zweiten Zonen weisen so bei dieser Ausführungsform vorzugsweise laterale Abmessungen auf, bei der die die Formgebung der ersten und zweiten Zonen von dem menschlichen Betrachter bei einem normalen Betrachtungsabstand aufgelöst werden kann.

Unter lateraler Abmessung wird hier die Abmessungen bei Draufsicht auf das Sicherheitselement, d.h. die Abmessungen in der von der Oberseite bzw. Unterseite des Sicherheitselements aufgespannten Ebene verstanden. Unter lateraler Abmessung wird so insbesondere die Breite und die Länge der Zonen verstanden.

Vorzugsweise sind die ein oder mehreren ersten Zonen zur Ausbildung eines ersten Motivs und die ein oder mehreren zweiten Zonen zur Ausbildung eines zweiten Motivs ausgeformt. Unter Motiv wird hierbei unter anderem auch Buchstaben und Zahlen, eine Abfolge von Buchstaben und Zahlen, Logos, bildliche Darstellungen, beispielsweise das Porträt einer Person, Symbole oder Ähnliches verstanden.

Durch eine derartige Ausgestaltung ist es so beispielsweise möglich, ein Sicherheitsmerkmal bereitzustellen, welches beispielsweise in einem ersten Kippwinkelbereich bei Aktivierung der ein oder mehreren Licht emittierenden Elemente das erste Motiv und in einem zweiten, hiervon unterschiedlichen Kippwinkelbereich bei Aktivierung der ein oder mehreren Licht emittierenden Elemente das zweite Motiv zeigt, oder das erste und zweite Motiv in unterschiedlicher Farbe zeigt.

Weiter ist es vorteilhaft, wenn die ein oder mehreren ersten und zweiten Zonen zur Ausbildung eines gemeinsamen Motivs ausgeformt sind, wobei die ersten Zonen einen Vordergrundbereich des Motivs ausbilden und die zweiten Zonen einen Hintergrundbereich des Motivs ausbilden. Vorzugsweise sind hierbei zumindest ein oder mehrere der ersten Zonen vollständig von einer der zweiten Zonen umgeben. Durch eine derartige Ausgestaltung können beispielsweise Sicherheitsmerkmale bereitgestellt werden, bei denen das Motiv lediglich in einem bestimmten Kippwinkelbereich, insbesondere auch in Kombination mit einer vollflächig oder bereichsweise überlappenden Anordnung einer oder mehrerer der Licht emittierenden Elemente, aufgrund einer kontrastierenden Farbe von Vordergrundbereich und Hintergrundbereich erscheint oder sich die Farbe des Vordergrundbereichs oder Hintergrundbereichs in Abhängigkeit vom Kippwinkel verändert. Weiter kann entsprechend auch eine Veränderung des Kontrastes bewirkt werden. So erscheint beispielsweise ein helles Bild unter ein oder mehreren Betrachtungswinkeln und die Helligkeit des Bildes variiert mit der Änderung des Betrachtungswinkels.

Gemäß eines weiteren bevorzugten Ausführungsbeispiels der Erfindung sind in dem ersten Bereich eine Vielzahl zweiter Zonen vorgesehen, wobei die ersten und zweiten Zonen jeweils zumindest eine laterale Abmessung von weniger als 300 $\mu$m aufweisen, insbesondere weniger als 150 $\mu$m und bevorzugt weniger als 80 $\mu$m aufweisen. Die ersten und zweiten Zonen können hierbei beispielsweise raster- oder pixelförmig, beispielsweise in Form eines Quadrats, eines Achtecks, eines Polygon, insbesondere eines Trapezoids, oder Ähnlichem mit einer Breiten- und Längenabmessung von weniger als 300 $\mu$m ausgebildet sein oder auch streifenförmig ausgebildet sein, mit einer Breite von weniger als 300 $\mu$m und einer Länge von mehr als 300 $\mu$m. Vorzugsweise weisen die ersten und zweiten Zonen hierbei jeweils eine Breite von mehr als 5 $\mu$m, insbesondere 10 $\mu$m, weiter bevorzugt von mehr als 20 $\mu$m auf.

Wie bereits oben ausgeführt, können neben den ersten und zweiten Zonen in dem ersten Bereich noch weitere Zonen vorgesehen sein, welche mit einer transmissiven Beugungsstruktur belegt sind, die sich von der ersten und zweiten transmissiven Beugungsstruktur unterscheidet. Vorzugsweise weist der erste Bereich so dritte und/oder vierte Zonen auf, die mit dritten bzw. vierten transmissiven Beugungsstrukturen belegt sind, wobei auch die dritten bzw. vierten Zonen jeweils zumindest eine laterale Abmessung von weniger als 300 $\mu$m, insbesondere weniger als 150 $\mu$m, bevorzugt weniger als 80 $\mu$m aufweisen.

Durch die Verwendung und die Anordnung derartiger erster, zweiter, dritter und/oder vierter Zonen lassen sich zahlreiche optische Sicherheitsmerkmale generieren, welche die Fälschungssicherheit des Sicherheitselements deutlich verbessern.

Gemäß eines bevorzugten Ausführungsbeispiels der Erfindung werden mittels solcher Zonen, insbesondere auch in Kombination mit einer vollflächig oder bereichsweise überlappenden Anordnung einer oder mehrerer der Licht emittierenden Elemente, Echtfarbenbilder generiert werden, welche sich weiter unter anderem beim Verkippen in ihrer Farbe und ihrer Sichtbarkeit verändern können.

Vorzugsweise weist der erste Bereich hierfür einen Motivbereich auf, der in eine Vielzahl von Bildpunktbereichen unterteilt ist. Bildpunktbereiche können hierbei nicht nur eine quadratische, rautenförmige oder achteckförmige Formgebung, sondern auch eine rechteckförmige Formgebung besitzen. In zumindest einem ersten der Bildpunktbereich sind hierbei zumindest zwei unterschiedliche Zonen ausgewählt aus der Gruppe erste und zweite Zonen, der Gruppe erste, zweite und dritte Zonen, oder der Gruppe erste, zweite, dritte und vierte Zonen angeordnet. Sind so beispielsweise drei unterschiedliche Zonen vorgesehen, so weist der erste Bildpunktbereich beispielsweise ein oder mehrere erste und zweite Zonen, ein oder mehrere zweite und dritte Zonen oder ein oder mehrere erste, zweite und dritte Zonen auf. Weiter sind diese Zonen in dem ersten Bildpunktbereich so angeordnet, dass die sich in dem ersten Bildpunktbereich bei Aktivierung der ein oder mehreren Licht emittierenden Elemente unter zumindest einem Kippwinkel zeigende Farbe durch additive Farbmischung der von den in diesem Bildpunktbereich in den unterschiedlichen Zonen angeordneten der transmissiven Beugungsstrukturen unter diesem Kippwinkel bei Aktivierung der ein oder mehreren Licht emittierenden Elemente generierten Farben generiert ist.

Vorzugsweise weist der erste Bildpunktbereich hierbei zumindest eine laterale Abmessung von weniger als 300 $\mu$m auf.

Die Helligkeit und der Farbwert der bei der ein oder mehreren Licht emittierenden Elemente im ersten Bildpunktbereich von den dort angeordneten transmissiven Beugungsstrukturen generierten Farbe wird hierbei durch die Flächengröße der im ersten Bildpunktbereich angeordneten ersten, zweiten und ggf. dritten und vierten Zonen sowie den von den ersten, zweiten und ggf. dritten und vierten transmissiven Beugungsstruktur unter diesem Kippwinkel generierten Farben bestimmt. Durch entsprechende Wahl der Flächengröße der ersten, zweiten und ggf. dritten und vierten Zonen in dem ersten Bildpunktbereich sowie der Farbe der dort angeordneten Licht emittierenden Elementen kann so die unter dem Kippwinkel bei Aktivierung der ein oder mehreren Licht emittierenden Elemente im ersten Bildpunktbereich generierte Farbe eingestellt werden.

Vorzugsweise sind mindestens 10%, bevorzugt mindestens 50% der Bildpunktbereiche als erste Bildpunktbereiche ausgebildet. Vorzugsweise sind ein oder mehrere der Bildpunktbereiche weiter als zweite Bildpunktbereiche ausgebildet, in denen jeweils nur eine Art von Zonen vorgesehen ist, so beispielsweise lediglich ein oder mehrere erste Zonen oder ein oder mehrere zweite Zonen vorgesehen sind.

Gemäß eines weiteren bevorzugten Ausführungsbeispiels der Erfindung ist in dem ersten Bereich ein in Form eines ersten Motivs ausgeformter erster Motivbereich und in Form eines zweiten Motivs ausgeformter zweiter Motivbereich vorgesehen. Der erste Motivbereich und der zweite Motivbereich überlappen sich hierbei zumindest bereichweise. Weiter ist der erste Motivbereich in eine Vielzahl von Teilbereichen unterteilt, die jeweils mit ein oder mehreren ersten Zonen belegt sind, und der zweite Motivbereich in eine Vielzahl von Teilbereichen unterteilt, die jeweils mit ein oder mehreren zweiten Zonen belegt sind. Die Teilbereiche weisen hierbei vorzugsweise zumindest eine laterale Abmessung von weniger als 300 μm auf. Im Überlappungsbereich des ersten oder zweiten Motivbereichs sind so erste und zweite Zonen vorgesehen, insbesondere benachbart zueinander vorgesehen, und insbesondere ineinandergerastert angeordnet. Weiter ist es hierbei vorteilhaft, wenn die ersten und zweiten Zonen jeweils gemäß eines ein- oder zweidimensionalen Raster angeordnet sind und sich insbesondere im Überlappungsbereich Bereiche des Rasters, welche ersten Zonen zugeordnet sind, und Bereiche des Rasters, welche zweiten Zonen zugeordnet sind, abwechseln. Die Rasterweite des Rasters beträgt vorzugsweise in zumindest eine Richtung weniger als 300 μm.

Durch diese Vorgehensweise ist es möglich, ein Sicherheitsmerkmal bereitzustellen, welches bei Aktivierung der ein oder mehreren Licht emittierenden Elemente in einem ersten Kippwinkelbereich das erste Motiv und in einem zweiten Kippwinkelbereich das zweite Motiv und ggf. in einem dritten Kippwinkelbereich eine überlagerte Darstellung des ersten und zweiten Motivs zeigt. Vorzugsweise weist der erste Bereich hierbei nicht nur einen ersten Motivbereich und einen zweiten Motivbereich, sondern eine Vielzahl von Motivbereichen auf, welche jeweils mit unterschiedlichen Zonen belegt sind. Hierdurch lassen sich interessante optische Effekte wie beispielsweise eine Simulation eines Bewegungseffekts oder eines Transformationseffekts bei Aktivierung der ein oder mehreren Licht emittierenden Elemente generieren, bei dem beispielsweise ein erstes Motiv über ein oder mehrere Zwischenschritt in ein zweites Motiv übergeht.

Vorzugsweise sind bei diesem Ausführungsbeispiel, wie bereits oben beschrieben, die ersten Zonen und die zweiten Zonen mit unterschiedlichen Arten von transmissiven Beugungsstrukturen belegt. Hierdurch kann beispielsweise das optische Erscheinungsbild eines der Motive in Abhängigkeit von dem Einsatz eines Polarisators bei Aktivierung der ein oder mehreren Licht emittierenden Elemente verändert werden, sodass beispielsweise sich das erste Motiv, nicht jedoch das zweite Motiv, bei Einsatz eines Polarisators verändert.

Gemäß eines weiteren bevorzugten Ausführungsbeispiels ist es auch möglich, dass ein oder mehrere der Licht emittierenden Elemente bei Aktivierung polarisiertes Licht abstrahlen. So ist es beispielsweise möglich, dass ein oder mehrere der Licht emittierenden Elemente als LCD-Anzeigenelemente ausgebildet sind.

Gemäß eines weiteren bevorzugten Ausführungsbeispiels der Erfindung ist es auch möglich, ein oder mehrere polarisierende Elemente in dem Sicherheitselement vorzusehen, welche zwischen ein oder mehreren der Licht emittierenden Elemente und ein oder mehreren der transmissiven Beugungsstrukturen angeordnet sind.

Durch eine derartige Ausgestaltung können stärkere Farbeffekte, stärkere Kontraste und weiter auch Sicherheitsmerkmale bereitgestellt werden, welche lediglich mittels eines Hilfsmittels (Polarisators) sichtbar gemacht werden können.

Vorzugsweise weist jedes Licht emittierende Element einen Abstrahlbereich auf, in welchem bei Aktivierung des Licht emittierenden Elements Licht in Richtung der Oberseite des Sicherheitselements abgestrahlt wird. Vorzugsweise überlappen ein oder mehrere der transmissiven Beugungsstrukturen den Abstrahlbereich eines oder mehrere der Licht emittierenden Elemente vollflächig, bei Betrachtung senkrecht zu einer von der Rückseite des Sicherheitselements aufgespannten Ebene. Hierbei ist es auch vorteilhaft, wenn die von den transmissiven Beugungsstrukturen belegte Fläche größer als die von den ein oder mehreren Licht emittierenden Elementen belegte Fläche ist.

Weiter ist es auch vorteilhaft, wenn ein oder mehrere der transmissiven Beugungsstrukturen den Abstrahlbereich eines oder mehrerer der Licht emittierenden Elemente lediglich bereichsweise und musterförmig überlappt, bei Betrachtung senkrecht zu einer von der Rückseite des Sicherheitselements aufgespannten Ebene. Hierbei ist es besonders vorteilhaft, wenn die von den ein oder mehreren transmissiven Beugungsstrukturen belegte Fläche nur einen Teil der von den ein oder mehreren Licht emittierenden Elementen beleuchteten Fläche bedeckt, wie bereits oben ausgeführt.

Gemäß eines bevorzugten Ausführungsbeispiels der Erfindung wird von den ein oder mehreren transmissiven Beugungsstrukturen eine erste optische Information bereitgestellt, insbesondere in Form eines beim Verkippen oder Verdrehen sichtbar werdenden, sich bewegenden oder in seiner Formgebung oder Farbe ändernden Motivs. Weiter besitzt der Abstrahlbereich eines oder mehrerer der Licht emittierenden Elemente eine musterförmige Formgebung und ist in Form eines bei Aktivierung des Lichts emittierenden Elements als zweite optische Information sichtbaren Motivs ausgeformt. Alternativ oder zusätzlich hierzu sind zwei oder mehr der Licht emittierenden Elemente so angeordnet oder so ansteuerbar, dass bei deren Aktivierung als zweite optische Information ein Motiv sichtbar ist. Die erste optische Information und die zweite optische Information sind sich bereichweise oder vollständig überlappend oder auch nebeneinander angeordnet, bezogen auf eine senkrecht auf einer von der Rückseite des Sicherheitselements aufgespannten Ebene. Bei Aktivierung der ein oder mehren Licht emittierenden Elemente können so die ersten und zweiten optischen Informationen sichtbar gemacht oder verändert werden, wodurch komplexe und einprägsame Sicherheitsmerkmale bereitstellbar sind.

Die ein oder mehreren Licht emittierenden Elemente sind vorzugsweise ausgewählt aus: LED (LED = light emitting diode), OLED (OLED = organic light emitting diode), LEEC (LEEC = light emitting electrochemical cell), QLED (QLED = quantum dot light emitting device), elektrolumineszentes Element, hinterleuchtetes LCD (LCD = liquid crystal display), Display-Pixel, Segmentanzeige, selbstleuchtendes aktives oder passives Matrix-Display. Bevorzugt sind die Licht emittierenden Elemente (inklusive eines etwaigen Trägersubstrates) flexible und dünn, z.B. dünner als 1 mm, insbesondere dünner als 500 $\mu$m und bevorzugt dünner als 100 $\mu$m.

Wie bereits oben ausgeführt, können die ein oder mehreren Licht emittierenden Elemente in Form eines einzelnen Bereichs, in Form mehrerer größerer Segmente oder in Form von Pixeln vorgesehen sein. Die ein oder mehreren Licht emittierenden Elemente können hierbei jeweils eine einzelne Farbe, mehrere Farben oder eine Echtfarbe, beispielsweise mittels Farbmischung bei Aktivierung abstrahlen.

Es gibt verschiedene Möglichkeiten, Licht emittierende Elemente mit Energie zu versorgen, so dass sie leuchten. In einer Ausgestaltungsform werden die Licht emittierenden Elemente mit elektrischer Energie aus einer Energiequelle zum Leuchten angeregt. Als bevorzugte Energiequellen der Leuchtschicht sind insbesondere piezoelektrische und photovoltaische Stromquellen zu nennen, Batterien, Kondensatoren, Superkondensatoren, etc. Die Energie kann auch über eine geeignete Antenne, z.B. einer RFID-Antenne, aus einem elektrischen Feld entnommen werden. Vorzugsweise sind diese Energiequellen in das Sicherheitselement oder das Sicherheitsdokument integriert oder über eine Energieleitung mit ihm verbunden. Alternativ dazu kann die Energiequelle auch außerhalb des Sicherheitselements-/dokuments angeordnet sein, z.B. in einem externen Lesegerät. Im Falle einer elektrischen Energiequelle stehen dazu eine galvanische, kapazitive oder induktive Übertragungsart elektrischer Energie zur Auswahl. Im Falle einer externen Energiequelle kann das Sicherheitsdokument zum Beispiel in ein entsprechendes lokales elektrisches oder magnetisches oder elektromagnetisches Feld gebracht werden, um so eine kapazitive und/oder induktive, insbesondere drahtlose Energieübertragung zu ermöglichen. Insbesondere ID-Karten und Pässe besitzen oftmals bereits RFID-Antennen, über die elektronische Chips mit Energie versorgt und ausgelesen werden. Diese RFID-Antennen eignen sich gut um die für selbstleuchtende Displays benötigte elektrische Spannung und Leistung bereitzustellen. Beispielsweise eignen sich sogenannte NFC-Sender (NFC = near field communication), z.B. NFC-Antennen in Mobiltelefonen als externe Energiequelle.

Gemäß eines bevorzugten Ausführungsbeispiels weist das Sicherheitselement ein oder mehrere der folgenden Komponenten auf: eine Steuerschaltung zur Ansteuerung der ein oder mehreren Licht emittierenden Elemente, eine Logikschaltung, eine Treiberschaltung, Kontaktelemente, eine Antenne, insbesondere zur Energieversorgung oder zur Kommunikation, eine Stromversorgungseinrichtung.

Wenn das Sicherheitselement eine Vielzahl von Licht emittierenden Elementen aufweist, ist es weiter vorteilhaft, wenn in dem Grenzbereich zwischen Licht emittierenden Elementen Lichtblockstrukturen, insbesondere vertikale Lichtblockstrukturen angeordnet sind. Hierdurch kann die Abstrahlcharakteristik der Licht emittierenden Elemente noch besser auf die transmissiven Beugungsstrukturen abgestimmt werden.

Es ist möglich, dass sämtliche der Licht emittierenden Elemente bei Aktivierung Licht der gleichen Farbe abstrahlen. Weiter ist es auch möglich, dass zwei oder mehrere der Licht emittierenden Elemente Licht unterschiedlicher Farbe abstrahlen. So ist es beispielsweise möglich, dass ein oder mehrere erste Licht emittierende Elemente bei Aktivierung rotes Licht, ein oder mehrere zweite Licht emittierende Elemente bei Aktivierung grünes Licht und/oder ein oder mehrere dritte Licht emittierende Elemente bei Aktivierung blaues Licht abstrahlen. Die Licht emittierenden Elemente können hierbei bei Aktivierung Licht eines engen Frequenzspektrums abstrahlen, beispielsweise eines Frequenzspektrums mit einem Peak im Bereich von 550 nm und einer Halbwertsbreite von 20 nm, oder auch breitbandiges Licht, beispielsweise weißes Licht abstrahlen.

Gemäß eines weiteren bevorzugten Ausführungsbeispiels der Erfindung weist das Substrat in dem ersten Bereich ein oder mehrere reflektive Beugungsstrukturen auf, die bei Auflichtbetrachtung ein oder mehrere optische Sicherheitsmerkmale zeigen.

Vorzugsweise sind in dem ersten Bereich eine Vielzahl von ersten Teilbereichen vorgesehen, die mit einer der ein oder mehreren transmissiven Beugungsstrukturen belegt sind, und eine Vielzahl von zweiten Teilbereichen vorgesehen, die mit einer der ein oder mehreren reflektiven Beugungsstrukturen belegt sind.

Vorzugsweise weisen die ersten und zweiten Teilbereiche jeweils zumindest eine laterale Abmessung von weniger als 300 $\mu$m, insbesondere weniger als 150 $\mu$m, bevorzugt von weniger als 80 $\mu$m auf. Weiter sind zumindest bereichsweise erste und zweite Teilbereiche benachbart zueinander angeordnet, sodass sich im ersten Bereiche in Auflichtbetrachtung eine durch die zweiten Teilbereiche bestimmte zweite optische Information und hierzu zumindest bereichsweise überlappend eine durch die ersten Teilbereiche bestimmte erste optische Information zeigt.

Das Sicherheitselement wird vorzugsweise von einer Laminierfolie, einer Transferlage einer Transferfolie, einem Sicherheitsfaden oder einem Label gebildet. Es ist jedoch auch möglich, dass das Sicherheitselement als Sicherheitsdokument oder Wertdokument, beispielsweise als Pass oder ID-Karte ausgebildet ist.

Weiter ist es auch möglich, dass zur Herstellung eines erfindungsgemäßen Sicherheitselements zunächst zwei Teilelemente gefertigt werden, wobei das erste Teilelement die ein oder mehreren transmissiven Beugungsstrukturen und das zweite Teilelement die ein oder mehreren Licht emittierenden Elemente aufweist. So wird beispielsweise eine erste Laminierfolie oder Transferfolie gefertigt, welche die ein oder mehreren transmissiven Beugungsstrukturen aufweist und eine zweite Folie gefertigt, welche die ein oder mehreren Licht emittierenden Elemente und ggf. noch - wie oben beschrieben - weitere elektrische Komponenten aufweist. Das erste und zweite Teilelement wird dann zur Herstellung eines erfindungsgemäßen Sicherheitselements oder erfindungsgemäßen Sicherheitsdokuments miteinander verbunden, z.B. zusammenlaminiert.

Das Sicherheitselement besteht vorzugsweise aus einem flexiblen Folienkörper einer Schichtdicke zwischen 5 $\mu$m und 500 $\mu$m, weiter bevorzugt zwischen 5 $\mu$m und 100 $\mu$m.

Im Folgenden wird die Erfindung anhand von mehreren Ausführungsbeispielen unter Zuhilfenahme der beiliegenden Zeichnungen beispielhaft erläutert.

Fig. 1a zeigt eine schematische Draufsicht auf ein Sicherheitsdokument.

Fig. 1b zeigt eine schematische Schnittdarstellung des Sicherheitsdokuments nach Fig. 1a.

Fig. 1c zeigt eine schematische Schnittdarstellung eines Sicherheitselements.

Fig. 2 zeigt eine schematische Schnittdarstellung eines Sicherheitselements.

Fig. 3a bis Fig. 3c zeigen mehrere Diagramme.

Fig. 4 zeigt eine schematische Schnittdarstellung eines Sicherheitselements.

Fig. 5 zeigt ein Diagramm.

Fig. 6a und 6b zeigt eine schematische Schnittdarstellung eines Sicherheitselements bei unterschiedlichen Betrachtungssituationen.

Fig. 7a bis Fig. 7e zeigen mehrere Diagramme.

Fig. 8a zeigt eine schematische Schnittdarstellung eines Sicherheitselements.

Fig. 8b zeigt eine vergrößerte Darstellung eines Ausschnitts des Sicherheitselements nach Fig. 8a.

Fig. 8c zeigt ein Diagramm.

Fig. 9a zeigt eine schematische Schnittdarstellung eines Sicherheitselements.

Fig. 9b zeigt eine vergrößerte Darstellung eines Ausschnitts des Sicherheitselements nach Fig. 9a.

Fig. 9c zeigt ein Diagramm.

Fig. 10a und Fig. 10b zeigen schematische Darstellungen zur Verdeutlichung der Abstrahlcharakteristik eines Licht emittierenden Elements.

Fig. 11a und Fig. 11b zeigen schematische Schnittdarstellungen eines Ausschnitts eines Sicherheitselements.

Fig. 12a bis Fig. 12c zeigen schematische Darstellungen einer Draufsicht auf einen Teilbereich eines Sicherheitselements.

Fig. 12d zeigt eine schematische Schnittdarstellung des Teilbereichs des Sicherheitselements nach Fig. 12c.

Fig. 13 zeigt eine schematische Schnittdarstellung eines Teilbereichs eines Sicherheitselements.

Fig. 14 zeigt eine schematische Schnittdarstellung eines Teilbereichs eines Sicherheitselements.

Fig. 15 zeigt eine schematische Darstellung zur Verdeutlichung des sich in einem Bereich eines Sicherheitselements bei unterschiedlichen Betrachtungssituationen ergebenden optischen Erscheinungsbilds.

Fig. 16a bis Fig. 16d zeigen schematische Darstellungen zur Verdeutlichung des sich bei unterschiedlichen Betrachtungssituationen ergebenden optischen Erscheinungsbilds eines Sicherheitselements.

Fig. 17a zeigt eine schematische Schnittdarstellung eines Sicherheitselements sowie einer schematischen Darstellung der sich bei unterschiedlichen Beleuchtungssituationen zeigenden Information.

Fig. 17b zeigt eine schematische Draufsicht auf einen Motivbereich des Sicherheitselements nach Fig. 17a.

Fig. 18a zeigt eine schematische Draufsicht auf einen Bereich eines Sicherheitselements.

Fig. 18b zeigt eine schematische Draufsicht auf einen Motivbereich des Sicherheitselements nach Fig. 18a.

Fig. 18c zeigt eine schematische Draufsicht auf zwei sich überlappende Motivbereiche des Sicherheitselements nach Fig. 18a.

Fig. 19 zeigt eine schematische Draufsicht auf einen Bereich eines Sicherheitselements.

Fig. 20 zeigt eine schematische Schnittdarstellung eines Sicherheitselements.

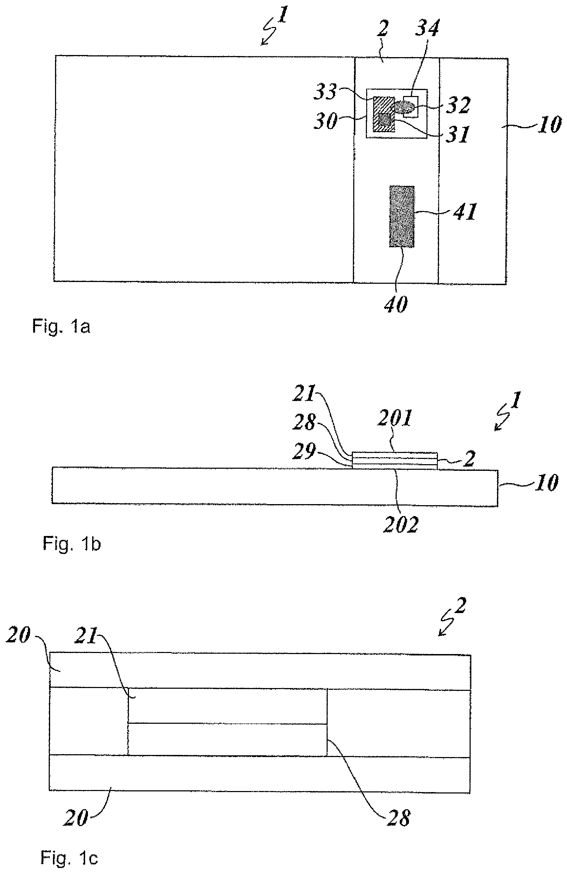

Fig. 1a und Fig. 1b zeigen ein Sicherheitsdokument 1 mit einem Trägersubstrat 10 und einem auf dem Trägersubstrat 10 applizierten Sicherheitselement 2.

Bei dem Sicherheitsdokument 1 handelt es sich vorzugsweise um eine Banknote, ein ID-Dokument wie beispielsweise einen Reisepass, eine Karte, beispielsweise eine ID-Karte, eine Bankkarte, eine Zugangskarte, eine Kreditkarte und Ähnliches, ein Aktienzertifikat, ein Sicherheits-Label zur Warensicherung oder ein Software-Zertifikat.

Das Trägersubstrat 10 besteht vorzugsweise aus einem Papiersubstrat, weiter bevorzugt aus einem Sicherheitspapier. Es ist jedoch auch möglich, dass das Trägersubstrat 10 aus einem Kunststoffmaterial besteht oder es sich hier um ein mehrschichtiges Substrat handelt, welches ein oder mehrere Kunststoff- und / oder Papierschichten umfasst. Weiter ist es möglich, dass das Trägersubstrat 10 mit ein oder mehreren Druckschichten, beispielsweise einem Sicherheitsaufdruck, oder Sicherheitselementen versehen ist, beispielsweise einem Wasserzeichen, einem Sicherheitsfaden oder einem Aufdruck bestehend aus einem optisch variablen Druckstoff.

Auf eine Seite des Trägersubstrats 10 ist das Sicherheitselement 2 appliziert. Das Sicherheitselement 2 weist eine dem Betrachter zugewandte Vorderseite 201 und eine dem Trägersubstrat 10 zugewandte Rückseite 202 auf.

Bei dem Sicherheitselement 2 handelt es sich vorzugsweise um die Transferlage einer Transferfolie oder um eine Laminierfolie, welche mittels einer Kleberschicht auf einer Seite des Trägersubstrats 10 appliziert ist. Das Sicherheitselement 2 hat in dem Ausführungsbeispiel nach Fig. 1a und Fig. 1b eine streifenförmige Formgebung und erstreckt sich über die gesamte Breite des Sicherheitsdokuments 1 zwischen zwei gegenüberliegenden Kanten des Trägersubstrats 10. Es ist jedoch auch möglich, dass das Sicherheitselement 2 eine andere Formgebung besitzt, beispielsweise eine Patch-förmige Formgebung besitzt.

Weiter ist es auch möglich, dass das Sicherheitselement 2 nicht auf einer Seite des Trägersubstrats 10 appliziert wird, sondern in das Trägersubstrat 10 eingebettet wird, beispielsweise zwischen zwei Schichten des Trägersubstrats 10 eingebettet ist.

Das Sicherheitselement 2 besteht vorzugsweise aus einem flexiblen, mehrschichtigen Folienelement einer Schichtdicke zwischen 5 $\mu$m und 500 $\mu$m, weiter bevorzugt zwischen 5 $\mu$m und 100 $\mu$m. Das Sicherheitselement 2 weist einen Bereich 30 auf, in welchem ein oder mehrere transmissive Beugungsstrukturen und ein oder mehrere Licht emittierende Elemente in dem Sicherheitselement 2 vorgesehen sind.

Die Licht emittierenden Elemente können alternativ auch in dem Sicherheitsdokument 1 eingebettet bzw. enthalten sein. In diesem Fall sind in dem Sicherheitselement 2 keine Licht emittierenden Elemente vorgesehen. Das Sicherheitselement 2 wird hierbei auf die im Sicherheitsdokument 1 enthaltenen Licht emittierenden Elemente appliziert, sodass das Sicherheitselement 2 und die die Licht emittierenden Elemente enthaltende Schicht oder Schichten des Sicherheitsdokuments 1 bzw. das Sicherheitsdokument 1 ein erfindungsgemäßes Sicherheitselement ausbilden bzw. ausbildet.

Der Bereich 30 weist so ein oder mehrere Teilbereiche, beispielsweise die in Fig. 1 a gezeigten Teilbereiche 31 und 32 auf, welche vorzugsweise vollflächig mit ein oder mehreren der Licht emittierenden Elemente belegt sind. Weiter weist der Bereich 30 ein oder mehrere Teilbereiche, beispielsweise die Zonen 33 und 34 auf, welche vorzugsweise vollflächig mit ein oder mehreren der transmissiven Beugungsstrukturen belegt sind. Es ist hierbei auch möglich, dass der Bereich 30 vollflächig mit den ein oder mehreren Licht emittierenden Elementen und/oder den ein oder mehreren transmissiven Beugungsstrukturen belegt ist.

Der Bereich 30 sowie die Teilbereiche 31 und 32 sowie die Zonen 33 und 34 sind hierbei, wie aus der Figur Fig. 1 a hervorgeht, als Bereich bzw. Teilbereiche zu verstehen, welche sich bei Draufsichtbetrachtung auf die Oberseite 201 des Sicherheitselements 2 ergeben, d.h. bei Betrachtung senkrecht zu einer von der Rückseite 202 und/oder der Vorderseite 201 des Sicherheitselements 2 aufgespannten Ebene ergeben.

Die Teilbereiche 31 und 32 einerseits sowie die Zonen 33 und 34 andererseits überlappen sich wie in Fig. 1a gezeigt, zumindest bereichsweise, bei Betrachtung senkrecht zu einer von der Rückseite des Sicherheitselements 2 aufgespannten Ebene. Die ein oder mehreren Licht emittierenden Elemente strahlen bei Aktivierung Licht ab und werden vorzugsweise von selbstleuchtenden elektrisch betriebenen Anzeigeelementen gebildet, wie im Folgenden ausgeführt. Die ein oder mehreren transmissiven Beugungsstrukturen sind derart in dem Sicherheitselement 30 in Bezug auf die ein oder mehreren Licht emittierenden Elemente angeordnet, dass zumindest ein Teil des von den aktivierten ein oder mehreren Licht emittierenden Elementen abgestrahlten Lichts durch zumindest einen Teilbereich der transmissiven Beugungsstrukturen transmittiert.

Bei den Licht emittierenden Elementen handelt es sich vorzugsweise um Elemente, welche elektrischen Strom in Licht umwandeln und bei Aktivierung, d.h. Stromzufuhr, Licht aus einem Wellenlängenbereich von 380nm bis 780 nm, weiter bevorzugt von 460 nm bis 660 nm abstrahlen. Die Licht emittierenden Elemente können hierbei Licht aus einem schmalbandigen Wellenlängenbereich, beispielsweise mit einem Peak bei 550 nm und einer Halbwertsbreite von 20 nm ausstrahlen oder ein breitbandiges Wellenspektrum aufweisen, beispielsweise weißes Licht ausstrahlen. Wenn die Licht emittierenden Elemente einen RGB-Display ausbilden, werden vorzugsweise eine Vielzahl von Licht emittierenden Elementen eingesetzt, welche aus der Gruppe rotes Licht abstrahlendes, grünes Licht abstrahlendes und blaues Licht abstrahlendes Licht emittierendes Element ausgewählt sind. Die Licht emittierenden Elemente weisen vorzugsweise einen Peak im Bereich der Wellenlänge 460 nm, 550 nm bzw. 630 nm auf und strahlen vorzugsweise weiter Licht in einem relativ schmalbandigen Wellenspektrum um diese zentrale Wellenlänge herum aus.

Bei dem Licht emittierenden Element oder den Licht emittierenden Elementen handelt es sich beispielsweise um ein LED, OLED, LEEC, QLED, hinterleuchtetes LCD, elektrolumineszentes Element, Display-Pixel, Segmentanzeige, aktives oder passives Matrix-Display. Es ist hierbei auch möglich, dass in den Teilbereichen 31 und 32 unterschiedliche dieser Licht emittierenden Elemente angeordnet sind. Weiter sind die Licht emittierenden Elemente vorzugsweise in den Teilbereichen 31 und 32 so angeordnet, dass bzgl. der Auflösung des menschlichen Auges in dem gesamten Teilbereich 31 bzw. 32 bei Aktivierung der Licht emittierenden Elemente Licht in Richtung der Vorderseite 201 des Sicherheitselements 2 abgestrahlt wird. Weiter ist es auch möglich, dass in jedem der Teilbereiche 31 und 32 ein Licht emittierendes Element vorgesehen ist, welches die Ausformung der Teilbereiche 31 bzw. 32 besitzt. So ist dort beispielsweise ein entsprechendes elektrolumineszentes Element mit einer entsprechenden Ausformung einer oder mehrerer der Elektroden vorgesehen.

Die Licht emittierenden Elemente könnten bei Aktivierung Licht der gleichen Farbe abstrahlen. Weiter ist es auch möglich, dass die Licht emittierenden Elemente Licht unterschiedlicher Farbe abstrahlen und so beispielsweise in dem Teilbereich 31 die dort angeordneten ein oder mehreren Licht emittierenden Elemente Licht einer ersten Farbe bei Aktivierung abstrahlen und die in dem Teilbereich 32 angeordneten ein oder mehreren Licht emittierenden Elemente Licht einer zweiten, hiervon unterschiedlichen Farbe abstrahlen.

Die in den Zonen 33 und 34 vorgesehenen transmissiven Beugungsstrukturen sind, wie weiter unten noch detailliert erläutert, so ausgestaltet, dass sie die farbige Erscheinung, die spektrale Zusammensetzung, den Helligkeitskontrast, die Verteilung der Abstrahlwinkel und/oder die Strahlformung des von ein oder mehreren der Licht emittierenden Elemente abgestrahlten Lichts beim Kippen und/oder Verdrehen des Sicherheitselements 2 verändern.

Ein oder mehrere der transmissiven Beugungsstrukturen sind hierbei so angeordnet, dass sie den Abstrahlbereich eines oder mehrerer der Licht emittierenden Elemente vollflächig oder lediglich bereichsweise und musterförmig überlappen, bei Betrachtung senkrecht zu einer von der Rückseite 202 des Sicherheitselements aufgespannten Ebene, wie dies beispielsweise in Fig. 1a bzgl. der Teilbereiche 31 und 32 sowie Zonen 33 und 34 gezeigt ist. Bei Aktivierung der Licht emittierenden Elemente zeigt sich so als optisches Sicherheitselement ein sich beim Kippen, Drehen und/oder Rotieren des Sicherheitselements verändernder einprägsamer optischer Eindruck.

Weiter ist es auch möglich, dass von den ein oder mehreren transmissiven Beugungsstrukturen, wie weiter unten detailliert erläutert, eine erste optische Information, insbesondere ein beim Verkippen oder Verdrehen sichtbar werdendes, sich bewegendes oder in seiner Formgebung oder Farbe änderndes Motiv bereitgestellt wird. Weiter wird eine zweite optische Information dadurch bereitgestellt, dass der Abstrahlbereich eines oder mehrerer der Licht emittierenden Elemente eine musterförmige Formgebung besitzt und in Form eines bei Aktivierung des Licht emittierenden Elements als zweite optische Information sichtbaren Motivs ausgeformt ist und/oder dass zwei oder mehrere Licht emittierende Elemente so angeordnet und ansteuerbar sind, dass bei deren Aktivierung als zweite optische Information ein Motiv sichtbar wird. Die zweite optische Information kann so beispielsweise durch eine entsprechende Formgestaltung der Teilbereiche 31 und 32 bereitgestellt werden. Die erste und zweite optische Information überlappen sich durch die wie oben beschriebene Anordnung der Teilbereiche bereichsweise oder vollständig oder sind auch zumindest teilweise nebeneinander angeordnet, bezogen auf eine senkrecht auf einer Rückseite des Sicherheitselements aufgespannten Ebene stehende Richtung. Hierdurch können weitere komplexe Sicherheitsmerkmale in dem Bereich 30 des Sicherheitselements 2 bereitgestellt werden.

Das Sicherheitselement 2 wird - wie bereits oben ausgeführt - vorzugsweise von einer Laminierfolie oder Transferfolie gebildet und weist eine Schicht 21 umfassend ein Substrat mit den transparenten Beugungsstrukturen, optional eine unter dieser Schicht angeordnete Schicht 28 mit den ein oder mehreren Licht emittierenden Elementen sowie eine Kleberschicht 29 auf, mittels der das Sicherheitselement 2 auf dem Trägersubstrat 10 des Sicherheitsdokuments 1 festgelegt ist. Neben diesen Schichten kann das Sicherheitselement 21 noch weitere dekorative und/oder funktionelle Schichten umfassen, beispielsweise noch zusätzliche Träger-, Haft-, Ablöseschichten oder ein oder mehrere weitere Dekorschichten umfassen.

Der Bereich 30 kann, wie dies beispielsweise in Fig. 1a gezeigt ist, sich hierbei lediglich über einen Teilbereich des Sicherheitselements 2 erstrecken. Es ist jedoch auch möglich, dass der Bereich 30 sich über das gesamte Sicherheitselement 2 erstreckt.

Vorzugsweise weist das Sicherheitselement 2 weiter noch zumindest einen Bereich 40 auf, in dem ein oder mehrere in Reflexion wirkende Beugungsstrukturen 41 vorgesehen sind.

Weiter ist es auch möglich, dass das Sicherheitselement 2 - wie in Fig. 1c gezeigt - bereits als solches beispielsweise ein ID-Dokument, ein Zahlungsmittel, ein Etikett zur Warensicherung, ein Sicherheitslabel oder ähnliches ausbildet. So zeigt Fig. 1c beispielsweise die Schnittdarstellung einer ID-Karte mit den Schichten 21 und 28 sowie einer unteren und einer oberen Deckschicht 20. Ist das Sicherheitselement 2 als PCI-Karte ausgebildet, kann hierbei eine Kleberschicht oberhalb oder unterhalb der Schicht 21 vorgesehen sein, welche die transparenten Beugungsstrukturen aufweist (PCI = Polycarbonate Inlay).

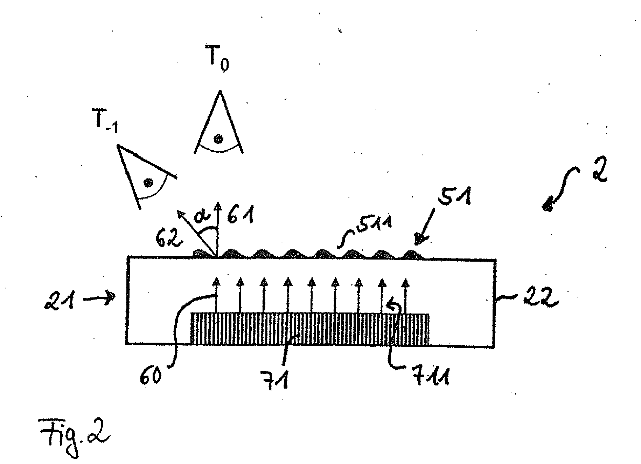

Fig. 2 zeigt das Sicherheitselement 2 mit dem Substrat 21. Das Substrat 21 weist eine oder mehrere transparente Schichten 22 sowie eine transmissive Beugungsstruktur 51 auf. Die transmissive Beugungsstruktur 51 wird von einer in einer Oberfläche des Substrats 21 abgeformten Reliefstruktur 511 gebildet. Die Reliefstruktur 511 ist hierbei insbesondere in die dem Betrachter zugewandten Oberfläche des Sicherheitselements 2 abgeformt. Die Reliefstrukturen 511 unterscheiden sich deutlich von diffraktiven Strukturen, welche für Betrachtung in Reflexion verwendet werden, wie im Folgenden beschrieben.

Die Reliefform der Reliefstruktur 511 kann sinusförmig, rechteckig, symmetrisch oder asymmetrisch, dreieckig oder noch komplexer sein. Die Beugung beruht auf dem Brechungsindexunterschied zwischen Luft (n = 1) und dem Material der transparenten Schicht 22, d. h. etwa n = 1,5 bei Wahl eines polymeren Materials. Die Schicht 22 besteht so beispielsweise aus einem thermoplastischen oder UV-härtbaren transparenten Kunststoffmaterial, in dessen Oberfläche mittels eines Replizierwerkzeuges die Reliefstruktur 511 bei einem thermoplastischen Kunststoffmaterial unter Einsatz von Hitze und Druck abgeformt wird, bzw. bei einem UV-härtbaren Kunststoffmaterial abgeformt und UV-gehärtet wird.

In einer weiteren, hier nicht gezeigten Ausführungsform wird das so gebildete Oberflächengitter weiter noch zusätzlich mit einer porösen, luftgefüllten Schicht überzogen. Diese Schicht weist einen Brechungsindex nahe 1.0 auf. Damit diese poröse Schicht transparent ist, müssen die Poren und / oder Aggregate, welche die Poren bilden, kleiner als die Wellenlänge des sichtbaren Lichtes sein. Bevorzugt besitzen solche porösen Schichten einen Brechungsindex kleiner als 1,3 und insbesondere kleiner als 1,2. Die Schichtdicke der porösen Schicht wird bevorzugt im Bereich von 2 $\mu$m bis 50 $\mu$m, insbesondere zwischen 2 $\mu$m und 20 $\mu$m gewählt.

Durch diese poröse Schicht wird der Vorteil erzielt, dass die Reliefstruktur 511 geschützt ist ohne die Beugungseigenschaften dieser Schicht zu zerstören.

Weiter ist es auch möglich, diese poröse Schicht mit ein oder mehreren weiteren polymeren Schichten zu beschichten, um so beispielsweise eine Versiegelung der Oberfläche zu erreichen.

Weiterhin weist das Sicherheitselement 2 ein oder mehrere Licht emittierende Elemente auf, von denen in Fig. 2 ein Licht emittierendes Element 71 gezeigt ist, welches Licht 60 in einem Abstrahlbereich 711 bei Aktivierung des Licht emittierenden Elements 71 abstrahlt.

Bei Aktivierung des Licht emittierenden Elements transmittiert das von dem Licht emittierte Element 71 abgestrahlte Licht 60 durch die transmissive Beugungsstruktur 51, wird hierbei wie im Folgenden beschrieben verändert, und fällt sodann auf das Auge des auf der Vorderseite des Sicherheitselements 2 positionierten Betrachters.

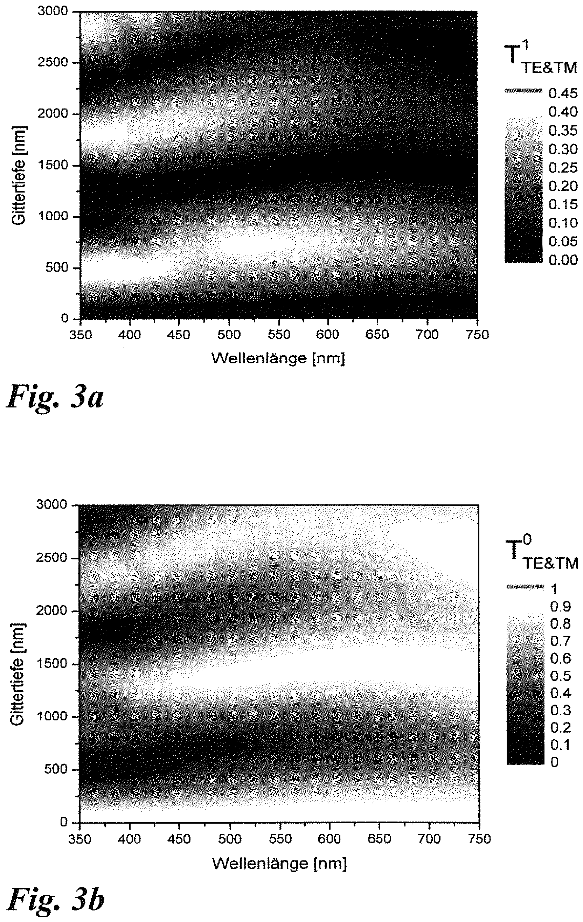

Die Diffraktionseffizienz in der nullten ($T_0$; Licht 61) sowie ersten Ordnung ($T_{-1}$, Licht 62) hängt unter anderem sehr stark von der Relieftiefe t der Reliefstruktur 511 ab. Fig. 3a zeigt die Diffraktionseffizienz in der -1. Ordnung als Funktion der Wellenlänge und der Relieftiefe. Die Diffraktionseffizienz liegt zwischen 45% (hell) und 0% (dunkel). Bei der Reliefstruktur 511 handelt es sich bei diesem Beispiel um eine Reliefstruktur mit einer Gitterperiode von 770 nm, und einer sinusförmigen Reliefform. Weiter zeigt Fig. 3a die über die TE- und TM-Polarisation gemittelte Diffraktionseffizienz. Der Beleuchtungswinkel ist senkrecht zu der von der Rückseite des Sicherheitselements 2 aufgespannten Ebene gewählt, wie dies in Fig. 2 entsprechend für den Lichteinfall des Lichts 60 dargestellt ist. Fig. 3b zeigt ein entsprechendes Diagramm für die Diffraktion in der nullten Ordnung. Die Diffraktionseffizienz liegt hier zwischen 100% (hell) und 0% (dunkel).

Gemäß einer bevorzugten Ausführungsform der Erfindung wird nun die transmissive Beugungsstruktur 51 so ausgelegt, dass die Reliefstruktur 511 neben einer möglichst starken Diffraktionseffizienz in der ersten Ordnung eine möglichst gleichmäßige, d. h. farbneutrale Transmission in der nullten Ordnung aufweist und sich dort das Farbspektrum des transmittierten Lichts möglichst wenig ändert. Bevorzugt ist die Transmission in der nullten Ordnung hierbei für den sichtbaren Spektralbereich größer als 30%, insbesondere größer als 50% gewählt. Als sichtbarer Spektralbereich wird hierbei vorzugsweise der Bereich zwischen 460 nm und 660 nm gewählt.

Aus den durchgeführten Untersuchungen ergibt sich so, dass die Gittertiefe größer als 200 nm, insbesondere größer als 300 nm und weiter bevorzugt größer als 400 nm zu wählen ist.

Zur Erzielung des oben beschriebenen Effekts, bei dem das in der Strahlrichtung senkrecht zu der von der Rückseite des Sicherheitselements 2 aufgespannten Ebene durch die Beugungsstruktur 51 transmittierte Licht weitgehend in seinem Farbspektrum unverändert in Richtung der Strahlrichtung durch das Substrat transmittiert wird, beträgt die Relieftiefe der Reliefstruktur 511 bevorzugt zwischen 900 nm bis 1700 nm, weiter bevorzugt zwischen 900 nm und 1500 nm und weiter bevorzugt zwischen 900 nm und 1200 nm.

Ein wichtiger Reliefparameter der Reliefstruktur 511 ist die Gitterperiode. Wie bereits von Reflexionsgittern bekannt, verschiebt sich die gebeugt Wellenlänge mit zunehmender Gitterperiode zu größeren Wellenlängen. Dies gilt auch für transmissive Beugungsstrukturen. Es hat sich gezeigt, dass, wenn die Relieftiefe in dem zuvor definierten Bereich liegt, ein breiter Bereich an Gitterperioden verwendet werden kann, um hierdurch einen Kippwinkelbereich einzustellen, bei dem sich ein Farbänderungseffekt als optisches Sicherheitsmerkmal zeigt.

Bevorzugt liegt die Gitterperiode der Reliefstruktur 511 hierbei im Bereich von 500 nm bis 1500 nm, weiter bevorzugt zwischen 600 nm und 1400 nm.

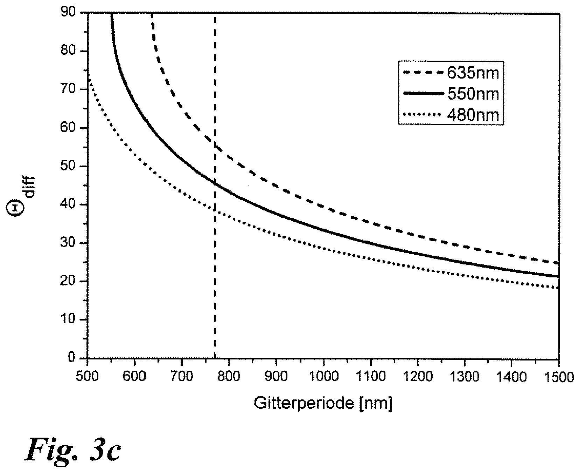

Fig. 3c verdeutlicht hierbei die Abhängigkeit zwischen diesem Kippwinkel bzw. Betrachtungswinkel $\alpha$ bzw. $\theta$ und der Gitterperiode für die beispielhaften Wellenlängen 480 nm (blau), 550 nm (grün) und 635 nm (rot). Das Diagramm wurde hierbei für eine Reliefstruktur mit einem sinusförmigen Reliefprofil und der Betrachtungssituation gemäß Fig. 2 ermittelt.

Durch entsprechende Wahl der Gitterperiode kann so die sich beim Verkippen bzw. Änderung des Betrachtungswinkels in dem mit der Reliefstruktur 511 belegten Teilbereiche des Bereichs 30 zeigende Farbe sowie der Kippwinkelbereich bzw. Betrachtungswinkelbereich eingestellt werden, bei dem sich dieser Effekt zeigt.

Die Darstellung nach Fig. 3c basiert auf der sogenannten Gittergleichung:

$$m\lambda_0 = \Lambda(\sin\theta_{inc} \pm \sin\theta_{diff})$$

Hierbei steht m für die Diffraktionsordnung.

Die verschiedenen Farbanteile des einfallenden Lichts werden zwar in unterschiedlichen Winkeln gebeugt. Der Winkelbereich ist allerdings nicht so groß. Bei der beispielhaften Gitterperiode von 770 nm beträgt der Unterschied über den sichtbaren Spektralbereich ca. 15%. Da die Beleuchtung der transmissiven Beugungsstruktur 52 durch das Licht emittierende Element 71 nicht perfekt unter dem senkrechten Einfallswinkel geschieht, sondern aufgrund des Lichtkegels des Licht emittierenden Elements 71 bzw. einer Anordnung von mehreren Licht emittierenden Elementen 71 unter einem Winkelbereich um die Senkrechte beugt, beugt die transmissive Beugungsstruktur 52 in einem bestimmten Diffraktionswinkel nicht nur eine Wellenlänge. Bei geschickt gewählter Anordnung des oder der Licht emittierenden Elementen und des transmissiven Beugungselements 52 wird sogar der gesamte sichtbare Spektralbereich nahezu gleichstark in allen Winkelbereiche gebeugt. Auf diese Art und Weise ist beispielsweise möglich, das von den ein oder mehreren Licht emittierenden Elementen 71 bei Aktivierung generierte Bild nicht nur in senkrechter Betrachtung zu sehen, sondern auch im Winkelbereich der ersten Diffraktionsordnung. Hierbei ist weiter zu berücksichtigen, dass Licht emittierende Elemente Licht einer einzigen Farbe oder auch Licht in einem breiten Wellenlängenspektrum aussenden können, wodurch sich ein entsprechend unterschiedlicher Winkelbereich ergibt.

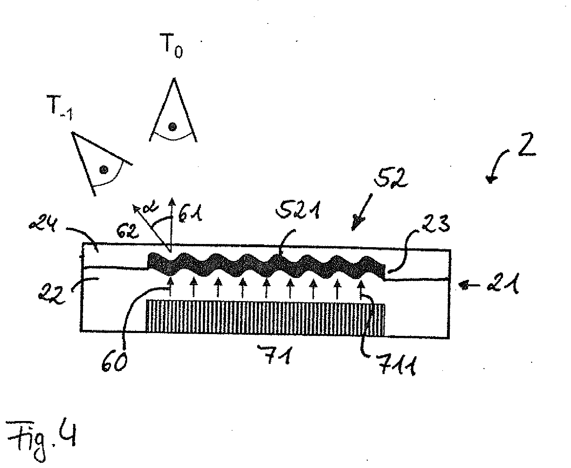

Fig. 4 zeigt ein weiteres Ausführungsbeispiel des Sicherheitselements 2. Das Sicherheitselement 2 besteht aus einem vorzugsweise mehrschichtigen Substrat 21, welches im Bereich 30 eine transmissive Beugungsstruktur 52 aufweist. In dem Bereich 30 weist das Substrat 21 in dem Ausführungsbeispiel nach Fig. 4 hierzu drei transparente Schichten 22, 23 und 24 auf, wobei zwischen zwei dieser Schichten eine Reliefstruktur 521 als transmissive Beugungsstruktur 52 abgeformt ist. Weiter weist das Sicherheitselement 2 ein oder mehrere Licht emittierende Elemente auf, von denen in Fig. 4 das Licht emittierende Element 71 gezeigt ist, welches unterhalb der transmissiven Beugungsstruktur 52 angeordnet ist. Das Licht emittierende Element 71 weist hierbei einen Abstrahlbereich 711 auf, in welchem bei Aktivierung des Licht emittierenden Elements 71 Licht 60 in Richtung der Oberseite des Sicherheitselements 2 abgestrahlt wird.

Bei den Schichten 22 und 24 handelt es sich vorzugsweise um transparente, polymere Schichten, beispielsweise transparente Schichten, welche einen Brechungsindex von etwa 1,5 aufweisen. Bei der Schicht 23 handelt es sich um eine diffraktionsverstärkende Schicht. Bevorzugte Materialien und Parameter der diffraktionsverstärkenden Schicht sind:

Aluminium, Kupfer, Silber oder Chrom bevorzugt mit einer Schichtdicke im Bereich von 2 nm bis 20 nm, d. h. eine dünne, transparente metallische Schicht.

Hochbrechende transparente Materialien (HRI) wie $TiO_2$, $ZnS$, $ZrO_2$, oder $Si_3N_4$ bevorzugt mit einer Schichtdicke im Bereich von 50 nm bis 250 nm.

Niedrigbrechende transparente Materialien (LRI) wie $MgF_2$ oder $SiO_2$ bevorzugt mit einer Schichtdicke im Bereich von 50 nm bis 250 nm.

Die Reliefstruktur 521 weist beispielsweise eine sinusförmige, rechteckige, symmetrische oder asymmetrische, dreieckige oder noch komplexere Reliefform auf.

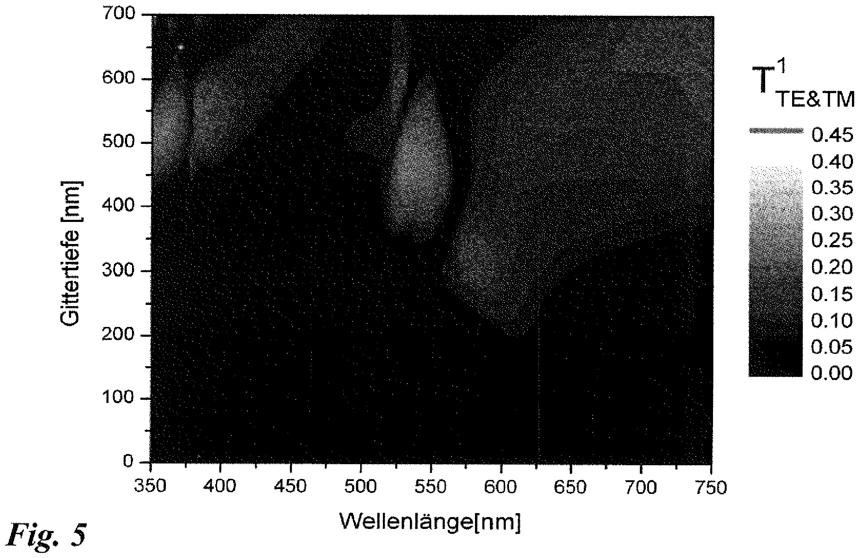

Es hat sich hierbei gezeigt, dass zur Bereitstellung einer transmissiven Beugungsstruktur im obigen Sinne nicht nur die Reliefparameter Relieftiefe und Gitterperiode eine Rolle spielen, sondern auch die Schichtdicke sowie das Material der diffraktionsverstärkenden Schicht. Fig. 5 verdeutlicht hierbei die ermittelte Abhängigkeit zwischen Diffraktionseffizienz in der ersten Ordnung ($T_{-1}$) und der Relieftiefe als Funktion der Wellenlänge und der Relieftiefe. Die Gitterperiode beträgt bei diesem Beispiel 650 nm und die Reliefform ist sinusförmig. Die diffraktionsverstärkende Schicht besteht bei diesem Beispiel aus ZnS eingebettet in ein Polymer mit einer Schichtdicke der ZnS-Schicht von 120 nm. Weiter ist die über die TE und TM-Polarisation gemittelte Diffraktionseffizienz gezeigt.

Hierauf basierende Untersuchungen haben gezeigt, dass so zur Bereitstellung von transmissiven Beugungsstrukturen in obigem Sinne bevorzugt eine Gittertiefe von mehr als 200 nm und besonders bevorzugt von mehr als 400 nm zu wählen ist. Gleichzeitig wird die Relieftiefe kleiner als 700 und insbesondere kleiner 600 nm gewählt.

Bei einer Reliefstruktur 521, die für die Farbe grün (Diffraktionspeak zwischen 500 nm und 550 nm) optimiert ist, liegt die Relieftiefe beispielsweise bevorzugt im Bereich zwischen 400 nm und 550 nm.

Um eine möglichst spektral begrenzte signifikante Diffraktion zu erzielen und so den Kontrast zu erhöhen, hat sich weiter als vorteilhaft erwiesen, als diffraktionsverstärkende Schicht 23 eine HRI-Schicht mit einer Schichtdicke zwischen 50 nm bis 300 nm, bevorzugt zwischen 75 nm und 150 nm einzusetzen.

Spektral begrenzt heißt hier, dass außerhalb dieses Bereichs die Diffraktion kleiner als 10%, besser kleiner als 5% ist.

Die direkte Transmission, d.h. die Transmission in die nullte Ordnung, ist im sichtbaren Spektralbereich über einen Schichtdickenbereich von 0 bis 300 nm der diffraktionsverstärkenden Schicht 23 typischerweise über 50%. Es hat sich herausgestellt, dass die Diffraktionseffizienz in die nullte Ordnung im Schichtdickenbereich der diffraktionsverstärkenden Schicht 23 von 75 nm bis 125 nm besonders gleichmäßig ist. Damit verändert eine eingebettete transmissive Beugungsstruktur mit einer transmissionsverstärkenden Schicht 23 dieser Schichtdicke die Transmission des von den ein oder mehreren Licht emittierenden Elementen 71 bei Aktivierung abgestrahlten Lichts, d.h. das Erscheinungsbild der von diesen dargestellten Information, bei normaler Betrachtung kaum. Das Erscheinungsbild erscheint somit farbneutral.

Weiter haben Untersuchungen gezeigt, dass die Gitterperiode der Reliefstrukturen 521 bevorzugt wie folgt zu wählen ist:

Für einen Farbänderungseffekt in Richtung grün ist die Gitterperiode bevorzugt im Bereich von 620 nm bis 690 nm zu wählen, in Richtung rot ist die Gitterperiode im Bereich von 735 bis 800 nm und in Richtung blau im Bereich von 530 nm bis 600 nm zu wählen.

Besonders vorteilhaft ist hierbei die Wahl folgender Strukturparameter: Farbänderungseffekt in Richtung Rot: Gitterperiode = 770 nm; Schicht 23 als ZnS-Schicht einer Schichtdicke von 120 nm; Gittertiefe = 570 nm. Farbänderungseffekt in Richtung Grün: Gitterperiode = 650 nm; Schicht 23 als ZnS-Schicht einer Schichtdicke von 120 nm; Gittertiefe = 450 nm. Farbänderungseffekt in Richtung Blau: Gitterperiode = 570 nm; Schicht 23 als ZnS-Schicht einer Schichtdicke von 120 nm; Gittertiefe = 400 nm.

Durch die entsprechende Wahl der Reliefparameter der Reliefstruktur 521 in den oben beschriebenen Wertebereichen lässt sich so eine entsprechende Veränderung der Farbe des mit diesen Strukturen belegten Teilbereichs des Bereichs 30 beim Verkippen des Sicherheitselements 2 erzielen. Weiter können durch entsprechende Kombination von Reliefstrukturen, die gemäß den oben angeführten Parametern auf rot, grün, blau optimiert sind, mittels additiver Farbmischungen auch Echtfarbenbilder realisiert werden, wie dies weiter unten noch detailliert erläutert wird.

Sollen Licht emittierende Elemente eingesetzt werden, welche eine einzige Farbe abstrahlen, wird vorzugsweise das Beugungsgitter zur Erzielung eines höchsten Kontrastes im Bereich des vorgesehenen Betrachtungswinkels optimiert.

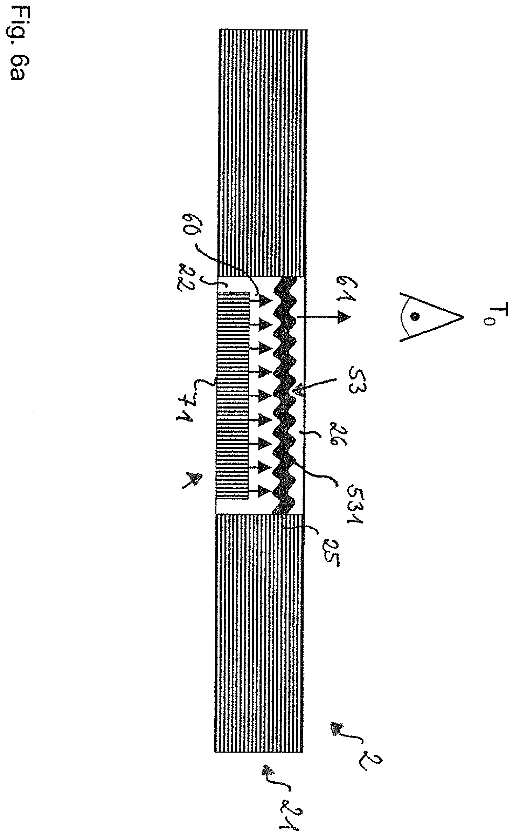

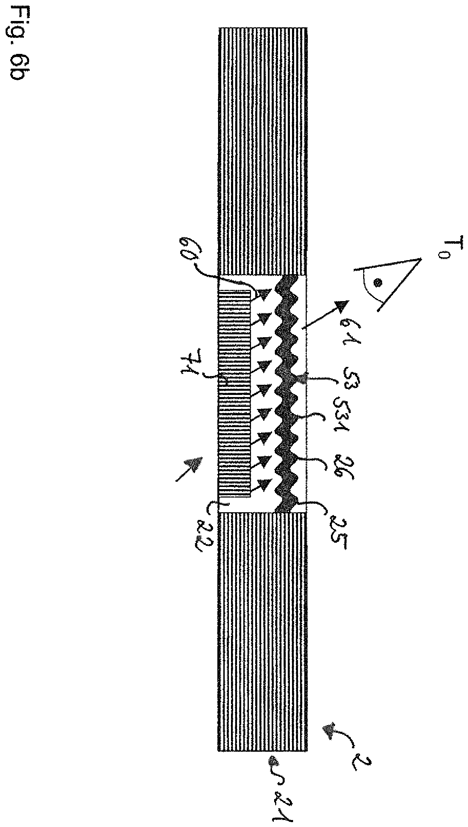

Fig. 6a und Fig. 6b verdeutlichen ein weiteres Ausführungsbeispiel des Sicherheitselements 2.

In dem Bereich 30 weist das Substrat 21 eine transmissive Beugungsstruktur 53 auf. In dem Bereich 30 weist das Substrat 21 hierzu eine transparente Schicht 22 und eine Wellenleiterschicht 25 auf, wobei zwischen der transparente Schicht 22 und der Wellenleiterschicht 25 eine Reliefstruktur 531 abgeformt ist. In dem Ausführungsbeispiel nach Fig. 6a und Fig. 6b weist das Substrat 21 so in dem Bereich 30 zwei transparente Polymerschichten 22 und 26 und eine zwischen diesen angeordnete Wellenleiterschicht 25 auf, die vorzugsweise von einer HRI-Schicht gebildet ist. Als Material für die HRI-Schicht wird bevorzugt $TiO_2$, ZnS, $ZrO_2$, oder $Si_3N_4$ verwendet. Die Schichtdicke der HRI-Schicht beträgt vorzugsweise zwischen 50 nm und 250 nm.

Die Reliefstruktur 531 weist eine sinusförmige, rechteckige, symmetrische, asymmetrische, dreieckige oder noch komplexere Reliefform auf. Bei der Reliefstruktur 531 handelt es sich um eine spezielle Beugungsstruktur nullter Ordnung (Gitterperiode meist kleiner als Zielwellenlänge, welche vorzugsweise die Wellenlänge des Lichts ist, welches das zugeordnete Licht emittierende Element abstrahlt. Die Gitterperiode der Reliefstruktur 531 ist hierbei bevorzugt zwischen 250 nm und 700 nm, weiter bevorzugt zwischen 300 nm und 600 nm und insbesondere bevorzugt zwischen 350 nm und 600 nm gewählt.

Das Sicherheitselement 2 weist weiter noch ein oder mehrere Licht emittierende Elemente 71 auf, welche, wie in den Figuren Fig. 6a und Fig. 6b gezeigt, unterhalb der transmissiven Beugungsstruktur 53 angeordnet sind. Das bei Aktivierung des Licht emittierenden Elements 71 in einem Abstrahlbereich des Licht emittierenden Elements abgestrahlte Licht transmittiert durch die transmissive Beugungsstrukturen 53 und trifft als Licht 61 in das Auge des Betrachters. Fig. 6a verdeutlicht hierbei die Betrachtungssituation bei Betrachtung des Sicherheitselements 2 senkrecht zu einer von der Rückseite des Sicherheitselements 2 aufgespannten Ebene und Fig. 6b eine hierzu gekippte Betrachtung des Sicherheitselements 2. Beim Verkippen ergibt sich der im Folgenden beschriebene optische Effekt, der auf einer Verschiebung der Resonanzbedingungen mittels Verkippen beruht:

Untersuchungen haben gezeigt, dass zur Erzielung der Wirkung einer transmissiven Beugungsstruktur nicht nur die Reliefparameter Relieftiefe und Gitterperiode, sondern auch die Schichtdicke der hochbrechenden Wellenleiterschicht (HRI) entsprechend gewählt werden muss, um den gewünschten Effekt zu erzielen. Typischerweise ist die Schichtdicke der hochbrechenden Wellenleiterschicht (HRI) im Bereich von 50 nm bis 250 nm.

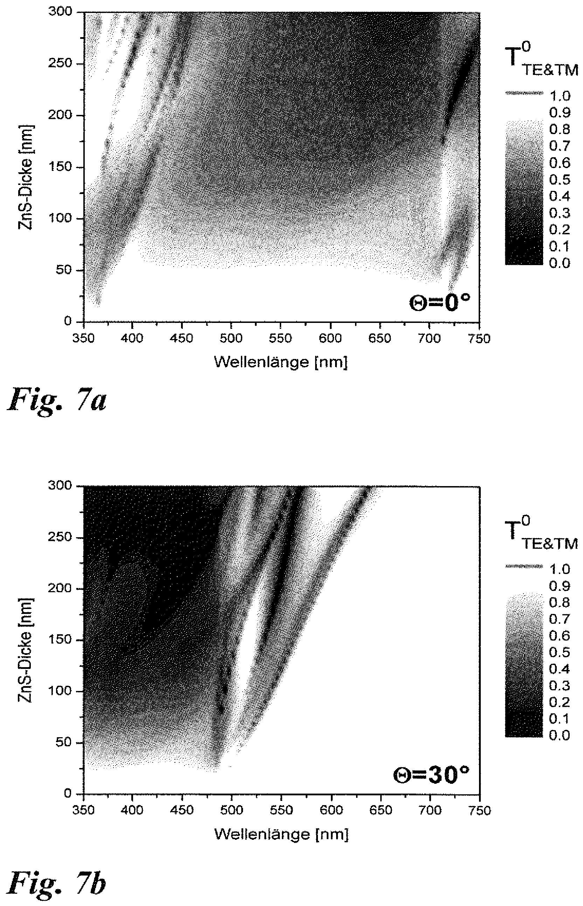

Fig. 7a und Fig. 7b verdeutlichen hierzu die Abhängigkeit der Transmission der Beugungsstruktur 53 bei senkrechter (0°) bzw. gekippter (30°) Beleuchtung bzw. Betrachtung in Abhängigkeit von der Wellenlänge und der Schichtdicke der hochbrechenden Wellenleiterschicht, wobei hier eine Reliefstruktur mit einem sinusförmigen Reliefform, einer Gitterperiode von 450 nm und einer Gittertiefe von 380 nm gewählt ist. Fig. 7a zeigt hierbei die Transmission bei senkrechter und Fig. 7b bei gekippter Betrachtung. Das Material für die hochbrechende Wellenleiterschicht wurde beispielhaft ZnS gewählt. Hierdurch werden beispielsweise die oben beschriebenen Kontrasteffekte, insbesondere bei Einsatz von Licht emittierenden Elementen bewirkt, welche gleichfarbiges Licht abstrahlen.

Aus derartigen Untersuchungen hat sich ergeben, dass bei gekippter Betrachtung ein Transmissionsminimum mit T < 20% erst ab einer Dicke der hochbrechenden transparenten Wellenleiterschicht von mehr als 130 nm erzielt werden kann. Dieses Transmissionsminimum ist essentiell, um einen für das menschliche Auge deutlich wahrnehmbaren Farbeindruck zu erzeugen. Weiter haben diese Untersuchungen gezeigt, dass die Transmission bei senkrechter Beleuchtung selbst bis zu einer Dicke der hochbrechenden, transparenten Wellenleiterschicht von 150 nm deutlich über 25% ist. Dies ermöglicht ein farblich unverfälschtes, d. h. farbneutrales Erscheinungsbild in Transmission bei diesem Winkel. Die Untersuchungen haben so ergeben, dass die Dicke der hochbrechenden transparenten Wellenleiterschicht vorzugsweise im Bereich von 130 nm bis 250 nm, weiter bevorzugt im Bereich von 150 nm bis 220 nm zu wählen ist.

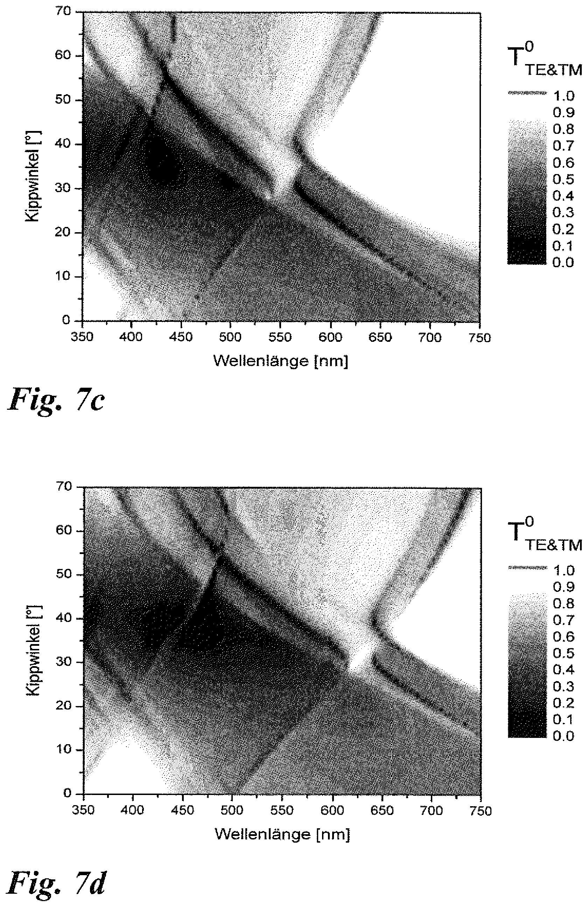

Weiter haben Untersuchungen gezeigt, dass das spektrale Verhalten des Beugungsgitters 53 auch durch die Gittertiefe maßgeblich beeinflusst wird. So zeigt Fig. 7c die Abhängigkeit der Transmission des Beugungsgitters 53 bei Variation des Kippwinkels bei einer Gitterperiode von 475 nm und einer Relieftiefe von 365 nm und Fig. 7d bei einer Gitterperiode von 550 nm und einer Relieftiefe von 430 nm, wobei es sich bei der Reliefform um ein Sinusprofil handelt und die hochbrechende Wellenleiterschicht eine Schichtdicke von 180 nm aufweist.

Hierauf aufbauende Untersuchungen haben gezeigt, dass bei gekippter Betrachtung ein Transmissionsminimum mit T < 20% erst ab einer Relieftiefe von über 300 nm erzielbar ist, wobei die senkrechte Transmission selbst bis zu einer Gittertiefe von 550 nm deutlich über 25% liegt. Vorzugsweise wird so die Relieftiefe der Reliefstruktur 531 im Bereich von 300 nm bis 550 nm, weiter bevorzugt im Bereich von 350 bis 500 nm gewählt.

Bei Wahl dieser Parameter ergibt sich so beispielsweise ein Farbeffekt von farbneutral bei senkrechter Betrachtung zu farbig, bei einem Kippwinkel von 30° und wieder farbneutral bei einem Kippwinkel von 60°, beispielsweise bei Wahl einer Relieftiefe von 365 nm, einer Schichtdicke der transparenten Wellenleiterschicht 180 nm und einer Gitterperiode von 475 nm. Weiter zeigt sich beispielsweise ein Farbeffekt von farbneutral bis leicht bläulich bei senkrechter Betrachtung zu rot bei einem Kippwinkel von ca. 30° und wieder nahezu farbneutral bis leicht rötlich bei einem Kippwinkel von 60°, bei Wahl einer Relieftiefe von 430 nm, einer Gitterperiode von 550 nm und einer Schichtdicke der transparenten Wellenleiterschicht von 180 nm.

Die Gitterperiode der Reliefstruktur 531 wird vorzugsweise im Bereich von 250 nm bis 700 nm, weiter bevorzugt im Bereich von 350 nm bis 600 nm gewählt. Durch die Wahl der Periode lässt sich insbesondere die sich beim Verkippen zeigende Farbe einstellen. Vorzugsweise wird die Periode hierbei entsprechend der Wellenlänge der zugeordneten Licht emittierenden Elemente gewählt.

Weiter haben Untersuchungen gezeigt, dass sich die Effekte nicht nur für Lineargitter sondern auch für Kreuzgitter, hexagonale Gitter oder noch komplexere Gitterformen der Reliefstrukturen erzielen lassen. Auch hier ist die entsprechende Wahl der Gittertiefe wie oben beschrieben ein entscheidender Faktor zur Erzielung der entsprechenden Effekte.

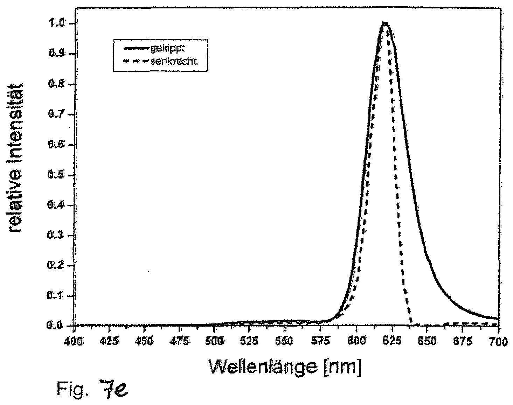

Die in den Figuren Fig. 2 bis Fig. 7d erläuterten transmissiven Beugungsstrukturen 51 bis 53 können auch dazu verwendet werden, die spektrale Abstrahlcharakteristik von ein oder mehreren der Licht emittierenden Elemente zu verändern. Beispielsweise kann das Leuchtspektrum eines rot leuchtenden, Licht emittierenden Elements, beispielsweise eine rot leuchtenden OLED mit einem Peak Maximum der Lichtemission bei 620 nm, durch eine gemäß Fig. 7d ausgestaltete transmissive Beugungsstruktur verändert werden. Bei Messung unter einem Winkel von 30° wird der längerwellige Bereich oberhalb von 620 nm verstärkt durchgelassen als der kurzwellige Bereich, wie dies anhand von Fig. 7e verdeutlicht ist, welche eine Anwendung einer transmissiven Struktur gemäß Fig. 7d auf die Abstrahlcharakteristik eines Licht emittierenden Elements mit einem Peak Maximum bei 620 nm des abgestrahlten Lichts verdeutlicht. Dies ist zwar für das Auge nur gering erkennbar, aber gut messbar.

Vorzugsweise ist so keine Information sichtbar, wenn die Licht emittierenden Elemente nicht aktiviert sind, und wenn diese aktiviert sind, zeigen sich die oben beschriebenen Effekte und es wird insbesondere eine Information sichtbar.

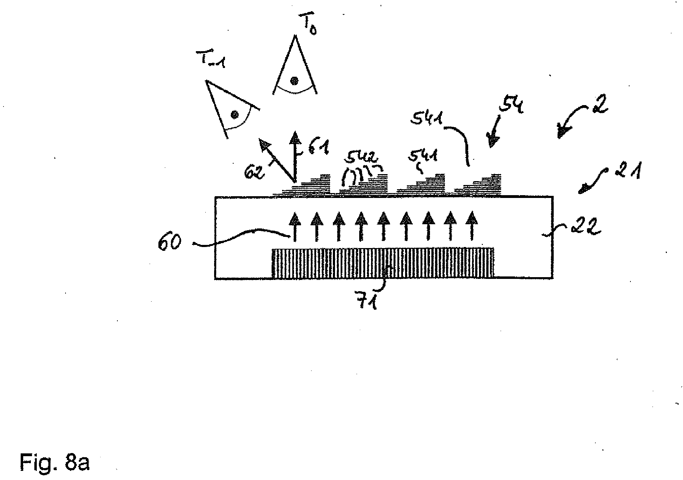

Fig. 8a bis Fig. 9c verdeutlichen nun eine Ausbildung des Sicherheitselements 2 gemäß einer dritten Klasse von transmissiven Beugungsstrukturen.

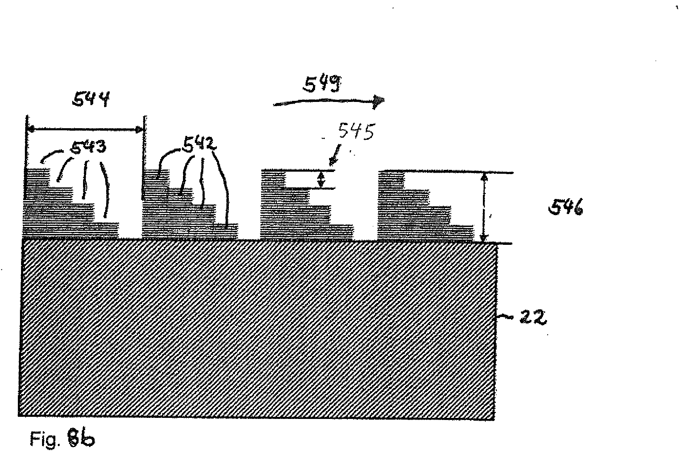

Fig. 8a zeigt das Sicherheitselement 2 mit dem Substrat 21, welches in dem Bereich 30 eine transmissive Beugungsstruktur 54 aufweist. Die Beugungsstruktur 54 besteht aus einer Vielzahl von Elementen 542, die jeweils zumindest eine im Wesentlichen parallel zu einer Grundebene angeordnete Elementfläche 543 aufweisen. Dies ist auch in Fig. 8b gezeigt, welche eine vergrößerte Darstellung eines Teilbereichs des Bereichs 30 zeigt. Die Grundebene wird hierbei vorzugsweise von der Rückseite des Substrats 21 bzw. des Sicherheitselements 2 gebildet. Es ist jedoch auch möglich, dass die Grundebene zu der von der Rückseite des Substrats aufgespannten Ebene eine Neigung besitzt und leicht gegen diese Ebene verkippt ist.

Die Elemente 542 sind im Bezug auf zumindest eine parallel zur Grundebene verlaufende erste Richtung 549 gegeneinander versetzt angeordnet und die Elementflächen 543 benachbarter Elemente 542 in einer senkrecht zur Grundebene stehenden Richtung gemäß einer von der zumindest einen ersten Richtung 549 abhängenden Variationsfunktion beabstandet mit einem Abstand 545 oder einem Vielfachen des Abstands 545. Die Variationsfunktion ist hierbei eine periodische Funktion und in jeder Periode 544 der Variationsfunktion sind zumindest zwei der in der ersten Richtung 549 aufeinanderfolgende Elemente vorgesehen.

In dem Ausführungsbeispiel nach Fig. 8a und Fig. 8b bilden die Elemente 542 hierbei Teilbereiche einer Schicht 22 des Substrats 21 aus, und zwar derart, dass die Elementflächen 543 die Reliefstruktur zumindest eines Teilbereichs einer Oberfläche der Schicht 22 bestimmen. In die Schicht 22 wird so zur Herstellung der Beugungsstruktur 54 eine Reliefstruktur 541 abgeformt, die so ausgebildet ist, dass sie eine entsprechende Abfolge von Elementflächen 543 aufweist.

Weiter ist es auch möglich, dass die Reliefstruktur 541 in eine auf der Schicht 22 aufgebrachte transparente Schicht, beispielsweise eine transparente Replizierlackschicht oder eine transparente HRI oder LRI-Schicht eingebracht ist oder die Reliefstruktur 541 noch von einer porösen Schicht bedeckt ist. Hierzu wird auf die diesbezüglichen Ausführungsformen nach Fig. 2 verwiesen.

Die Periode 544 bestimmt den Winkel für die verschiedenen Diffraktionsordnungen. Damit die nullte Beugungsordnung räumlich ausreichend von den höheren Beugungsordnungen separiert ist, ist die Periode 544 vorzugsweise kleiner als 3 $\mu$m, insbesondere kleiner als 2 $\mu$m zu wählen. Weiter sollte die Periode auch nicht kleiner als 750 nm, bevorzugt nicht kleiner als 1 $\mu$m gewählt werden. Der Abstand 545 ist vorzugsweise in dem Bereich von 50 nm bis 1500 nm, weiter bevorzugt zwischen 200 nm und 1000 nm zu wählen. Die Anzahl der in einer Periode 544 vorgesehenen Elemente 542 liegt bevorzugt im Bereich von 3 bis 10, besonders bevorzugt zwischen 3 und 6.

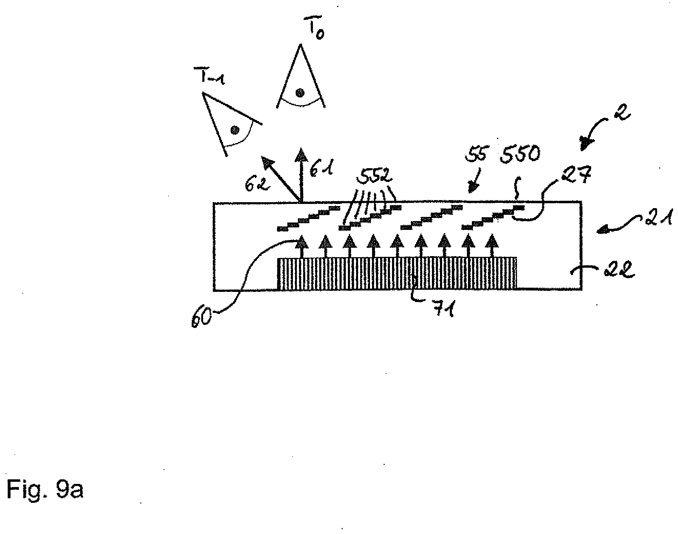

Als Variationsfunktion werden bevorzugt Funktionen eingesetzt, welche wie in Fig. 8a bis Fig. 9b gezeigt eine treppenstufenförmige, periodische Abfolge der Elementflächen 543 beschreiben. Neben der asymmetrischen Anordnung der Stufen innerhalb der Periode 544, wie in den Figuren 8a und 9a gezeigt, ist es jedoch auch möglich, dass eine symmetrische Anordnung der Stufen beispielsweise in Form einer Stufenpyramide erfolgt.

Durch die Beugungsstrukturen 54 und 55 lassen sich interessante Effekte erzielen. Durch die Wahl des Abstands 545 bzw. 555 wird die sich unter unterschiedlichen Winkeln in Transmission zeigende Farbe stark beeinflusst und durch die Periode 544 bzw. 555 wird der Kippwinkel eingestellt, unter dem sich eine Änderung der das Farbspektrum beeinflussenden Eigenschaften der Beugungsstrukturen 54 und 55 ergibt. Der sich bei senkrechter Betrachtung zeigende Farbeindruck wird hierbei stark durch den Abstand 545 bzw. 555 bestimmt.

Durch entsprechende Wahl des Abstands 545 bzw. 555 lässt sich hierbei nicht nur der Effekt erzielen, dass bei senkrechter Betrachtung die Beugungsstrukturen 54 und 55 einen farbigen Eindruck generieren und beim Verkippen das Element farbneutral wird, sondern es kann auch ein dunkles oder schwarzes Erscheinungsbild erzielt werden. Wird so beispielsweise bei der in Fig. 8a und Fig. 9a gezeigten Ausbildung der Reliefstrukturen 54 und 55 die gesamte Gittertiefe mit 1500 nm (Abstand 554 = 300 nm) und die Periode mit 2500 nm gewählt, ergibt sich ein spektrales Verhalten, bei dem der Spektralbereich von 460 bis 660 in Transmission bei senkrechter Betrachtung kleiner als 10% ist und bei einem Kippwinkel von 55 Grad bis 65 Grad moderat transparent (t > 30%) ist und damit bei Hinterleuchtung erkennbar ist.

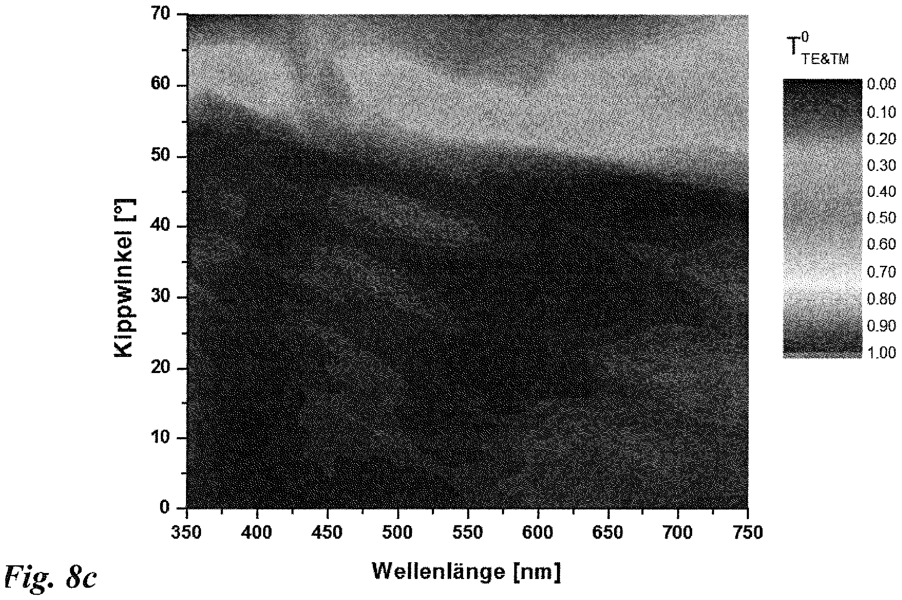

Ein möglicher Effekt, der durch die transmissive Beugungsstruktur 54 erzielt wird, ist ein Kippeffekt von stark abgedunkelten Licht emittierenden Elementen zu hell erleuchtetem Licht emittierenden Element. Fig. 8c zeigt beispielhaft das spektrale Verhalten einer transmissiven Beugungsstruktur 54, welche bei senkrechter Betrachtung das von dem Licht emittierenden Element 71 abgestrahlte Licht nahezu komplett in die höheren Ordnungen ablenkt. Im für das Auge gut wahrnehmbaren Spektralbereich von 460 nm bis 660 nm (Empfindlichkeit des menschlichen Auges größer als 5%) ist für diesen Kippwinkel die Transmission in die nullte Beugungsordnung kleiner als 10%, sodass das von dem Licht emittierenden Element 71 ausgestrahlte Licht weitgehend blockiert wird und ein dunkles oder schwarzes Erscheinungsbild für den Betrachter sichtbar ist. Fig. 8c verdeutlicht hierbei die Transmission bei Variation des Kippwinkels von 0 bis 70°, einer Periode von 2500 nm mit 5 Elementen pro Periode und einer gesamten Relieftiefe von 1500 nm. Bei relativ flachem Betrachtungs- bzw. Kippwinkel von 55° bis 65° ist in diesem Beispiel die transmissive Beugungsstruktur moderat transparent (größer als 30%) und damit das von dem Licht emittierenden Element abgestrahlte Licht erkennbar.

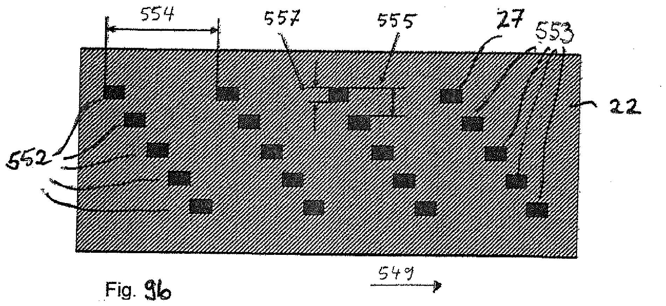

Weiter ist es auch möglich, dass die Beugungsstruktur 54 von Elementen gebildet wird, welche in einer transparenten Schicht des Substrats 21 eingebettet sind. Diese Ausführungsform ist in den Figuren Fig. 9a und Fig. 9b verdeutlicht. Bzgl. der Anordnung und Ausbildung der Elemente 552, der Elementflächen 553, der Periode 554 und dem Abstand 555 wird hierbei auf die diesbezüglichen Ausführungen zu den Elementen 542, den Elementflächen 543, der Periode 544 und dem Abstand 545 nach den Figuren Fig. 8a bis Fig. 8c verwiesen.

Die Periode 554 wird hierbei bevorzugt kleiner als 3 μm, bevorzugt kleiner als 2 μm gewählt und im Weiteren bevorzugt nicht kleiner als 750 nm und nicht kleiner als 1 μm gewählt.

Der Abstand 555 liegt bevorzugt im Bereich von 50 nm bis 1500 nm, weiter bevorzugt zwischen 200 nm und 1000 nm.

Die Anzahl der Elemente 552 pro Periode wird bevorzugt zwischen 3 und 10, weiter bevorzugt zwischen 3 und 6 gewählt. Die maximale Relieftiefe pro Periode beträgt hierbei bevorzugt weniger als 2 μm.

Bei der Ausführungsform nach Fig. 9a und Fig. 9b beträgt die Dicke 557 der Elemente 552 vorzugsweise zwischen 10 nm und 600 nm, weiter bevorzugt zwischen 50 nm und 400 nm. Die Elemente 552 werden hierbei bevorzugt von einer hochbrechenden Schicht, d.h. einer HRI-Schicht gebildet, welche aus einer der bereits vorgehend hierfür beschriebenen Materialien gebildet sein kann. Die die Elemente 552 umgebende Schicht 22 besteht vorzugsweise aus eine polymeren, transparenten Kunststoffmaterial mit einem Brechungsindex von etwa 1,5.

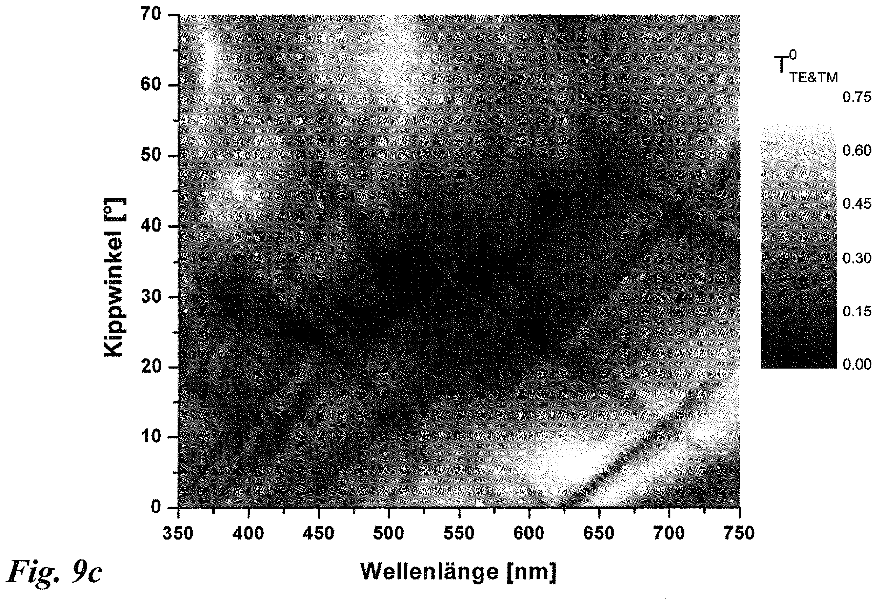

Fig. 9c verdeutlicht beispielhaft das Transmissionsverhalten einer transmissiven Beugungsstruktur 55 bei Variation des Kippwinkels von 0° bis 70°, einer Gitterperiode 555 von 1500 nm, der Anordnung von 5 Elementen 552 pro Periode 555, einem Abstand 555 von 430 nm und der Ausbildung der Elemente 552 aus einem HRI-Material (ZnS) mit einer Dicke 557 von 300 nm. Bei senkrechter Betrachtung wir das von dem Licht emittierenden Element 71 abgestrahlte Licht nahezu farbneutral transmittiert. Bei dem moderaten Betrachtungswinkel von 35° dagegen ist die Transmission, im für das Auge gutwahrnehmbaren Spektralbereich von 460 nm bis 660 nm, weitgehend kleiner als 10%. Das Sicherheitselement erscheint unter diesem Winkel von 35° dunkel, ähnlich wie bei sogenannten "optical firewalls".

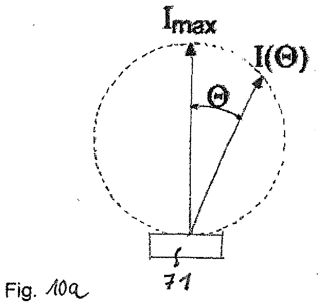

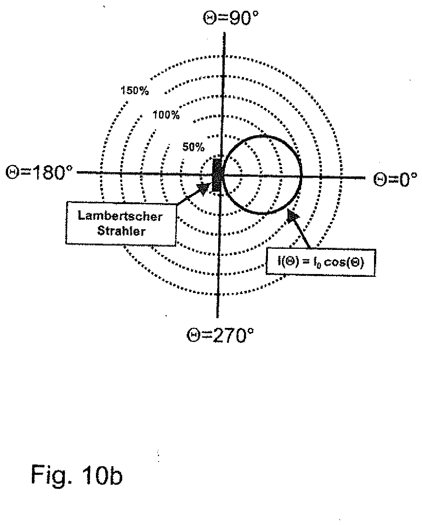

Die Licht emittierenden Elemente 71 werden vorzugsweise von flexiblen Flächenstrahlern gebildet. Eine Besonderheit von Flächenstrahlern, z.B. organischen Leuchtdioden (OLEDs) ist eine diffuse bzw. wenig gerichtete Abstrahlcharakteristik. Im Extremfall verhalten sich solche Flächenstrahler wie ein sog. Lambertscher Strahler, wie dies anhand der Figuren Fig. 10a und Fig. 10b verdeutlicht ist. Bei einem Winkel Θ gegen die Flächennormale zu der von der Rückseite des Sicherheitselements 2 aufgespannten Ebene und einer Größe A des Abstrahlbereichs des Flächenstrahlers ist die Strahlungsstärke I(Θ) proportional zu A*cos(Θ).

Gemäß einem bevorzugten Ausführungsbeispiel der Erfindung sind ein oder mehrere der ein oder mehreren, in dem Bereich 30 angeordneten transmissiven Beugungsstrukturen nun als diffraktive strahlformende Strukturen ausgebildet, welche insbesondere auch die Abstrahlcharakteristik der Licht emittierenden Elemente verändern. Hierdurch können entsprechende optisch variable Effekte generiert werden oder auch die Abstrahlcharakteristik der Licht emittierenden Elemente, insbesondere bei einer Ausbildung als Flächenstrahler wie oben gemäß Fig. 10a und Fig. 10b dargelegt optimiert werden.

Als diffraktive strahlformende Strukturen werden insbesondere Volumenhologramme, Blaze-Strukturen, diffraktive Linsen, beispielsweise Fresnel-Linsenstruktur oder diffraktive Strukturen eingesetzt, welche linsenähnliche strahlformende Eigenschaften besitzen. Weiter ist es vorteilhaft, ein oder mehrere dieser transmissiven Beugungsstrukturen nebeneinander beispielsweise in einem zweidimensionalen Raster anzuordnen. So kann beispielsweise jedem Licht emittierenden Element eine der transmissiven Beugungsstrukturen zugeordnet werden, welches die Abstrahlcharakteristik des jeweiligen Licht emittierenden Elements modifiziert. Insbesondere wenn die leuchtende Fläche pixeliert ausgebildet ist, kann jedes der Licht emittierenden Elemente als Lambertscher Strahler betrachtet werden. In diesem Fall kann die Abstrahlcharakteristik einzelner Pixel mit einer jeweils zugeordneten transmissiven Beugungsstruktur modifiziert werden. Dabei müssen die transmissiven Beugungsstrukturen mit den Display-Pixeln, also den einzelnen Licht emittierenden Elementen des Displays, räumlich korreliert sein.

In einer bevorzugten Ausführungsform weist der erste Bereich 30 so ein oder mehrere Zonen auf, welche bevorzugt gemäß einem ein oder zweidimensionalen Raster angeordnet sind, welches beispielsweise das Pixelraster des Displays definiert. In jeder der Zonen ist eine der Licht emittierenden Elemente 71 angeordnet sowie mindestens eine, der jeweiligen Zonen zugeordnete, transmissive Beugungsstruktur angeordnet.

Die diffraktiven Beugungsstrukturen sind hierbei vorzugsweise in Form von einfachen Liniengittern ausgebildet. Die diese Liniengitter beinhaltenden Bereiche sind wie im Folgenden beschrieben über die mit den Licht emittierenden Elementen belegten Bereiche des Sicherheitselements verteilt. Je nach Ausrichtung der Gitterlinien und Position können so unterschiedliche Winkelverteilungen der Abstrahlung realisiert werden.

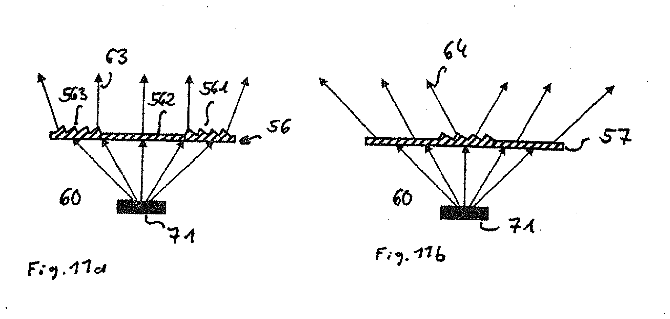

Fig. 11a verdeutlicht so eine Zone eines derart ausgebildeten Sicherheitselements mit einer transmissiven Beugungsstruktur 56 und einem Licht emittierenden Element 71. Die transmissive Beugungsstruktur 56 weist Reliefstrukturen 563 und 561 mit einer Vielzahl von parallelen Gitterlinien sowie einem Bereich 562 auf, in dem keine Gitterlinien vorgesehen sind. Wie in Fig. 11a gezeigt, sind so die Gitterlinien der Reliefstrukturen 563 und 561 in den Randbereichen der Zone vorgesehen, insbesondere in einem Bereich der Zone vorgesehen, in dem das zugeordnete Licht emittierende Element 71 Licht in einem für den gewünschten optischen Effekt ungünstigen Winkel abstrahlt, und in einem zentralen Bereich der Zone nicht vorgesehen, insbesondere in dem Bereich nicht vorgesehen, in dem das zugeordnete Licht emittierende Element 71 Licht in die gewünschte Richtung abstrahlt. Ein derartiges Sicherheitselement strahlt Licht beispielsweise bevorzugt senkrecht zu der Ebene des Sicherheitselements ab.

Fig. 11b zeigt den umgekehrten Fall, bei dem in einem zentralen Teilbereich der Zone die Beugungsstruktur eine Reliefstruktur 564 mit einer Vielzahl von parallelen Gitterlinien aufweist und in dem Randbereich der Zone jeweils keine Gitterlinien und damit ein Bereich 562 vorgesehen ist. Ein derartiges Sicherheitselement strahlt Licht beispielsweise bevorzugt nicht senkrecht zu der Ebene des Sicherheitselements ab.

Das von den Licht emittierenden Elementen 71 abgestrahlte Licht 60 wird so von den transmissiven Beugungselementen 56 bzw. 57 wie in den Figuren Fig. 11a und Fig. 11b gezeigt durch Diffraktion abgelenkt, sodass dadurch das durch die transmissiven Beugungsstrukturen 56 bzw. 57 transmittierte Licht 63 bzw. 64 die in den Figuren Fig. 11a und Fig. 11b gezeigte Strahlform besitzt. Durch die Ausgestaltung der Zonen des Sicherheitselements gemäß Fig. 11a bzw. Fig. 11b können so linsenähnliche Effekte generiert werden, wobei die Gitterparameter, wie Gitterperiode, Tiefe, Form und Material gemäß den obigen Ausführungsbeispielen nach Fig. 2 bis Fig. 9 gewählt werden.

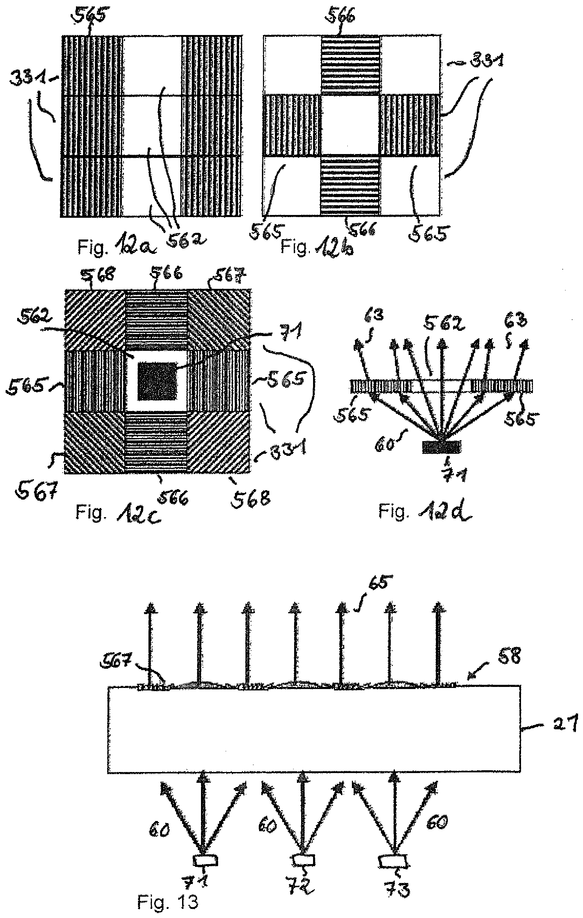

Weiter ist es auch möglich, die Ausrichtung der Gitterlinien in den Zonen bereichsweise unterschiedlich zu wählen oder auch von Zone zu Zone unterschiedlich zu wählen, um so die Abstrahlcharakteristik in jeder Ebene/Blickrichtung zu ändern bzw. von Zone zu Zone zu ändern. Durch eine geschickte Anordnung der strahlformenden Beugungsstrukturen ist beispielsweise ein Muster wie ein Logo, ein Währungszeichen o.ä. in dem Bereich mit dem oder den Licht emittierenden Element(en) erzeugbar, wobei der Helligkeitskontrast des Musters mit dem Betrachtungswinkel variiert. Auch ein Flip zwischen zwei oder mehreren Mustern ist denkbar, beispielsweise ein Flip zwischen einem Währungszeichen und einer Denomination. Dies ist im Folgenden beispielhaft anhand der Figuren Fig. 12a bis Fig.12d gezeigt:

Fig.12a bis Fig. 12c zeigen jeweils beispielhaft eine Draufsicht auf eine Zone, welche in mehrere Teilbereiche 331 unterteilt ist, beispielsweise in neun Teilbereiche 331 unterteilt ist. Bei den Ausführungsbeispielen nach Fig. 12a sind hierbei die im rechten und linken Randbereich angeordneten Teilbereiche 331 jeweils mit einer Reliefstruktur 565 mit parallelen Gitterlinien belegt, wobei die parallelen Gitterlinien wie in Fig. 12a gezeigt, horizontal verlaufen. In einem streifenförmigen zentralen Bereich sind die Teilbereiche 311 von einem Bereich 562 ohne Gitterlinien belegt. Bei der Ausführungsform nach Fig. 12b sind weiter die oberhalb und unterhalb des zentralen Bereichs liegenden Teilbereiche 311 mit einer Reliefstruktur 565 belegt, bei der die Gitterlinien horizontal verlaufen. In dem Ausführungsbeispiel nach Fig. 12c sind zusätzlich in der Zone Teilbereiche 331 vorgesehen, welche wie in Fig. 12c gezeigt, mit Reliefstrukturen 567 und 568 belegt sind, bei denen die Gitterlinien in einem 45°-Winkel zu den Gitterlinien der Reliefstrukturen 565 bzw. 566 verlaufen. Durch die in den Teilbereichen 331 angeordneten Reliefstrukturen 565 bis 568 wird das von dem Licht emittierenden Element 71 ausgestrahlte Licht 60, wie in Fig. 12d beispielhaft gezeigt, jeweils in einer senkrecht auf der Orientierung der Gitterlinien stehenden Richtung in Richtung des Zentrums der Zonen gebeugt, sodass sich durch die Ausführungsformen nach Fig. 12a bis Fig. 12c jeweils eine entsprechende Strahlformung ergibt, bei der das ausgestrahlte Licht in ein oder mehreren Raumrichtungen in Richtung des Zentrums der jeweiligen Zone gebeugt wird, wie dies in Fig. 12d für das transmittierte Licht 63 gezeigt ist.

Vorzugsweise weist die Reliefform der Strukturelemente der Reliefstrukturen 561, 563 und 565 bis 568 hierbei eine asymmetrische Formgebung auf, wie dies auch in der Figur Fig. 11a gezeigt ist. Die Strukturelemente dieser Reliefstrukturen weisen vorzugsweise eine dreiecksförmige Formgebung auf, wobei die steilere der Flanke hierbei jeweils in Richtung des Zentrums der jeweiligen Zone hin orientiert angeordnet ist.

Weiter ist es auch möglich, dass ein oder mehrere der in den Zonen angeordneten transmissiven Beugungsstrukturen Reliefstrukturen in Form einer diffraktiven Linse, insbesondere einer Fresnel-Linse oder eines Kreisgitters aufweisen. Fig. 13 zeigt einen Ausschnitt aus einem entsprechenden Sicherheitselement mit den Licht emittierenden Elemente 71 bis 73 und dem Substrat 21 mit einer transmissiven Beugungsstruktur 58, welche aus einer in die Oberfläche des Substrats 21 abgeformten Reliefstruktur 567 in Form mehrerer Fresnel-Linsen besteht. Das von den Licht emittierenden Elementen 71 bis 73 abgestrahlte Licht 60 wird bei Transmission durch die transmissive Beugungsstruktur 68 wie in Fig. 13 gezeigt abgelenkt und als Licht 65 transmittiert.

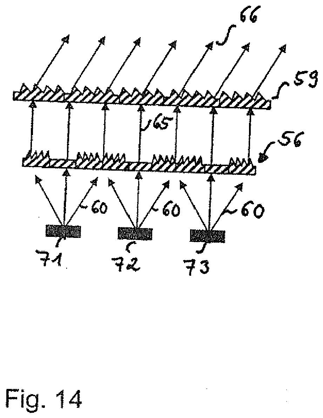

Weiter ist es auch möglich, dass ein oder mehrere der transmissiven Beugungsstrukturen in dem Sicherheitselement 2 übereinander liegend angeordnet sind. Fig. 14 zeigt einen entsprechenden Aufbau eines derartigen Bereichs des Sicherheitselements 2 mit den Licht emittierenden Elementen 71 bis 73, einer transmissiven Beugungsstruktur 56 und einer transmissiven Beugungsstruktur 59. Bei der transmissiven Beugungsstruktur 56 handelt es sich vorzugsweise um eine transmissive Beugungsstruktur, welche strahlformende Eigenschaften besitzt und beispielsweise gemäß den Figuren Fig. 11a bis Fig. 13 ausgestaltet ist. Weiter können auch eine Vielzahl derartiger transmissiver Beugungsstrukturen nebeneinander in dem Sicherheitselement 2 angeordnet sein.

Bei der transmissiven Beugungsstruktur 59 handelt es sich vorzugsweise um eine Effekt generierende transmissive Beugungsstruktur, welche beispielsweise gemäß den Figuren Fig. 2 bis Fig. 9c oder Fig. 15a bis Fig. 19 ausgebildet ist. Weiter können auch eine Vielzahl derartiger transmissiver Beugungsstrukturen in dem Sicherheitselement nebeneinander angeordnet sein. Das von den Licht emittierenden Elementen 71 bis 73 ausgestrahlte Licht 60 wird nun zunächst bei Transmission durch die transmissive Beugungsstruktur 56 abgelenkt und trifft dann als Licht 65 auf die transmissive Beugungsstruktur 59 und wird von dieser wiederum bei Transmission durch diese transmissive Beugungsstruktur entsprechend abgelenkt und als Licht 66 abgestrahlt.

Die transmissive Beugungsstruktur 56 ist hierbei insbesondere so ausgelegt, die Abstrahlcharakteristik der Licht emittierenden Elemente 71 bis 73 zu ändern und so beispielsweise in einen parallelen Strahl umzuwandeln. Der parallele Lichtstrahl trifft sodann auf die transmissive Beugungsstruktur 59, welche Helligkeitskontraste und/oder farbliche Änderungen des abgestrahlten Lichts beim Kippen und/oder Drehen bewirkt.

Dabei kann die diffraktive Struktur 59 mit weiteren Informationen / Bildern versehen werden, welche sich abhängig vom Kipp- oder Drehwinkel dem Betrachter bei Aktivierung der Licht emittierenden Elemente 71 bis 73 zeigen.

Die Reliefstrukturen der oben beschriebenen transmissiven Beugungsstrukturen werden beispielsweise mittels Elektronenstrahllithographie, Maskenlithographie, Laserlithographie, Ion-beam Lithographie oder auch Zweistrahlinterferenzlithographie in einen Master eingebracht. Die Strukturen können dann mit bekannten Verfahren im Rolle-zu-Rolle-Verfahren in großen Mengen hergestellt werden. Einzelschritte bei dieser großen Herstellungsmenge sind beispielsweise elektroformende Prägewerkzeuge, Step-and-Repeat-Rekombination der Prägewerkzeuge zu einem Rollenprägewerkzeug, Heiß- oder UV-Replizieren, Metall- oder HRI-Bedampfung, Bedrucken und/oder Beschichten.

Ein Effekt, welcher sich in einem Sicherheitselement 2 mit den zuvor beschriebenen transmissiven diffraktiven Beugungsstrukturen in Kombination mit den ein oder mehreren Licht emittierenden Elementen realisieren lässt, ist ein Farbwechsel, welcher mit oder ohne Polarisator sichtbar ist. Dieser kann vollflächig über den gesamten Bereich 30 auftreten oder nur partiell. Für den ersten Fall wird der gesamte Bereich, welcher mit den ein oder mehreren Licht emittierenden Elementen belegt ist, mit einer oder mehreren der vorhergehend beschriebenen transmissiven Beugungsstrukturen 31 bis 39 belegt. Für einen nur partiell auftretenden Farbwechsel werden die transmissiven Beugungsstrukturen nur partiell in dem mit den ein oder mehreren Licht emittierenden Elementen belegten Bereiche aufgebracht. Es werden so beispielsweise ein oder mehrere ein oder mehrere Motiv ausbildende Musterbereiche mit ein oder mehreren der transmissiven Beugungsstrukturen, insbesondere in Beugungsstrukturen 51 bis 59, insbesondere vollflächig belegt, ein die ein oder mehreren Musterbereiche vorzugsweise umschließende Hintergrundbereich ist weiter nicht mit den ein oder mehreren transmissiven Beugungsstrukturen belegt, wobei sowohl in dem Hintergrundbereich als auch in dem Musterbereich ein oder mehrere der ein oder mehreren Licht emittierenden Elemente vorgesehen sind. Beim Verkippen tritt so beispielsweise der Farbwechsel oder einer der sonstigen hier beschriebenen Effekte lediglich in dem Musterbereich auf, sodass der Musterbereich vor dem Hintergrundbereich kontrastierend in Erscheinung tritt.

Weiter ist es auch möglich, dass ein oder mehrere der Licht emittierenden Elemente bei Aktivierung polarisiertes Licht abstrahlen, wie dies bereits oben ausgeführt ist. Weiter ist es auch möglich, ein oder mehrere Licht polarisierende Elemente zwischen den Licht emittierenden Elementen und den transmissiven Beugungsstrukturen anzuordnen. Hierdurch können zum Einen Farbeffekte und Kontrast verbessert werden. Weiter können hierdurch auch lediglich mittels eines Hilfsmittels (Polarisator) erkennbare weitere Sicherheitsmerkmale in das Sicherheitselement eingebracht werden.

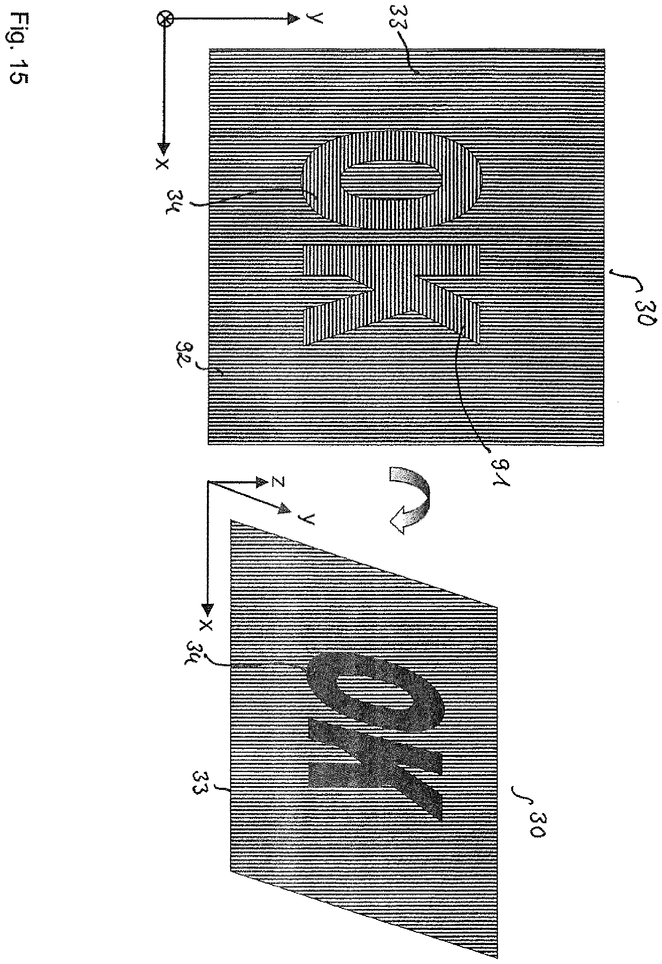

Fig. 15a zeigt nun eine weitere Ausführungsform, bei der auch in dem Hintergrundbereich ein oder mehrere der transmissiven Beugungsstrukturen vorgesehen sind.

In dem Bereich 30 sind zwei oder mehr musterförmige Teilbereiche vorgesehen, die mit unterschiedlichen transmissiven Beugungsstrukturen belegt sind, die bei Aktivierung von Licht emittierenden Elementen optische Sicherheitsmerkmale zeigen.

In dem Bereich 30 sind Zonen 33 und 34 vorgesehen, die ein gemeinsames Motiv ausbilden, wobei die Zone 33 den Hintergrundbereich und die Zone 34 den Vordergrundbereich des Motivs ausbildet. Die Zone 33 und die Zone 34 sind hierbei mit unterschiedlichen transmissiven Beugungsstrukturen 91 bzw. 92 belegt, die wie die oben beschriebenen Beugungsstrukturen 51 bis 55 ausgebildet sind. Vorzugsweise unterscheiden sich hierbei die transmissiven Beugungsstrukturen 91 und 92 in ihrem Azimutwinkel, sind vorzugsweise in Bezug auf ihren Azimutwinkel um 45 Grad oder 90 Grad gegeneinander verdreht angeordnet. Werden die Parameter der transmissiven Beugungsstrukturen 91 und 92 ansonsten gleich gewählt, so zeigen die Zonen 33 und 34 bei senkrechter Betrachtung bei Aktivierung der ein oder mehreren Licht emittierenden Elemente den selben optischen Effekt, sodass das Motiv aufgrund eines fehlenden Kontrastes zwischen Vordergrund- und Hintergrundbereich nicht sichtbar ist. Beim Verkippen bei Aktivierung der ein oder mehreren Licht emittierenden Elemente wird sodann das Motiv erkennbar.

Vorzugsweise sind bei der Ausbildung als Vorder- und Hintergrundbereich die mit den unterschiedlichen Beugungsstrukturen belegten Zonen weniger als 3 $\mu$m, bevorzugt weniger als 1 $\mu$m und weiter bevorzugt weniger als 500 nm voneinander entfernt angeordnet.

In dem Ausführungsbeispiel nach Fig. 15a sind so beispielhaft die Zonen 34 in Form der Buchstaben "OK" ausgebildet und mit einer transmissiven Beugungsstruktur mit horizontalen Gitterlinien belegt und die Zone 33, welche den Hintergrund zu diesen Buchstaben bildet, mit einer transmissiven Beugungsstruktur mit vertikalen Gitterlinien belegt. Beim Kippen des Sicherheitselements tritt ein Effekt von nahezu unsichtbar oder farblich unverändertem bzw. farbneutralen Erscheinungsbild des von den Licht emittierenden Elementen ausgestrahlten Lichts zu einer Farbänderung dieses Lichts in dem Bereich mit den nicht vertikal ausgerichteten Gitterlinien auf, sodass beispielsweise das "OK" beim Kippen als farbiger Bereich auftaucht. Farbneutral heißt hierbei, dass die gemittelte senkrechte Transmission im gut sichtbaren Spektralbereich von 460 nm bis 660 nm (Befindlichkeit des Auges > 5%) um weniger als +/- 15%, bevorzugt um weniger als +/- 10% und besonders bevorzugt um weniger als +/- 5% schwankt.

Weiter ergeben sich in Abhängigkeit von der Ausbildung der ein oder mehreren Licht emittierenden Elemente folgende bevorzugte Anwendungsfälle: Werden ein oder mehrere Licht emittierende Elemente eingesetzt, welche Licht der gleichen Farbe abstrahlen, so ergeben sich beim Verkippen einprägsame Kontraständerungseffekte. Werden ein oder mehrere Licht emittierende Elemente eingesetzt, welche weißes Licht abstrahlen, so ergeben sich starke und einprägsame Farbänderungseffekte. Beim Einsatz von ein oder mehreren Lichtelementen, welche unterschiedlich farbiges Licht abstrahlen, beispielsweise ein Echtfarben (RGB)- Display ausbilden, so ergeben sich einprägsame Farbeffekte und Kontrasteffekte.

Die Zonen 33 und 34 können mit ein oder mehreren der oben beschriebenen transmissiven Beugungsstrukturen belegt sein. Beim Einsatz der transmissiven Beugungsstrukturen 51 oder 52 wird beispielsweise der oben beschriebene Effekt von nahezu unsichtbar / farbneutral bei senkrechter Betrachtung sowie der Generierung eines Farbeindrucks und/oder Helligkeitskontrasts beim Verkippen bewirkt, wobei der Farbeffekt noch von dem Beleuchtungsspektrum der ein oder mehreren Licht emittierenden Elemente beeinflusst wird. Eine hierbei verwendbare transmissive Beugungsstruktur 51 weist beispielsweise eine Periode von 770 nm und eine Gittertiefe von 800 nm auf, und eine hierfür verwendbare transmissive Beugungsstruktur 52 eine Periode von 650 nm, eine Gittertiefe von 450 nm und eine Schichtdicke einer eingebetteten ZnS-Schicht von 120 nm auf. Beim Einsatz von transmissiven Beugungsgittern 53 und 54 zeigt sich ein Effekt von unsichtbar bzw. farbneutral bis schwach gefärbt bei senkrechter Betrachtung zu farbig beim Verkippen. Weist so beispielsweise die Reliefstruktur des transmissiven Beugungsgitters eine Periode von 550 nm, eine Gittertiefe von 430 nm, eine Schichtdicke der Wellenleiterschicht von 180 nm (ZnS) auf, so erscheint die Zone dem Betrachter bei senkrechter Betrachtung und der Ausstrahlung von weißem Licht durch die Licht emittierenden Elemente farbneutral bis leicht bläulich. Beim Kippen auf ca. 30° werden die Zonen 34 rot und beim Kippen weiter auf 60° erscheinen die Zonen 34 nahezu farbneutral bis leicht rötlich. Dieser Effekt wird mit Abstrahlung vom farbigen Licht durch die ein oder mehreren Licht emittierenden Elemente noch von dem Beleuchtungsspektrum der ein oder mehreren Licht emittierenden Elemente überlagert.

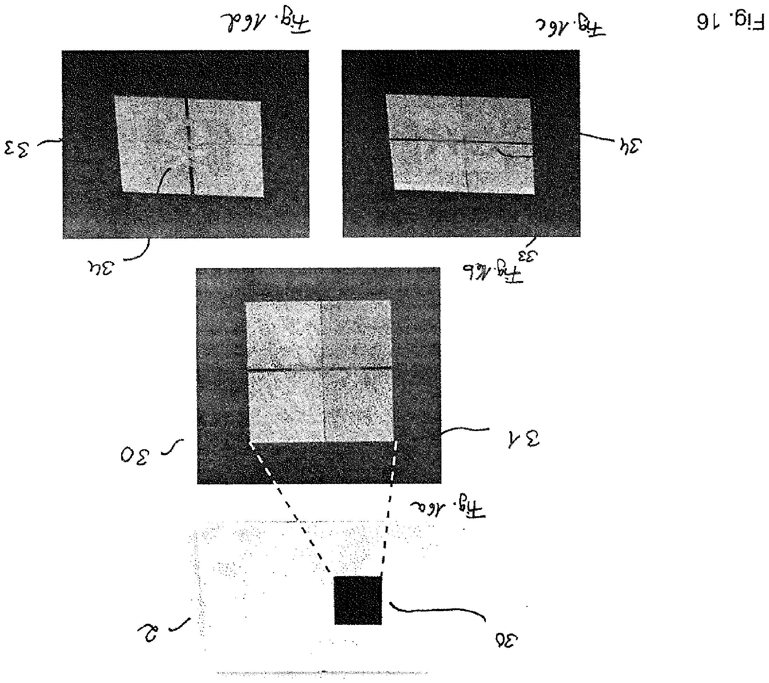

Ein derartiger Effekt ist beispielhaft anhand von Fig. 16a bis Fig. 16d verdeutlicht:

Fig. 16a zeigt ein Sicherheitselement 2 mit einem Bereich 30. Ein Teilbereich 31 des Bereichs 30 ist mit ein oder mehreren Licht emittierenden Elementen belegt, sodass der Bereich 31 bei Aktivierung der Licht emittierenden Elemente optisch erkennbar wird und ggf. ein ein- oder mehrfarbiges Erscheinungsbild zeigt. Fig. 16a zeigt so beispielsweise den Bereich 30 bei senkrechter Betrachtung bei nicht aktivierten Licht emittierenden Elementen und Fig. 16b den Bereich 30 bei senkrechter Betrachtung bei Aktivierung der in diesem Beispiel vier Licht emittierenden Elemente. Bei einem Verkippen des Sicherheitselements 2 um 30° wird das Motiv "OK" sichtbar, wobei bei horizontaler Ausrichtung des Sicherheitselements 2 die Zonen 34 farblich verändert sind, siehe Fig. 16c, und bei vertikaler Ausrichtung des Sicherheitselements 2 die Zonen 33 und damit der Hintergrund farblich verändert ist, siehe Fig. 16d. Weiter ist es auch möglich, dass eine Vielzahl von Zonen mit transmissiven Beugungsstrukturen in dem Bereich 30 vorgesehen sind, welche beispielsweise Bewegungseffekte wie Morphing oder kinematische Bewegungen und/oder Mehrfarbenbilder beim Verkippen / Verdrehen des Sicherheitselements 2 generieren. Hierbei kann beispielsweise der Azimutwinkel benachbarter Zonen zwischen 0,5° und 10° variieren.

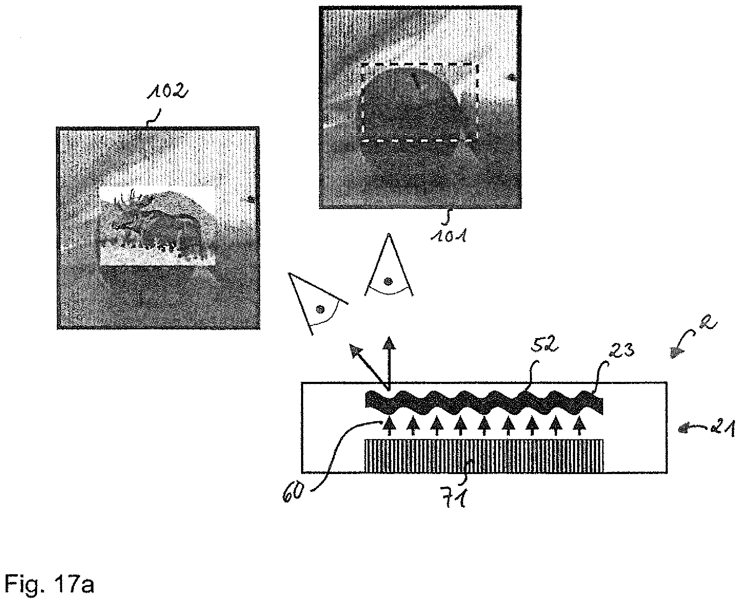

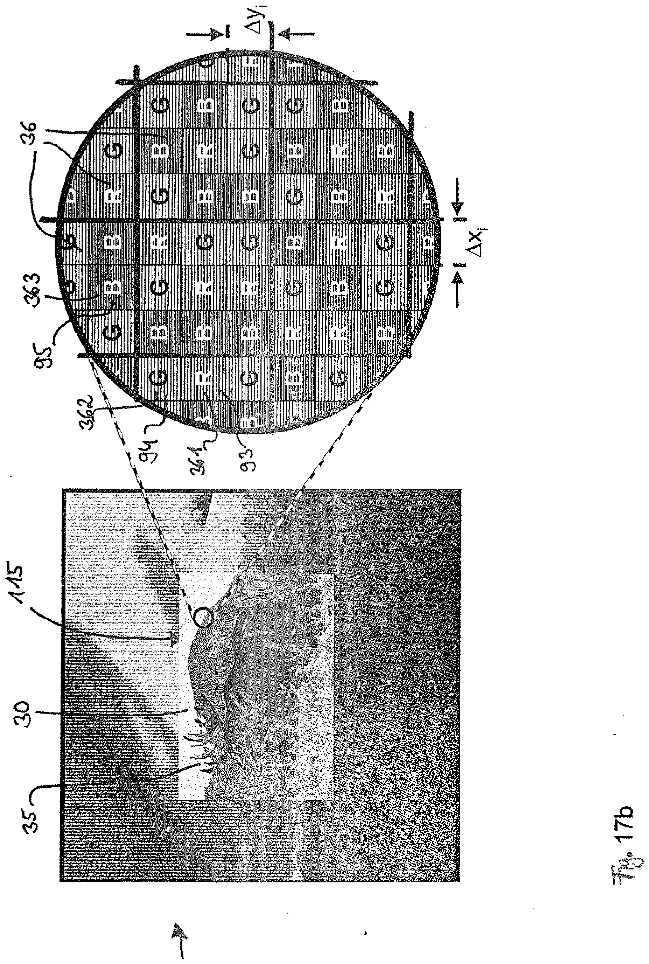

Fig. 17a und Fig. 17b verdeutlichen beispielsweise ein Ausführungsbeispiel, bei dem eine farbige Darstellung eines Motivs unter einem bestimmten Kippwinkelbereich generiert wird, welche durch Farbmischung von zwei oder mehrere von den transmissiven Beugungsstrukturen generierten Grundfarben bereitgestellt wird.

Das Sicherheitselement 2 ist, wie in Fig. 17a gezeigt, beispielsweise gemäß Fig. 4 aufgebaut und zeigt bei senkrechter Betrachtung und aktiviertem Licht emittierenden Element 71 das Erscheinungsbild 101, welches von der Ausbildung und Anordnung der Licht emittierenden Elemente bestimmt ist, und beim Verkippen des Erscheinungsbilds 102.

Wie in Fig. 17b angedeutet, ist in dem Bereich 30 des Sicherheitselements 2 ein Motivbereich 35 vorgesehen, welcher beispielsweise hier in Form eines Elches ausgeformt ist. Dieser Motivbereich 35 ist in eine Vielzahl von Bildpunktbereichen 36 unterteilt. In jedem der Bildpunktbereiche 36 wird nun der Farbwert und die Helligkeit bestimmt, welche dieser Bildpunktbereich zur Ausbildung des Motivs, nämlich des Elchs, besitzen soll. In den Bildpunktbereichen 36 werden nun abhängig von diesen Werten kein, eine, zwei oder drei unterschiedliche der Zonen 361, 362 und 363 vorgesehen. Die Zonen 361 sind hierbei mit einem transmissiven Beugungsgitter zur Generierung einer roten Farbe unter dem bestimmten Kippwinkelbereich belegt, die Zonen 362 mit einem hiervon unterschiedlichen transmissiven Beugungsgitter zur Erzeugung einer grünen Farbe unter dem bestimmten Kippwinkelbereich belegt und die Zonen 363 mit einem hiervon unterschiedlichen transmissiven Beugungsgitter zur Generierung einer blauen Farbe unter dem bestimmten Kippwinkelbereich belegt. Die Abmessung der Bildpunktbereiche 36 ist hierbei so gewählt, dass eine Farbmischung der dort jeweils angeordneten unterschiedlichen der Zonen 361 bis 363 bewirkt wird. Die Bildpunktbereiche 36 weisen vorzugsweise in zumindest eine Richtung eine laterale Abmessung von weniger als 300 $\mu$m auf. Die Zonen 361 bis 363 weisen ebenfalls in zumindest eine Richtung eine Abmessung von weniger als 300 $\mu$m, bevorzugt weniger als 150 $\mu$m, weiter bevorzugt weniger als 80 $\mu$m auf. Weiter ist die Breite und / oder Länge der Zonen 361 bis 363 vorzugsweise größer als 20 $\mu$m, 10 $\mu$m oder 5 $\mu$m gewählt.

Durch das Verhältnis der Flächengröße der Zonen 361 bis 363 in dem jeweiligen Bildpunktbereich 36 wird der Farbwert und durch die gesamte Flächengröße der Zonen 361 bis 363 in dem jeweiligen Bildpunktbereich 36 wird die Helligkeit des jeweiligen Bildpunkts auf den entsprechend vorgegebenen Wert eingestellt.

Die in die Zonen 361 bis 363 angeordneten Beugungsgitter sind vorzugsweise wie das Beugungsgitter 52 ausgebildet, wobei hier vorzugsweise folgende Strukturparameter für die jeweilige Beugungsstruktur verwendet werden:
Beugungsgitter der Zonen 361 (rot): Gitterperiode = 770 nm; Dicke der HRI-Schicht = 120 nm; Gitter- bzw. Relieftiefe = 570 nm.

Beugungsgitter der Zonen 362 (grün): Gitterperiode = 650 nm; Schichtdicke der HRI-Schicht = 120 nm; Relieftiefe = 450 nm.

Beugungsgitter der Zonen 363 (blau): Gitterperiode = 570 nm; Dicke der HRI-Schicht = 120 nm; Relieftiefe = 400 nm.

Vorzugsweise wird die Zielwellenlänge der Beugungsgitter hierbei auf die der zugeordneten Licht emittierenden Elemente abgestimmt.

Es ist jedoch auch möglich, dass die Zonen 361 bis 363 gemäß einem der Beugungsgitter 51, 53, 54 oder 55 ausgebildet sind, oder von unterschiedlichen der Beugungsgitter 51 bis 55 gebildet werden. Dies ist insbesondere dann vorteilhaft, wenn unter unterschiedlichen Kippwinkeln beispielsweise ein unterschiedliches farbiges Erscheinungsbild des Motivs erzielt werden soll.

Für den Betrachter zeigt sich so bei senkrechter Betrachtung des Sicherheitselements 2 und bei aktivierten Licht emittierenden Elementen das in Fig. 17a gezeigte Erscheinungsbild 101, bei dem die transmissiven Beugungsstrukturen den Betrachtungseindruck nicht verändern, und dass von den ein oder mehreren Licht emittierenden Elmenten bei Aktivierung generierte Bilder als Information sichtbar sind. Beim Verkippen des Sicherheitsdokuments, beispielsweise gemäß Fig. 17a, zeigt sich dann in dem Bereich 30 als Information eine farbige Darstellung eines Elchs.

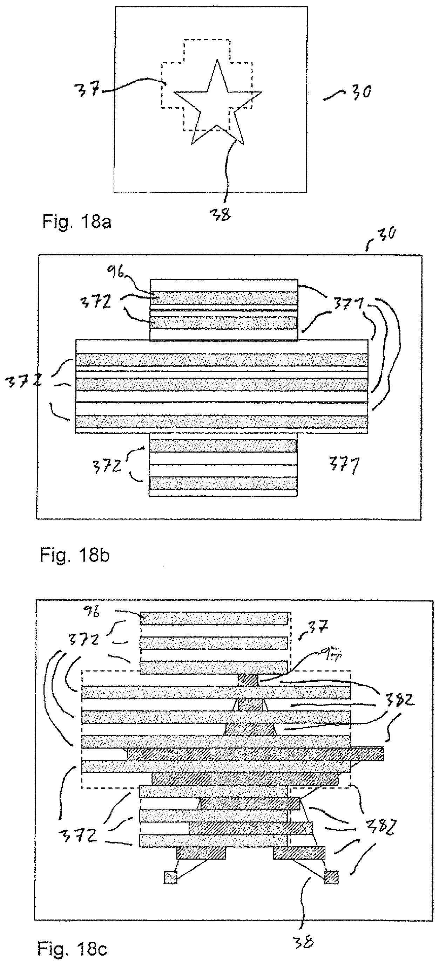

Fig. 18a bis Fig. 18c zeigen eine Ausführungsform, bei der in dem Bereich 30 des Sicherheitselements 2 eine Vielzahl von unterschiedlichen, mit unterschiedlichen Beugungsstrukturen belegten Zonen vorgesehen ist.

Wie in Fig. 18a gezeigt, ist in dem Bereich 30 ein in Form eines Motivs, beispielsweise eines Kreuzes ausgeformter, erster Motivbereich 37 und ein in Form eines zweiten Motivs, beispielsweise eines Sterns ausgeformter zweiter Motivbereich 38 vorgesehen. Wie in Fig. 18b nicht maßstabsgetreu beispielsweise anhand Motivbereichs 37 gezeigt, ist jeder Motivbereich 37 und 38 in eine Vielzahl von Teilbereiche 371 bzw. 381 geteilt, die jeweils mit ein oder mehreren Zonen 372 bzw. 382 belegt sind. Die Zonen 372 bzw. 382 weisen hierbei jeweils zumindest eine laterale Abmessung von weniger als 300 $\mu$m, bevorzugt weniger als 150 $\mu$m, weiter bevorzugt weniger als 80 $\mu$m auf. Die Zonen 372 bzw. 382 können hierbei eine streifenförmige Formgebung besitzen, wie dies in den Figuren Fig. 18b und Fig. 18c gezeigt ist, oder können auch eine pixelförmige Formgebung besitzen, beispielsweise eine kreisscheibenförmige oder rechteckförmige Formgebung besitzen.

In dem Überlappungsbereich der Motivbereiche 37 und 38 sind die Zonen 372 und 382, wie in Fig. 14c gezeigt ineinander gerastert angeordnet. Vorzugsweise sind so die Zonen 372 und 382 gemäß eines vorzugsweise regelmäßigen 1- oder 2-dimensionalen Rasters angeordnet, wobei abwechselnd Bereiche für Zonen 371 und Bereiche für Zonen 382 vorgesehen sind. Die von dem jeweiligen Motivbereich überdeckten Bereiche des Rasters, welche den Zonen dieses Motivbereichs zugeordnet sind, sind sodann mit den entsprechenden Zonen belegt, wie dies auch in Fig. 18c angedeutet ist.

Die Zonen 372 und 382 sind jeweils mit unterschiedlichen transmissiven Beugungsstrukturen belegt, welche jeweils gemäß einem der Beugungsstrukturen 51 bis 55 ausgebildet sind. Diesbezüglich wird so auf die vorgehenden Ausführungen verwiesen.

Beim Verkippen des Sicherheitselements wird so bei aktivierten Licht emittierenden Elementen abhängig vom Kippwinkel und/oder Drehwinkel das erste Motiv oder das zweite Motiv sichtbar. Bei Anwendung dieses Funktionsprinzips können auch eine Vielzahl von Motiven in dem Bereich 30 realisiert werden, welche bei unterschiedlichen Kipp- und/oder Drehwinkel bei Aktivierung der Licht emittierenden Elemente sichtbar werden, wodurch Bewegungseffekte und/oder Transformationseffekte als weiteres Sicherheitsmerkmal bereitgestellt werden können.

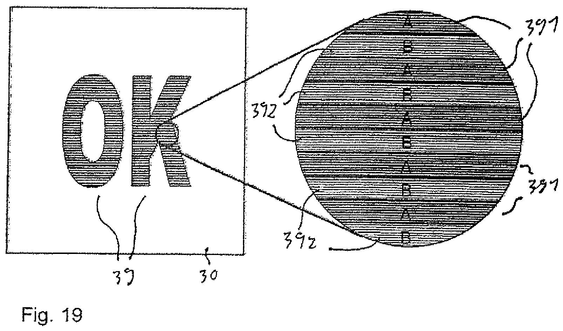

Fig. 19 zeigt den Bereich 30 eines Sicherheitselements 2 mit einem in Form des Motivs "OK" ausgeformten Motivbereichs 39. Der Motivbereich 39 weist eine Vielzahl von Teilbereichen 391 und Teilbereichen 392 auf. Die Teilbereiche 391 sind mit einer transmissiven Beugungsstruktur belegt, welche gemäß den Beugungsstrukturen 51 bis 55 ausgebildet sind. Die Teilbereiche 392 sind mit einer üblichen reflektiven Beugungsstruktur belegt. Die Teilbereiche 391 und 392 weisen jeweils zumindest eine laterale Abmessung von weniger als 300 $\mu$m, insbesondere weniger als 150 $\mu$m, bevorzugt von weniger als 80 $\mu$m auf. Die Teilbereiche 391 und 392 können hierbei zum Einen streifenförmig, wie in Fig. 19 gezeigt, jedoch auch pixelförmig ausgebildet sein. Weiter sind vorzugsweise die Teilbereiche 391 und 392, wie in Fig. 19 gezeigt, abwechselnd nebeneinander angeordnet. In dem Motivbereich 39 wird so bei Aktivierung der Licht emittierenden Elemente ein optisches Sicherheitsmerkmal generiert, wie dies beispielsweise bereits anhand der vorgehenden Figuren Fig. 1 bis Fig. 18c erläutert worden ist. Bei Auflichtbetrachtung des Bereichs 30 zeigt sich dem Betrachter zusätzlich eine weitere, sowohl bei Aktivierung als auch bei Deaktivierung der ein oder mehreren Licht emittierenden Elemente sichtbare Information, welche durch die reflektiven Beugungsstrukturen generiert wird, mit denen die Bereiche 392 belegt sind.

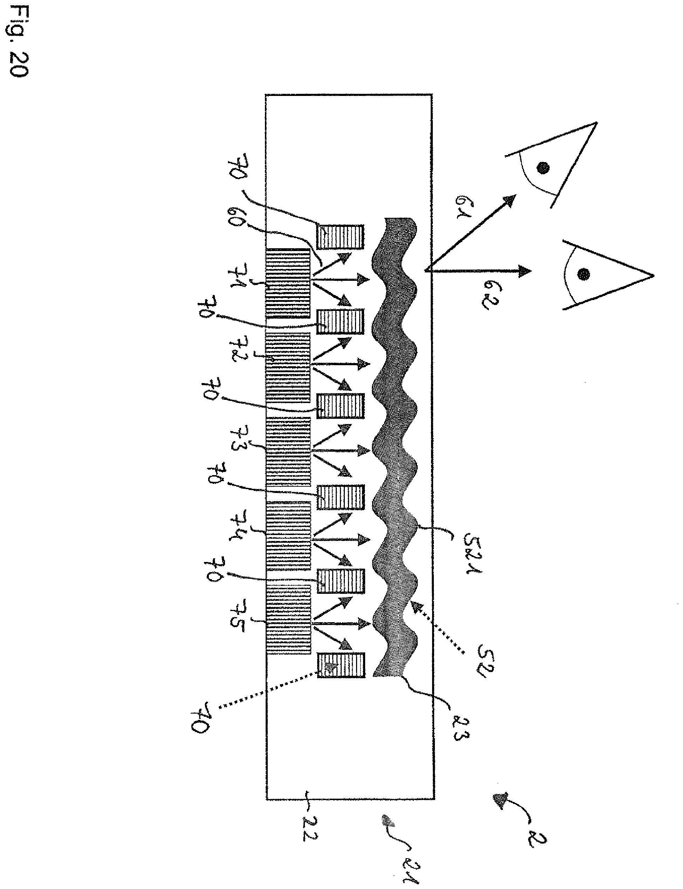

Weiter ist es auch vorteilhaft in den Grenzbereichen zwischen Licht emittierenden Elementen Lichtblockstrukturen vorzusehen. Dies ist beispielhaft in Fig. 20 gezeigt. Fig. 20 zeigt das Sicherheitelement 2 mit einer Vielzahl von Licht emittierenden Elementen 71 bis 75 und dem Substrat 21, welches eine transmissive Beugungsstruktur 52 aufweist. Die transmissive Beugungsstruktur 52 ist beispielsweise wie in Fig. 4 gezeigt in dem Substrat 21 eingebracht und wird so beispielsweise von der Reliefstruktur 521 bereitgestellt, welche zwischen die transparenten Schichten 22 und 23 abgeformt ist. Es ist jedoch auch möglich, dass es sich bei der transmissiven Beugungsstruktur um eine andere der vorhergehend erläuterten transmissiven Beugungsstrukturen, beispielsweise um die transmissiven Beugungsstrukturen 51 oder 53 bis 59 handelt. Weiter sind in dem Sicherheitelement Lichtblockstrukturen 70 vorgesehen, bei denen es sich vorzugsweise um vertikal angeordnete vorzugsweise opak ausgebildete Elemente handelt, welche den Abstrahlbereich des jeweiligen Licht emittierenden Elements 71 bis 75 seitlich begrenzen. Die Lichtblockstrukturen 70 sorgen dafür, dass das Licht der Licht emittierenden Elemente nur bei senkrechter Betrachtung direkt in das Auge des Betrachters gelangen. Bei gekippter Betrachtung dagegen erreicht nur das diffraktierte/gebeugte Licht das Auge des Betrachters.

**Patentansprüche**

1. Sicherheitselement (2), insbesondere in Form eines mehrschichtigen flexiblen Folienkörpers, mit einer einem Betrachter zugewandten Oberseite (201) und einer dem Betrachter abgewandten Rückseite (202), wobei das Sicherheitselement (2) ein oder mehrere in einem ersten Bereich (30) des Sicherheitselements angeordnete Licht emittierende Elemente (71 bis 75) aufweist, welche bei Aktivierung Licht (60) abstrahlen und insbesondere jeweils von einem selbstleuchtenden, elektrisch betriebenen, Anzeigenelement gebildet sind, wobei das Sicherheitselement (2) in dem ersten Bereich (30) ein oder mehrere transmissive Beugungsstrukturen (51 bis 59, 91 bis 96) aufweist, wobei die ein oder mehreren transmissiven Beugungsstrukturen (51 bis 59, 91 bis 96) derart angeordnet sind, dass zumindest ein Teil des von den aktivierten ein oder mehreren Licht emittierenden Elementen (71 bis 75) abgestrahlten Lichts (60) durch zumindest einen Teilbereich der transmissiven Beugungsstrukturen (51 bis 59, 91 bis 96) transmittiert,
**dadurch gekennzeichnet,**
**dass** der erste Bereich ein oder mehrere erste Zonen (33, 361, 371) aufweist, die jeweils mit einer ersten der transmissiven Beugungsstrukturen (91, 93, 96) belegt sind, und ein oder mehrere zweite Zonen (34, 362, 382) aufweist, die mit einer zweiten der transmissiven Beugungsstrukturen (92, 94, 97) belegt sind, wobei sich die erste transmissive Beugungsstruktur (91, 93, 96) von der zweiten transmissiven Beugungsstruktur (92, 94, 97) unterscheidet.

2. Sicherheitselement (2) nach Anspruch 1,
**dadurch gekennzeichnet,**
**dass** ein oder mehrere der ein oder mehreren transmissiven Beugungsstrukturen (51 bis 59, 91 bis 96) jeweils von einer in einer Oberfläche eines transparenten Substrats (21) abgeformten Reliefstruktur gebildet sind, wobei die Reliefstruktur insbesondere in die Oberfläche der Oberseite (201) des Sicherheitselements (2) abgeformt ist, insbesondere wobei die Relieftiefe der Reliefstruktur zwischen 900 nm und 1500 nm, bevorzugt zwischen 900 nm bis 1200 nm beträgt.

3. Sicherheitselement (2) nach einem der vorhergehenden Ansprüche,
**dadurch gekennzeichnet,**
**dass** ein oder mehrere der ein oder mehreren transmissiven Beugungsstrukturen (52, 53, 55) jeweils von einer zwischen zwei transparenten Schichten (22, 23, 25, 26, 27) des Sicherheitselements abgeformten Reliefstruktur gebildet sind, wobei sich der Brechungsindex dieser Schichten insbesondere um zumindest 0,1 unterscheidet, insbesondere dass eine der zwei transparenten Schichten eine polymere Schicht, insbesondere eine Replizierlackschicht, und die andere der zwei transparenten Schichten eine poröse Schicht ist, wobei die Poren der porösen Schicht insbesondere mit Luft gefüllt sind und die Schichtdicke der porösen Schicht insbesondere zwischen 2 und 50 μm, bevorzugt zwischen 2 und 20 μm beträgt.

4. Sicherheitselement (2) nach einem der Ansprüche 2 oder 3,
**dadurch gekennzeichnet,**
**dass** die Reliefstruktur ein durch die Parameter Reliefform, Relieftiefe, Gitterperiode und Azimutwinkel definiertes Gitter ist und die Gitterperiode zwischen 500 nm und 1500 nm, insbesondere zwischen 600 nm und 1400 nm beträgt, und/oder dass die Strukturelemente der Reliefstruktur eine asymmetrische Reliefform besitzen, und/oder dass das durch die Reliefstruktur in der nullten Ordnung transmittierte Licht in dem Wellenlängenbereich von 460 nm bis 660 nm weitgehend nicht in seinem Farbspektrum verändert wird und der Transmissionsgrad des in der nullten Ordnung und im wesentlichen senkrecht durch das transparente Substrat transmittierten Lichts größer als 30%, insbesondere größer als 50% ist.

**5.** Sicherheitselement (2) nach einem der vorgehenden Ansprüche,
**dadurch gekennzeichnet,**
**dass** ein oder mehrere der ein oder mehreren transmissiven Beugungsstrukturen (53) jeweils von einer Reliefstruktur gebildet sind, die ein durch die Parameter Reliefform, Relieftiefe, Gitterperiode und Azimutwinkel definiertes Beugungsgitter nullter Ordnung ist, dass die Relieftiefe der Reliefstruktur insbesondere zwischen 300 nm und 550 nm, bevorzugt zwischen 350 nm bis 500 nm beträgt, und dass die Gitterperiode insbesondere zwischen 250 nm und 700 nm, bevorzugt zwischen 350 nm und 600 nm beträgt, insbesondere
**dass** die Reliefstruktur zwischen einer transparenten Schicht (22, 26) und einer HRI-Schicht (25) abgeformt ist und die Dicke der HRI-Schicht (25) zwischen 50 nm und 250 nm, vorzugsweise zwischen 130 nm und 250 nm, insbesondere zwischen 150 nm und 220 nm beträgt.

**6.** Sicherheitselement (2) nach einem der vorhergehenden Ansprüche,
**dadurch gekennzeichnet,**
**dass** ein oder mehrere der ein oder mehreren transmissiven Beugungsstrukturen (56 bis 58) jeweils diffraktive strahlformende Strukturen sind und insbesondere von einem Volumenhologramm, einer Blazestruktur, einer diffraktiven Linse oder einem Feld von diffraktiven Linsen, einer Fresnel-Linsenstruktur oder einem Feld von Fresnel-Linsenstrukturen, oder von diffraktiven Strukturen gebildet sind, welche linsenähnliche strahlformende Eigenschaften besitzen.

**7.** Sicherheitselement (2) nach Anspruch 6,
**dadurch gekennzeichnet,**
**dass** jedes Licht emittierende Element (71 bis 73) einer der transmissiven Beugungsstrukturen (56) zugeordnet ist, welche die Abstrahlcharakteristik des jeweiligen Licht emittierenden Elements (71 bis 73) modifiziert, insbesondere dass der erste Bereich (30) ein oder mehrere Zonen aufweist, welche bevorzugt gemäß einem ein- oder zweidimensionalen Raster angeordnet sind, wobei in jeder der Zonen eines der Licht emittierenden Elemente (71 bis 73) angeordnet ist, sowie in jeder der Zonen mindestens eine der transmissiven Beugungsstrukturen (56, 57, 58) angeordnet ist, insbesondere dass ein oder mehrere der in den ein oder mehreren Zonen angeordneten transmissiven Beugungsstrukturen (56, 57) eine Reliefstruktur (561, 563, 564, 565, 566, 567) mit einer Vielzahl von im Wesentlichen parallel zueinander angeordneten Gitterlinien umfasst, wobei diese Gitterlinien in einem zentralen Teilbereich der jeweiligen Zone, vorzugsweise in einem Abstrahlbereich des der Zone zugeordneten Licht emittierenden Elements, vorgesehen sind und in einem Randbereich der Zone, insbesondere in einem Randbereich der Zone, in der das zugeordnete Licht emittierenden Element nicht Licht abstrahlt, nicht vorgesehen sind oder umgekehrt.

**8.** Sicherheitselement (2) nach einem der vorhergehenden Ansprüche,
**dadurch gekennzeichnet,**
**dass** die erste und zweite transmissive Beugungsstruktur sich in ihrer Reliefform, im Azimutwinkel und/oder ihre Gitterperiode voneinander unterscheiden, und/oder dass die erste und die zweite transmissive Beugungsstruktur von unterschiedlichen Arten von transmissiven Beugungsstrukturen gebildet sind, insbesondere ausgewählt aus einer ersten Art von transmissiven Beugungsstrukturen gemäß Anspruch 4, einer zweiten Art von transmissiven Beugungsstrukturen gemäß Anspruch 5 und einer vierten Art von transmissiven Beugungsstrukturen gemäß einem der Ansprüche 6 oder 7, und/oder dass benachbarte erste und zweite Zonen (33, 34, 361, 362, 372, 382) weniger als 1 $\mu$m, bevorzugt weniger als 100 nm voneinander beabstandet sind.

**9.** Sicherheitselement (2) nach einem der vorhergehenden Ansprüche,
**dadurch gekennzeichnet,**
**dass** in dem ersten Bereich eine Vielzahl von ersten Zonen (361, 372) und
zweiten Zonen (362, 382) vorgesehen ist, und dass die ersten und zweiten Zonen (361, 362, 372, 382) jeweils zumindest eine laterale Abmessung von weniger als 300 $\mu$m aufweisen, insbesondere von weniger als 150 $\mu$m, bevorzugt weniger als 80 $\mu$m aufweisen, insbesondere dass in dem ersten Bereich eine Vielzahl von dritten Zonen (363), die mit einer dritten der transmissiven Beugungsstrukturen (95) belegt sind und/oder vierten Zonen, die mit einer vierten der transmissiven Beugungsstrukturen belegt sind, vorgesehen sind, wobei sich die erste, zweite, dritte und vierte transmissive Beugungsstruktur jeweils wechselseitig voneinander unterscheiden und die dritten bzw. vierten Zonen (363) jeweils zumindest eine laterale Abmessung von weniger als 300 $\mu$m aufweisen, insbesondere weniger als 150 $\mu$m, bevorzugt weniger als 80 $\mu$m aufweisen.

**10.** Sicherheitselement (2) nach einem der vorhergehenden Ansprüche,

**dadurch gekennzeichnet,**

**dass** der erste Bereich einen Motivbereich (35) aufweist, der in eine Vielzahl von Bildpunktbereichen (36) unterteilt ist, und wobei in zumindest einem ersten der Bildpunktbereiche (36) zumindest zwei unterschiedliche Zonen ausgewählt aus der Gruppe erste und zweite Zonen (361, 362), der Gruppe erste, zweite und dritte Zonen (361, 362, 363) oder der Gruppe erste, zweite, dritte und vierte Zonen angeordnet sind, und dass sich die in dem ersten Bildpunktbereich (36) bei Aktivierung eines oder mehrerer der Licht emittierenden Elemente unter zumindest einem Kippwinkel zeigende Farbe durch additive Farbmischung der von den in diesem Bildpunktbereich (36) in den unterschiedlichen Zonen angeordneten transmissiven Beugungsstrukturen unter diesem Kippwinkel generierten Farben generiert ist.

11. Sicherheitselement (2) nach einem der vorhergehenden Ansprüche,
**dadurch gekennzeichnet,**
**dass** ein oder mehrere fünfte der transmissiven Beugungsstrukturen (56) und ein oder mehrere sechste der transmissiven Beugungsstrukturen (59) übereinander liegend angeordnet sind, bezogen auf eine senkrecht auf der von der Rückseite des Sicherheitselements aufgespannten Ebene stehende Richtung, insbesondere
**dass** die fünften Beugungsstrukturen (56) strahlformende Beugungsstrukturen, insbesondere nach einem der Ansprüche 6 oder 7 und die sechsten Beugungsstrukturen (39) Effekt generierende Beugungsstrukturen sind, insbesondere nach einem der Ansprüche 4 oder 5.

12. Sicherheitselement (2) nach einem der vorhergehenden Ansprüche,
**dadurch gekennzeichnet,**
**dass** das Sicherheitselement eine Vielzahl von Licht emittierenden Elementen 71 bis 75) aufweist, wobei in dem Grenzbereich zwischen Licht emittierenden Elementen Blockstrukturen (70) angeordnet sind, und/oder dass sämtliche Licht emittierenden Elemente bei Aktivierung Licht der gleichen Farbe abstrahlen oder dass zwei oder mehrere der Licht emittierenden Elemente Licht unterschiedlicher Farbe abstrahlen, insbesondere ein oder mehrere Licht emittierende Elemente bei Aktivierung rotes Licht, ein oder mehrere der Licht emittierenden Elemente bei Aktivierung grünes Licht und/oder ein oder mehrere der Licht emittierenden Elemente bei Aktivierung grünes Licht abstrahlen.

13. Sicherheitselement (2) nach ein der vorhergehenden Ansprüche,
**dadurch gekennzeichnet,**
**dass** in dem ersten Bereich (30) eine Vielzahl von ersten Teilbereichen (391) vorgesehen sind, die mit einer der ein oder mehreren transmissiven Beugungsstrukturen belegt sind, und eine Vielzahl von zweiten Teilbereichen (392) vorgesehen sind, die mit einer der ein oder mehreren reflektiven Beugungsstrukturen belegt sind, dass die ersten und zweiten Teilbereiche (391, 392) jeweils zumindest eine laterale Abmessung von weniger als 300 $\mu$m, insbesondere weniger als 150 $\mu$m, bevorzugt von weniger als 80 $\mu$m aufweisen, und dass zumindest bereichsweise erste und zweite Teilbereiche (391, 392) benachbart zueinander angeordnet sind, sodass sich im ersten Bereich (30) im Auflicht bei Aktivierung einer oder mehrere der Licht emittierenden Elemente eine durch die ersten Teilbereiche (391) bestimmte erste optisch variable Information zeigt und im ersten Bereich (30) im Auflicht hierzu zumindest bereichsweise überlappend eine durch die zweiten Teilbereiche (392) bestimmte zweite optisch variable Information zeigt.

**Claims**

1. Security element (2), in particular in the form of a multi-layer flexible film body, having an upper side (201) facing toward a viewer and a rear side (202) facing away from the viewer, wherein the security element (2) has one or more light-emitting elements (71 to 75) arranged in a first region (30) of the security element, which elements (71 to 75) radiate light (60) upon activation and, in particular, are each formed from a self-luminous, electrically operated display element, wherein the security element (2) has one or more transmissive diffraction structures (51 to 59, 91 to 96) in the first region (30), wherein the one or more transmissive diffraction structures (51 to 59, 91 to 96) are arranged in such a way that at least one part of the light (60) which is radiated by the one or more activated light-emitting elements (71 to 75) transmits through at least one sub-region of the transmissive diffraction structures (51 to 59, 91 to 96),
**characterised in that**
the first region has one or more first zones (33, 361, 371) which are each covered by a first of the transmissive diffraction structures (91, 93, 96), and has one or more second zones (34, 362, 382) which are covered by a second of the transmissive diffraction structures (92, 94, 97), wherein the first transmissive diffraction structure (91, 93, 96) is different from the second transmissive diffraction structure (92, 94, 97).

2. Security element (2) according to claim 1,
**characterised in that**
one or more of the one or more transmissive diffraction structures (51 to 59, 91 to 96) are each formed by a relief structure which is moulded in a surface of a transparent substrate (21), wherein the relief structure is moulded, in particular, into the surface of the upper side (201) of the security element (2), in particular wherein the relief depth of the relief structure is between 900 nm and 1500 nm, preferably between 900 nm to 1200 nm.

3. Security element (2) according to one of the preceding claims,
**characterised in that**
one or more of the one or more transmissive diffraction structures (52, 53, 55) are each formed by a relief structure which is moulded between two transparent layers (22, 23, 25, 26, 27) of the security element, wherein the refractive index of these layers differs, in particular, by at least 0.1, and in particular one of the two transparent layers is a polymer layer, in particular a replication varnish layer, and the other of the two transparent layers is a porous layer, wherein the pores of the porous layer are filled, in particular, with air, and the layer thickness of the porous layer is, in particular, between 2 and 50 $\mu$m, preferably between 2 and 20 $\mu$m.

4. Security element (2) according to one of claims 2 or 3,
**characterised in that**
the relief structure is a grating defined by the parameters of relief shape, relief depth, grating period and azimuth angle, and the grating period is between 500 nm and 1500 nm, in particular between 600 nm and 1400 nm, and/or the structural elements of the relief structure have an asymmetrical relief shape, and/or the light which is transmitted in the zero-order through the relief structure in the wavelength range of 460 nm to 660 nm is largely unchanged in its colour spectrum, and the transmittance of the light which is transmitted in the zero-order and substantially perpendicularly through the transparent substrate is greater than 30%, in particular is greater than 50%.

5. Security element (2) according to one of the preceding claims,
**characterised in that**
one or more of the one or more transmissive diffraction structures (53) are each formed from a relief structure which is a zero-order diffraction grating defined by the parameters of relief shape, relief depth, grating period and azimuth angle, the relief depth of the relief structure is, in particular, between 300 nm and 550 nm, preferably between 350 nm to 500 nm, and the grating period is, in particular, between 250 nm and 700 nm, preferably between 350 nm and 600 nm, in particular the relief structure is moulded between a transparent layer (22, 26) and an HRI layer (25), and the thickness of the HRI layer (25) is between 50 nm and 250 nm, preferably between 130 nm and 250 nm, in particular between 150 nm and 220 nm.

6. Security element (2) according to one of the preceding claims,
**characterised in that**
one or more of the one or more transmissive diffraction structures (56 to 58) are, in each case, diffractive beam-forming structures and are formed, in particular, by a volume hologram, a blaze structure, a diffractive lens or a field of diffractive lenses, a Fresnel lens structure or a field of Fresnel lens structures, or by diffractive structures which have lens-like beam-forming properties.

7. Security element (2) according to claim 6,
**characterised in that**
each light-emitting element (71 to 73) is assigned to one of the transmissive diffractive structures (56), said structure modifying the radiation characteristic of the respective light-emitting element (71 to 73), in particular the first region (30) has one or more zones which are preferably arranged according to a one- or two-dimensional grid, wherein one of the light-emitting elements (71 to 73) is arranged in each of the zones, and one of the transmissive diffraction structures (56, 57, 58) is arranged in each of the zones, in particular
one or more of the transmissive diffraction structures (56, 57) arranged in the one or more zones comprises a relief structure (561, 563, 564, 565, 566, 567) having a plurality of grating lines which are arranged substantially in parallel to one another, wherein these grating lines are provided in a central sub-region of the respective zone, preferably in a radiation region of the light-emitting element assigned to the zone and are not provided in an edge region of the zone, in particular in an edge region of the zone in which the assigned light-emitting element does not radiate light, or vice versa.

8. Security element (2) according to one of the preceding claims,
**characterised in that**
the first and second transmissive diffraction structures are different from each other in their relief shape, in the azimuth angle and/or their grating period, and/or the first and the second transmissive diffraction structures are formed from different types of diffraction structures, in particular selected from a first type of transmissive diffraction structure according to claim 4, a second type of transmissive diffraction structure according to claim 5 and a fourth type of transmissive diffraction structure according to one of claims 6 or 7, and/or adjacent first and second zones (33, 34, 361, 362, 372, 382) are spaced apart from one another by less than 1 $\mu$m, preferably less than 100 nm.

9. Security element (2) according to one of the preceding claims,
   **characterised in that**
   a plurality of first zones (361, 372) and second zones (362, 382) is provided in the first region, and the first and second zones (361, 362, 372, 382) each have at least one lateral measurement of less than 300 $\mu$m, in particular less than 150 $\mu$m, preferably less than 80 $\mu$m, in particular a plurality of third zones (363), which are covered by one of the third of the transmissive diffraction structures (95), and/or fourth zones, which are covered with one of the fourth of the transmissive diffraction structures, are provided in the first region, wherein the first, second, third and fourth transmissive diffraction structures are each mutually different from one another and the third or fourth zones (363) each have at least one lateral measurement of less than 300 $\mu$m, in particular less than 150 $\mu$m, preferably less than 80 $\mu$m.

10. Security element (2) according to one of the preceding claims,
    **characterised in that**
    the first region has a motif region (35) which is divided into a plurality of pixel regions (36), and wherein at least two different zones selected from the group of first and second zones (361, 362), the group of first, second and third zones (361, 362, 363) or the group of first, second, third and fourth zones are arranged in at least one first pixel region (36), and the colour showing at at least one tilt angle in the first pixel region (36) upon activation of one or more of the light-emitting elements is generated by additive colour mixing of the colours generated at this tilt angle by the transmissive diffraction structures arranged in this pixel region (36) in the different zones.

11. Security element (2) according to one of the preceding claims,
    **characterised in that**
    one or more fifth of the transmissive diffraction structures (56) and one or more sixth of the transmissive diffraction structures (59) are arranged lying one above the other relative to a direction perpendicular to the plane defined by the rear side of the security element, in particular
    the fifth diffraction structures (56) are beam-forming diffraction structures, in particular according to one of claims 6 or 7 and the sixth diffraction structures (39) are effect-generating diffraction structures, in particular according to one of claims 4 or 5.

12. Security element (2) according to one of the preceding claims,
    **characterised in that**
    the security element has a plurality of light-emitting elements (71 to 75), wherein block structures (70) are arranged in the boundary region between light-emitting elements, and/or
all light-emitting elements radiate light of the same colour upon activation, or two or more of the light-emitting elements radiate light of different colours, in particular one or more light-emitting elements radiate red light upon activation, one or more of the of the light-emitting elements radiate green light upon activation and/or one or more of the light-emitting elements radiate green light upon activation.

13. Security element (2) according to one of the preceding claims,
    **characterised in that**
    a plurality of first sub-regions (391) are provided in the first region (30) which are covered by one of the one or more transmissive diffraction structures, and a plurality of second sub-regions (392) are provided which are covered by one of the one or more reflective diffraction structures, the first and second sub-regions (391, 392) each have at least one lateral measurement of less than 300 $\mu$m, in particular less than 150 $\mu$m, preferably less than 80 $\mu$m, and, at least regionally, first and second sub-regions (391, 392) are arranged adjacent to one another, such that, in the first region (30) in incident light, a first piece of optically variable information determined by the first sub-regions (391) appears upon activation of one or more of the light-emitting elements, and, in the first region (30) in incident light, a second piece of optically variable information defined by the second sub-region (392) appears, overlapping at least regionally for this purpose.

## Revendications

1. Elément de sécurité (2), en particulier sous la forme d'un corps de film flexible à plusieurs couches, avec un côté supérieur (201) tourné vers un observateur et un côté arrière (202) éloigné de l'observateur, dans lequel l'élément de sécurité (2) présente un ou plusieurs éléments (71 à 75) émettant de la lumière disposés dans une première zone (30) de l'élément de sécurité qui émettent de la lumière (60) lors de l'activation et sont formés en particulier respectivement par un élément d'affichage autoluminescent, à fonctionnement électrique, dans lequel l'élément de sécurité (2) présente dans la première zone (30) une ou plusieurs structures de diffraction (51 à 59, 91 à 96) transmissives, dans lequel l'une ou les plusieurs structures de diffraction (51 à 59, 91 à 96) transmissives sont disposées de telle manière qu'au moins une partie de la lumière (60) émise par les éléments (71 à 75) activés émettant une ou plusieurs lumières transmette par au moins une zone partielle des structures de diffraction (51 à 59, 91 à 96) transmissives,
   **caractérisé en ce**
   **que** la première zone présente une ou plusieurs premières zones (33, 361, 371) qui sont occupées respectivement par une première des structures de diffraction (91, 93, 96) transmissives, et présente une ou plusieurs secondes zones (34, 362, 382) qui sont occupées par une seconde des structures de diffraction (92, 94, 97) transmissives, dans lequel la première structure de diffraction (91, 93, 96) transmissive se distingue de la seconde structure de diffraction (92, 94, 97) transmissive.

2. Elément de sécurité (2) selon la revendication 1, **caractérisé en ce** **qu'**une ou plusieurs d'une ou plusieurs structures de diffraction (51 à 59, 91 à 96) transmissives sont formées respectivement par une structure en relief formée dans une surface d'un substrat transparent (21), dans lequel la structure en relief est formée en particulier dans la surface du côté supérieur (201) de l'élément de sécurité (2), en particulier dans lequel la profondeur de relief de la structure en relief est comprise entre 900 nm et 1500 nm, de préférence entre 900 nm et 1200 nm.

3. Elément de sécurité (2) selon l'une quelconque des revendications précédentes, **caractérisé en ce** **qu'**une ou plusieurs d'une ou plusieurs structures de diffraction (52, 53, 55) transmissives sont formées respectivement par une structure en relief formée entre deux couches (22, 23, 25, 26, 27) transparentes de l'élément de sécurité, dans lequel l'indice de réfraction de ces couches se distingue en particulier d'au moins 0,1, en particulier **qu'**une des deux couches transparentes est une couche polymère, en particulier une couche de laque de réplication, et l'autre des deux couches transparentes est une couche poreuse, dans lequel les pores de la couche poreuse sont remplis en particulier d'air et l'épaisseur de couche de la couche poreuse est comprise en particulier entre 2 et 50 $\mu$m, de préférence entre 2 et 20 $\mu$m.

4. Elément de sécurité (2) selon l'une quelconque des revendications 2 ou 3, **caractérisé en ce** **que** la structure en relief est une grille définie par les paramètres forme de relief, profondeur de relief, période de grille et angle azimutal et la période de grille est comprise entre 500 nm et 1500 nm, en particulier entre 600 nm et 1400 nm, et/ou que les éléments de structure de la structure en relief possèdent une forme de relief asymétrique, et/ou que la lumière transmise par la structure en relief dans l'ordre zéro n'est pas modifiée dans la plage de longueur d'onde de 460 nm à 660 nm largement dans son spectre de couleur et le degré de transmission de la lumière transmise dans l'ordre zéro et sensiblement perpendiculairement par le substrat transparent est supérieur à 30 %, en particulier supérieur à 50 %.

5. Elément de sécurité (2) selon l'une quelconque des revendications précédentes, **caractérisé en ce** **qu'**une ou plusieurs d'une ou plusieurs structures de diffraction (53) transmissives sont formées respectivement par une structure en relief qui est un réseau de diffraction défini par les paramètres forme de relief, profondeur de relief, période de grille et angle azimutal d'ordre zéro, que la profondeur de relief de la structure en relief est comprise en particulier entre 300 nm et 550 nm, de préférence entre 350 nm et 500 nm, et que la période de grille est comprise en particulier entre 250 nm et 700 nm, de préférence entre 350 nm et 600 nm, en particulier **que** la structure en relief est formée entre une couche transparente (22, 26) et une couche HRI (25), et l'épaisseur de la couche HRI (25) est comprise entre 50 nm et 250 nm, de préférence entre 130 nm et 250 nm, en particulier entre 150 nm et 220 nm.

6. Elément de sécurité (2) selon l'une quelconque des revendications précédentes, **caractérisé en ce** **qu'**une ou plusieurs d'une ou plusieurs des structures de diffraction (56 à 58) transmissives sont respectivement des structures diffractives de formation de faisceau et sont formées en particulier par un hologramme de volume, une structure de blaze, une lentille diffractive ou un champ de lentilles diffractives, une structure de lentille de Fresnel ou un champ de structures de lentille de Fresnel, ou par des structures diffractives qui possèdent des propriétés de formation de faisceau similaires aux lentilles.

7. Elément de sécurité (2) selon la revendication 6, **caractérisé en ce** **que** chaque élément émettant de la lumière (71 à 73) est associé à une des structures de diffraction (56) transmissives qui modifie la caractéristique de rayonnement de l'élément (71 à 73) respectif émettant la lumière, en particulier que la première zone (30) présente une ou plusieurs zones qui sont disposées de préférence selon une trame à une ou deux dimensions, dans lequel dans chacune des zones un des éléments (71 à 73) émettant de la lumière est disposé, ainsi que dans chacune des zones au moins une des structures de diffraction transmissives (56, 57, 58) est disposée, en particulier **qu'**une ou plusieurs des structures de diffraction (56, 57) transmissives disposées dans l'une ou les plusieurs zones comportent une structure en relief (561, 563, 564, 565, 566, 567) avec une pluralité de lignes de grille disposées sensiblement parallèlement les unes aux autres, dans lequel ces lignes de grille sont prévues dans une zone partielle centrale de la zone respective, de préférence dans une zone de rayonnement de l'élément émettant de la lumière associée à la zone, et ne sont pas prévues dans une zone de bord de la zone, en particulier dans une zone de bord de la zone dans laquelle l'élément émettant la lumière associée n'émet pas de lumière, ou inversement.

**8.** Elément de sécurité (2) selon l'une quelconque des revendications précédentes,
**caractérisé en ce**
**que** la première et seconde structure de diffraction transmissive se distinguent dans leur forme de relief, en angle azimutal et/ou leur période de grille l'une de l'autre, et/ou que la première et la seconde structure de diffraction transmissive sont formées par différents types de structures de diffraction transmissives, en particulier sélectionnées parmi un premier type de structures de diffraction transmissives selon la revendication 4, un deuxième type de structures de diffraction transmissives selon la revendication 5 et un quatrième type de structures de diffraction transmissives selon l'une quelconque des revendications 6 ou 7, et/ou que des premières et secondes zones (33, 34, 361, 362, 372, 382) contiguës sont espacées de moins de 1 μm, de préférence moins de 100 nm l'une de l'autre.

**9.** Elément de sécurité (2) selon l'une quelconque des revendications précédentes,
**caractérisé en ce**
**que** dans la première zone une pluralité de premières zones (361, 372) et secondes zones (362, 382) est prévue, et que les première et seconde zones (361, 362, 372, 382) présentent respectivement au moins une dimension latérale de moins de 300 μm, en particulier de moins de 150 μm, de préférence moins de 80 μm, en particulier que dans la première zone une pluralité de troisièmes zones (363), qui sont occupées par une troisième des structures de diffraction (95) transmissives et/ou quatrièmes zones qui sont occupées par une quatrième des structures de diffraction transmissives, sont prévues, dans lequel la première, deuxième, troisième et quatrième structures de diffraction transmissives se distinguent respectivement mutuellement les unes des autres et les troisième ou quatrième zones (363) présentent respectivement au moins une dimension latérale de moins de 300 μm, en particulier moins de 150 μm, de préférence moins de 80 μm.

**10.** Elément de sécurité (2) selon l'une quelconque des revendications précédentes,
**caractérisé en ce**
**que** la première zone présente une zone de motif (35) qui est divisée en une pluralité de zones de point d'image (36), et dans lequel dans au moins une première des zones de point d'image (36) au moins deux différentes zones sont sélectionnées parmi le groupe première et seconde zones (361, 362), le groupe première, deuxième et troisième zones (361, 362, 363) ou le groupe première, deuxième, troisième et quatrième zones, et en ce que la couleur se montrant dans la première zone de point d'image (36) lors de l'activation d'un ou plusieurs des éléments émettant de la lumière est générée par un mélange de couleur additif des couleurs générées par les structures de diffraction transmissives disposées dans cette zone de point d'image (36) dans les zones différentes sous cet angle de basculement.

**11.** Elément de sécurité (2) selon l'une quelconque des revendications précédentes,
**caractérisé en ce**
**qu'**une ou plusieurs cinquièmes des structures de diffraction transmissives (56) et une ou plusieurs sixièmes des structures de diffraction (59) transmissives sont disposées l'une au dessus de l'autre, par rapport à une direction se trouvant perpendiculaire sur le plan défini par le côté arrière de l'élément de sécurité, en particulier
**que** les cinquièmes structures de diffraction (56) sont des structures de diffraction de formation de faisceau, en particulier selon l'une quelconque des revendications 6 ou 7 et les sixièmes structures de diffraction (39) sont des structures de diffraction générant un effet, en particulier selon l'une quelconque des revendications 4 ou 5.

**12.** Elément de sécurité (2) selon l'une quelconque des revendications précédentes,
**caractérisé en ce**
**que** l'élément de sécurité présente une pluralité d'éléments émettant de la lumière (71 à 75), dans lequel dans la zone limite entre des éléments émettant de la lumière des structures de bloc (70) sont disposées, et/ou
**que** tous les éléments émettant la lumière lors de l'activation émettent de la lumière de la même couleur ou que deux ou plusieurs des éléments émettant la lumière émettent de la lumière de différente couleur, en particulier un ou plusieurs éléments émettant de la lumière lors de l'activation émettent de la lumière rouge, un ou plusieurs des éléments émettant de la lumière lors de l'activation émettent de la lumière verte et/ou un ou plusieurs des éléments émettant de la lumière lors de l'activation émettent de la lumière verte.

**13.** Elément de sécurité (2) selon l'une quelconque des revendications précédentes,
**caractérisé en ce**
**que** dans la première zone (30) une pluralité de premières zones partielles (391) sont prévues, lesquelles sont occupées par une des une ou plusieurs structures de diffraction transmissives, et une pluralité de secondes zones partielles (392) sont prévues, lesquelles sont occupées par une des une ou plusieurs structures de diffraction réflectives, que les première et seconde zones partielles (391, 392) présentent respectivement au moins une dimension latérale de moins de 300 μm, en particulier moins de 150 μm, de préférence de moins de 80 μm, et qu'au moins par endroits des première et seconde zones partielles (391, 392) sont disposées de manière contiguë l'une à l'autre de sorte que dans la première zone (30) en lumière directe lors de l'activation d'une ou plusieurs des éléments émettant de la lumière une première information variable optiquement déterminée par les premières zones partielles (391) apparaisse et dans la première zone (30) en lumière directe par rapport à celle-ci se chevauchant au moins par endroits une seconde information variable optiquement déterminée par les secondes zones partielles (392) apparaisse.

Fig. 1a

Fig. 1b

Fig. 1c

Fig. 2

**Fig. 3a**

**Fig. 3b**

*Fig. 3c*

Fig. 4

Fig. 5

EP 2 897 811 B1

$T_0$

Fig. 6a

Fig. 6b

EP 2 897 811 B1

*Fig. 7a*

*Fig. 7b*

**Fig. 7c**

**Fig. 7d**

Fig. 7e

Fig. 8a

Fig. 8b

Fig. 8c

Fig. 9a

Fig. 96

*Fig. 9c*

EP 2 897 811 B1

Fig. 10a

Fig. 10b

Fig. 17a

Fig. 17b

Fig. 12a 562

Fig. 12b

Fig. 12c

Fig. 12d

Fig. 13

Fig. 14

Fig. 15

Fig. 16

Fig. 16c

Fig. 16b

Fig. 16a

Fig. 16d

Fig. 17a

EP 2 897 811 B1

Fig. 17b

Fig. 18a

Fig. 18b

Fig. 18c

Fig. 19

Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006056089 A2
- WO 2006061171 A2
- WO 2006029857 A2
- DE 102009048870 B3